(19) Europäisches Patentamt / European Patent Office / Office européen des brevets

(11) EP 4 575 627 A1

(12) EUROPEAN PATENT APPLICATION
published in accordance with Art. 153(4) EPC

(43) Date of publication:
**25.06.2025 Bulletin 2025/26**

(21) Application number: **23855076.8**

(22) Date of filing: **31.07.2023**

(51) International Patent Classification (IPC):
***G02F 1/153*** (2006.01) ***G02F 1/155*** (2006.01)
***B32B 7/023*** (2019.01) ***E06B 9/24*** (2006.01)
***B60J 3/00*** (2006.01) ***B60J 3/04*** (2006.01)
***G02F 1/15*** (2019.01)

(52) Cooperative Patent Classification (CPC):
**B32B 7/023; B60J 3/00; B60J 3/04; E06B 9/24; G02F 1/15; G02F 1/153; G02F 1/155**

(86) International application number:
**PCT/KR2023/011180**

(87) International publication number:
**WO 2024/039107 (22.02.2024 Gazette 2024/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **19.08.2022 KR 20220103740**
**22.09.2022 KR 20220119719**
**28.09.2022 KR 20220123677**

(71) Applicant: **SKC Co., Ltd.**
**Suwon-si, Gyeonggi-do 16338 (KR)**

(72) Inventors:
- **KIM, Su Woo**
  **Suwon-si Gyeonggi-do 16338 (KR)**
- **JANG, Hae Seong**
  **Suwon-si Gyeonggi-do 16338 (KR)**
- **LEE, Seong Hwan**
  **Suwon-si Gyeonggi-do 16338 (KR)**
- **LA, Yong Sang**
  **Suwon-si Gyeonggi-do 16338 (KR)**
- **OH, Seung Bae**
  **Suwon-si Gyeonggi-do 16338 (KR)**
- **AHN, Byeong Uk**
  **Suwon-si Gyeonggi-do 16338 (KR)**

(74) Representative: **Isarpatent**
**Patent- und Rechtsanwälte**
**Barth Hassa Peckmann & Partner mbB**
**Friedrichstraße 31**
**80801 München (DE)**

# (54) ELECTROCHROMIC ELEMENT, AND WINDOW DEVICE INCLUDING SAME

(57) An embodiment of the present invention provides: an electrochromic element comprising a first substrate, a second substrate disposed on the first substrate, and an electrochromic part disposed between the first substrate and the second substrate, wherein the rate of change in light transmission is less than 0.25; and a window device including same.

Fig. 1

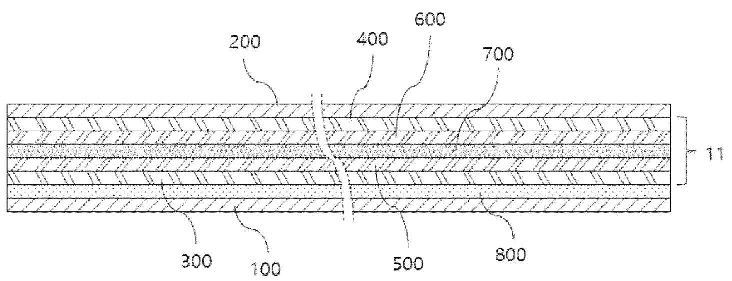


EP 4 575 627 A1

## Description

### Technical Field

Embodiments of the present disclosure relate to an electrochromic element and a window device including the same.

### Background Art

Electrochromic films, whose colors change due to coloring and discoloring through oxidation-reduction reactions at each oxidation electrode and reduction electrode depending on an applied potential, can be artificially controlled by a user to emit visible light and infrared rays, and various types of inorganic oxides are used as electrode materials.

Electrochromic films as described above have been developed in various ways. Conventional art discloses a film that changes from transparent to blue by depositing $MoO_3$, a reduced chromogenic oxide, on one of two ITO films (1A, 1B) formed by depositing a conductive Indium-tin oxide thin film on a glass film, and depositing $WO_3$, also a reduced chromogenic material, is deposited on the other ITO film, and then depositing a solid electrolyte of lithium, an alkali metal, on the deposited ITO film, and then injecting polyaniline, a conductive polymer, between the two films, and then allowing passing through a high-frequency compression roller to apply voltage. Conventional art also discloses a film, whose color changes by electric energy, characterized by depositing indium-tin oxide on a 0.005 mm thick glass film, and then depositing opposite surfaces of the transition metal oxide film with $WO_3$, a reduced chromogenic material, and $IrO_2$, an oxidized chromogenic material, with a polymer solid electrolyte, $\alpha$-PEO copolymer, therebetween, and then bonding the opposite surfaces with a high-frequency roller.

### SUMMARY

An embodiment of the present disclosure provides an electrochromic element having improved durability, and a window device including the electrochromic element.

Another embodiment of the present disclosure provides an electrochromic element having high thickness uniformity, improved mechanical strength, improved peel strength, excellent appearance, less electrolyte leakage, and deformation resistance to mechanical shock, and a window device including the electrochromic element.

Yet another embodiment of the present disclosure provides an electrochromic element having high thickness uniformity, improved mechanical strength, improved peel strength, improved durability, excellent appearance, less electrolyte leakage, and high optical durability, and a method of manufacturing the electrochromic element.

The above and other embodiments can be accomplished by the provision of an electrochromic element, including a first substrate; a second substrate disposed on the first substrate; and an electrochromic part disposed between the first substrate and the second substrate, wherein a change in light transmittance measured by Measurement Method 1 below is less than 0.25:

<u>Measurement Method 1</u>

the electrochromic part is irradiated with ultraviolet light from a UVA 340 UV lamp at an intensity of 7.5 $W/m^2$ for 1 hour through the first substrate, a first light transmittance of the electrochromic element before the irradiation with ultraviolet light is measured, a second light transmittance of the electrochromic element after the irradiation with ultraviolet light is measured, and a change in light transmittance is obtained by dividing a difference between the first light transmittance and the second light transmittance by the first light transmittance.

In the electrochromic element according to an embodiment, a haze change measured by Measurement Method 2 below may be less than 5.5%:

<u>Measurement Method 2</u>

a first haze of the electrochromic element according to an embodiment before the ultraviolet irradiation is measured, a second haze of the electrochromic element according to an embodiment after the ultraviolet irradiation is measured, and the haze change is a value obtained by subtracting the first haze from the second haze.

In the electrochromic element according to an embodiment, a change in L* measured by Measurement Method 3 below may be less than 9:

Measurement Method 3

a first L* of the electrochromic element is measured before the ultraviolet irradiation, a second L* of the electrochromic element is measured after the ultraviolet irradiation, and the change in L* is an absolute value of a difference between the second L* and the first L*.

In the electrochromic element according to an embodiment, a change in a* measured by Measurement Method 4 below may be less than 5:

Measurement Method 4

a first a* of the electrochromic element is measured before the ultraviolet irradiation, a second a* of the electrochromic element is measured after the ultraviolet irradiation, and the change in a* is a* is an absolute value of a difference between the second a* and the first a*.

In the electrochromic element according to an embodiment, a change in b* measured by Measurement Method 5 below is less than 10:

Measurement Method 5

a first b* of the electrochromic element is measured before the ultraviolet irradiation, a second b* of the electrochromic element is measured after the ultraviolet irradiation, and the change in b* is an absolute value of a difference between the second b* and the first b*.

In an embodiment, a UV-blocking layer provided on the first substrate may be included, wherein the UV-blocking layer has a transmittance of 10% or less for ultraviolet light of 340 nm.

In an embodiment, the UV-blocking layer may include at least one UV absorbent selected from the group consisting of benzophenone-based UV absorbents, benzoxazinone-based UV absorbents, benzotriazole-based UV absorbents and triazine-based UV absorbents.

In an embodiment, the first light transmittance may be 50% to 85%, and the first haze may be 0.1% to 5%.

In the electrochromic element according to an embodiment, the first L* may be 80 to 100, the first a* may be -2 to 1.5, and the first b* may be 0.5 to 4.

In an embodiment, the UV-blocking layer may be disposed between the first substrate and the electrochromic part.

In accordance with another embodiment of the present disclosure, there is provided a window device, including a frame; a window mounted on the frame; and an electrochromic element disposed in the window, wherein the electrochromic element includes a first substrate; a second substrate disposed on the first substrate; and an electrochromic part disposed between the first substrate and the second substrate, wherein a change in light transmittance measured by Measurement Method 1 below is less than 0.25:

Measurement Method 1

the electrochromic part is irradiated with ultraviolet light from a UVA 340 UV lamp at an intensity of 7.5 W/$m^2$ for 1 hour through the first substrate, a first light transmittance of the electrochromic element before the irradiation with ultraviolet light is measured, a second light transmittance of the electrochromic element after the irradiation with ultraviolet light is measured, and a change in light transmittance is obtained by dividing a difference between the first light transmittance and the second light transmittance by the first light transmittance.

The electrochromic element according to an embodiment may include a first substrate; a first transparent electrode disposed on the first substrate; a first discoloration layer disposed on the first transparent electrode; an electrolyte layer disposed on the first discoloration layer; a second discoloration layer disposed on the electrolyte layer; a second transparent electrode disposed on the second discoloration layer; and a second substrate disposed on the second transparent electrode, wherein a coloring transmittance deviation after a winding test measured by Measurement Method 6 below is less than 0.4:

Measurement Method 6

1) The electrochromic element is cut to a size of 4 m in length and 0.5 m in width.
2) One end of the electrochromic element is fixed to the first core having a diameter of 15 cm.
3) The fixed electrochromic element is wound on the first core at a speed of 6 turns per minute while maintaining a

tension of 10 N.

4) In the state of being wound on the first core, the electrochromic element is left for 24 hours under conditions of a temperature of 85°C and a relative humidity of about 50%.

5) The other end of the electrochromic element that had been left is fixed to a second core having a diameter of 15 cm.

6) The electrochromic element wound around the first core is wound around the second core at a speed of 6 rotations per minute in the opposite direction to the direction in which it is wound around the first core while being unwound in a state where a tension of 10 N is maintained.

7) In the state of being wound on the second core, the electrochromic element is left for 24 hours under the conditions of a temperature of 85°C and a relative humidity of about 50%, and the winding test is completed.

8) In the electrochromic element that had undergone the winding test, a central region with a length of 3 m and a width of 0.4 m is defined.

9) The central region is cut into measurement regions of 10 cm × 10 cm, so that multiple samples are obtained.

10) A driving voltage is applied to a first transparent electrode and second transparent electrode included in the samples, and the samples are colored.

11) The first transmittance of the colored samples is measured.

12) The coloring transmittance deviation is obtained by dividing a difference between a maximum first transmittance and a minimum first transmittance among the first transmittances of the samples by an average first transmittance of the samples.

In the electrochromic element according to an embodiment, a discoloring transmittance deviation after the winding test measured by Measurement Method 7 below may be less than 0.2:

Measurement Method 7

A driving voltage is applied to the colored samples in a reverse direction so that the colored samples are discolored, a second transmittance of each of the discolored samples is measured, and the discoloring transmittance deviation is obtained by dividing a difference between a maximum second transmittance and minimum second transmittance among the second transmittances of the samples by an average second transmittance of the samples.

In an embodiment, a haze deviation after the winding test measured by Measurement Method 8 below may be less than 0.2:

Measurement Method 8

In the electrochromic element that has undergone the winding test, a haze of each of the samples is measured, the haze deviation is obtained by dividing a difference between a maximum haze and minimum haze among the haze of the samples by an average haze of the samples.

In an embodiment, the electrolyte layer may include a curable resin composition, a solvent and a metal salt, and the thickness of the electrolyte layer may be greater than 50 $\mu$m.

In the electrochromic element according to an embodiment, a driving range deviation after the winding test measured by Measurement Method 9 below may be less than 0.2:

Measurement Method 9

In the electrochromic element that has undergone the winding test, a driving range of the samples means a difference between the first transmittance of the samples and the second transmittance thereof, and the driving range deviation is value obtained by dividing a difference between the maximum driving range of the samples and the minimum driving range thereof by an average driving range thereof.

In an embodiment, the curable resin composition may include a photo-curable polymer having a thermosetting functional group.

In an embodiment, the first substrate may have a modulus of 200 kgf/mm$^2$ to 400 kgf/mm$^2$ in a first direction, and the second substrate may have a modulus of 200 kgf/mm$^2$ to 400 kgf/mm$^2$ in the first direction.

In an embodiment, the first substrate may have a fracture elongation of 30% to 150% in the first direction, and the second substrate may have a fracture elongation of 30% to 150% in the first direction.

In an embodiment, the first average transmittance may be 5% to 40%.

In an embodiment, the second average transmittance may be 40% to 80%.

In accordance with still another embodiment of the present disclosure, provided is a window device including a frame; a window mounted on the frame; and an electrochromic element disposed in the window, wherein the electrochromic element includes a first substrate; a first transparent electrode disposed on the first substrate; a first discoloration

layer disposed on the first transparent electrode; an electrolyte layer disposed on the first discoloration layer; a second discoloration layer disposed on the electrolyte layer; a second transparent electrode disposed on the second discoloration layer; and a second substrate disposed on the second transparent electrode, wherein a coloring transmittance deviation after a winding test measured by Measurement Method 10 below is less than 0.4:

Measurement Method 10

1) The electrochromic element is cut to a size of 4 m in length and 0.5 m in width.
2) One end of the electrochromic element is fixed to a first core having a diameter of 20 cm.
3) The fixed electrochromic element is wound on the first core at a speed of 6 turns per minute while maintaining a tension of 10 N.
4) In the state of being wound on the first core, the electrochromic element is left for 24 hours under conditions of a temperature of 85°C and a relative humidity of about 50%.
5) Another end of the left electrochromic element is fixed to a second core having a diameter of 20 cm.
6) The electrochromic element wound around the first core is wound around the second core at a speed of 6 rotations per minute in the opposite direction to the direction in which it is wound around the first core while being unwound in a state where a tension of 10 N is maintained.
7) In the state of being wound on the second core, the electrochromic element is left for 24 hours under the conditions of a temperature of 85°C and a relative humidity of about 50%, and the winding test is completed.
8) In the electrochromic element that had undergone the winding test, a central region with a length of 3 m and a width of 0.4 m is defined.
9) The central region is cut into measurement regions of 10 cm × 10 cm, so that multiple samples are obtained.
10) A driving voltage is applied to a first transparent electrode and second transparent electrode included in the samples, and the samples are colored.
11) The first transmittance of the colored samples is measured.
12) The coloring transmittance deviation is obtained by dividing a difference between a maximum first transmittance and a minimum first transmittance among first transmittances of the samples by an average first transmittance of the samples.

In accordance with still another embodiment of the present disclosure, provided is an electrochromic element including a first polymer substrate; a first transparent electrode disposed on the first polymer substrate; a first discoloration layer disposed on the first transparent electrode; an electrolyte layer disposed on the first discoloration layer and configured to include a curable resin composition, a solvent having low permeability and a metal salt; a second discoloration layer disposed on the electrolyte layer; a second transparent electrode disposed on the second discoloration layer; and a second polymer substrate disposed on the second transparent electrode, wherein a haze increase measured by Measurement Method 11 below is less than 8%:

Measurement Method 11

1) The electrochromic element is wound on a first core having a cylindrical shape with a diameter of 20 cm.
2) In the state where the electrochromic element is wound on the first core, it is left for 500 hours at a temperature of 85°C and a humidity of 30%
3) The electrochromic element is unwound from the first core and wound in the opposite direction on a second core having a cylindrical shape and a diameter of 20 cm.
4) In the state where the electrochromic element is wound on the second core, it is left at a temperature of 85°C and a humidity of 60% for 500 hours so that a 1000-hour standing test is completed.
5) An initial first haze of the electrochromic element is measured, and a second haze after the 1000-hour standing test of the electrochromic element is measured.
6) The haze increase is a difference between the second haze and the first haze.

In an embodiment, the solvent having low permeability may be at least one selected from the group consisting of acetamide, adiponitrile, polyethylene glycol and sulfolane.
In an embodiment, the curable resin may include urethane acrylate and epoxy acrylate.
In an embodiment, the haze increase may be less than 7%.

In an embodiment, the haze increase may be less than 6%.

In an embodiment, a spherical power increase measured by Measurement Method 12 below may be less than 0.1 D:

Measurement Method 12

An initial first spherical power of the electrochromic element is measured, a second spherical power after the 1000-hour standing test of the electrochromic element is measured, and the spherical power increase is a difference between the second spherical power and the first spherical power.

In an embodiment, an astigmatic powder increase measured by Measurement Method 13 below may be less than 0.5 D:

Measurement Method 13

An initial first astigmatic powder of the electrochromic element is measured, a second astigmatic powder after the 1000-hour standing test of the electrochromic element is measured, and the astigmatic powder increase is a difference between the second astigmatic powder and the first astigmatic powder.

In an embodiment, the solvent may be in direct contact with the first polymer substrate and the second polymer substrate.

In an embodiment, the molecular weight of the solvent may be 200 to 400.

In an embodiment, the boiling point of the solvent may be higher than 200°C.

In an embodiment, the polarity of the solvent may be 0.3 to 0.5.

In accordance with yet another embodiment of the present disclosure, provided is a window device including a frame; a window mounted on the frame; and an electrochromic element disposed in the window, wherein the electrochromic element includes a first polymer substrate; a first transparent electrode disposed on the first polymer substrate; a first discoloration layer disposed on the first transparent electrode; an electrolyte layer disposed on the first discoloration layer and configured to include a curable resin composition, a solvent having low permeability and a metal salt; a second discoloration layer disposed on the electrolyte layer; a second transparent electrode disposed on the second discoloration layer; and a second polymer substrate disposed on the second transparent electrode, wherein a haze increase measured by Measurement Method 14 below is less than 8%:

Measurement Method 14

1) The electrochromic element is wound on a first core having a cylindrical shape with a diameter of 20 cm.
2) In the state where the electrochromic element is wound on the first core, it is left for 500 hours at a temperature of 85°C and a humidity of 30%
3) The electrochromic element is unwound from the first core and wound in the opposite direction on a second core having a cylindrical shape and a diameter of 20 cm.
4) In the state where the electrochromic element is wound on the second core, it is left at a temperature of 85°C and a humidity of 60% for 500 hours so that a 1000-hour standing test is completed.
5) An initial first haze of the electrochromic element is measured, and a second haze after the 1000-hour standing test of the electrochromic element is measured.
6) The haze increase is a difference between the second haze and the first haze.

**Advantageous effects**

Since an electrochromic element according to an embodiment effectively blocks external ultraviolet light, an electrochromic part inside can be effectively protected from external ultraviolet light.

Accordingly, the electrochromic element according to an embodiment can prevent electrons from being generated from the first discoloration layer when external ultraviolet light is incident. Therefore, the electrochromic element according to an embodiment can prevent some discoloration due to external ultraviolet light.

Accordingly, the electrochromic element according to an embodiment can have uniform optical characteristics regardless of external environments such as ultraviolet light contained in sunlight.

Accordingly, the electrochromic element according to an embodiment is driven to have constant optical characteristics. In addition, since the electrochromic element according to an embodiment has constant driving characteristics, it can be driven with a constant driving voltage.

Accordingly, since the electrochromic element according to an embodiment can be driven with a constant driving voltage, it can have improved durability.

The electrochromic element according to an embodiment has an appropriate coloring transmittance deviation after a winding test. That is, the electrochromic element according to an embodiment is flexible while preventing performance degradation due to a certain degree of mechanical deformation such as winding.

Even if mechanical deformation such as a wound is applied to the electrochromic element according to an embodiment by an external force, the electrochromic element according to an embodiment can have uniform optical properties overall.

Accordingly, the electrochromic element according to an embodiment can have a uniform coloring transmittance, discoloring transmittance and haze overall when restored after an external mechanical deformation is applied thereto.

In particular, the electrolyte layer in the electrochromic element according to an embodiment can have a thickness of about 30 $\mu$m or more. Accordingly, the electrolyte layer of the electrochromic element according to an embodiment can have a buffering function even under external mechanical shock. At the same time, the electrochromic element according to an embodiment can have appropriate flexibility.

Accordingly, the electrochromic element according to an embodiment can minimize changes in appearance due to pressing and/or bending, etc., and can maintain discoloration performance. In addition, since the electrochromic element according to the embodiment has a fast restoration performance, it can have an improved appearance.

In addition, the electrolyte layer can be formed by a thermal crosslinking process and a photocuring process of the curable resin. Accordingly, the electrolyte layer can have a high crosslinking density.

Accordingly, the electrolyte layer can be strongly bonded to the first discoloration layer and the second discoloration layer. Accordingly, the electrochromic element according to the embodiment can have improved peel strength.

In addition, since the electrolyte layer has an improved crosslinking density, the electrochromic element according to an embodiment can prevent leakage of the electrolyte included in the electrolyte layer. In addition, since the electrolyte layer has appropriate bonding strength and elasticity even if the electrochromic element according to an embodiment is wound or twisted, a coloring transmittance deviation that can occur due to exfoliation, etc. can be reduced.

Accordingly, the electrochromic element according to an embodiment can have uniform performance even when manufactured in a mass production process such as a roll-to-roll process. Accordingly, the electrochromic element according to an embodiment can be easily manufactured while having improved performance.

The electrochromic element according to an embodiment includes a solvent having low permeability, and has a haze increase of less than 8% after a 1000-hour standing test.

Since the electrochromic element according to an embodiment includes a solvent having low permeability, the optical properties of a first polymer substrate and a second polymer substrate do not change even if left for a long time in a wounded state.

In particular, since the electrochromic element according to an embodiment includes the first polymer substrate and the second polymer substrate, it can be flexible. Here, when the electrochromic element according to an embodiment is bent, the solvent having low permeability can be in direct contact with the first polymer substrate and/or the second polymer substrate. Even if the solvent having low permeability is in direct contact with the first polymer substrate and/or the second polymer substrate, the optical properties of the first polymer substrate and/or the second polymer substrate do not change.

Accordingly, the electrochromic element according to an embodiment can have improved optical durability even when left for a long time in a state where mechanical deformation is applied.

In addition, since the electrolyte layer includes the curable resin composition, the solvent having low permeability and the metal salt, it can have the appropriate elasticity described above. Accordingly, the electrolyte layer can be appropriately deformed when external physical impact is applied. In addition, since the electrolyte layer has appropriate elasticity, it can be quickly restored from external physical impact such as twist, winding and pressing.

Accordingly, the electrochromic element according to an embodiment can minimize changes in appearance due to pressing and/or bending, etc. In addition, since the electrochromic element according to the embodiment has a fast restoration performance, it can have an improved appearance.

In addition, since the electrolyte supports the first polymer substrate and the second polymer substrate with appropriate elasticity, the electrochromic element according to an embodiment can have improved thickness uniformity.

In addition, the electrolyte layer can be formed by a thermal crosslinking process and a photocuring process of the curable resin. Accordingly, the electrolyte layer can have a high crosslinking density.

Accordingly, the electrolyte layer can be strongly bonded to the first discoloration layer and the second discoloration layer. Accordingly, the electrochromic element according to the embodiment can have improved peel strength.

In addition, since the electrolyte layer has improved crosslinking density, the penetration of moisture and/or oxygen into the electrolyte layer can be reduced. Accordingly, the electrochromic element according to an embodiment

can suppress the whitening phenomenon, etc., and have improved durability.

In addition, since the electrolyte layer has an improved crosslinking density, the electrochromic element according to an embodiment can prevent leakage of the electrolyte included in the electrolyte layer.

## Brief Description of the Drawings

FIG. 1 is a sectional view illustrating the cross-section of an electrochromic element according to an embodiment of the present disclosure.
FIG. 2 illustrates the sectional view of an electrochromic element according to another embodiment of the present disclosure.
FIGS. 3 to 6 are drawings illustrating processes of fabricating the electrochromic element according to an embodiment of the present disclosure.
FIG. 7 illustrates an example of the spectrum of light emitted by a UVA 340 lamp.
FIG. 8 is a sectional view illustrating the cross-section of an electrochromic element according to an embodiment of the present disclosure.
FIGS. 9 to 12 illustrate processes of fabricating an electrochromic element according to still another embodiment of the present disclosure.
FIGS. 13 and 14 illustrate a process of conducting a winding test on the electrochromic element according to still another embodiment of the present disclosure.
FIG. 15 illustrates a process of measuring a transmittance deviation after conducting a winding test on the electrochromic element according to an embodiment of the present disclosure.
FIG. 16 is a sectional view illustrating one cross-section of an electrochromic element according to still another embodiment of the present disclosure.
FIGS. 17 to 20 illustrate processes of fabricating the electrochromic element according to still another embodiment of the present disclosure.
FIGS. 21 and 22 illustrate a process of conducting a 1000-hour standing test.
FIG. 23 illustrates a window device according to an embodiment of the present disclosure.

## DETAILED DESCRIPTION

In the description of the embodiments, it will be understood that when each part, surface, layer or substrate is referred to as being "on" or "under" another part, surface, layer or substrate, the part, surface, layer or substrate can be directly on another part, surface, layer or substrate or intervening part, surface, layer or substrate, and criteria for "on" and "under" will be provided based on the drawings. Elements in the following drawings may be exaggerated, omitted, or schematically illustrated for conveniences and clarity of description, and the sizes of elements do not reflect their actual sizes completely.

FIG. 1 is a sectional view illustrating the cross-section of an electrochromic element according to an embodiment of the present disclosure.

Referring to FIG. 1, the electrochromic element according to an embodiment includes a first substrate 100, a second substrate 200, a UV-blocking layer 800 and an electrochromic part 11.

The electrochromic part 11 includes a first transparent electrode 300, a second transparent electrode 400, a first discoloration layer 500, a second discoloration layer 600 and an electrolyte layer 700.

Together with the second substrate 200, the first substrate 100 supports the UV-blocking layer 800 and the electrochromic part 11.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200. Together with the second substrate 200, the first substrate 100 may protect the first transparent electrode 300, the first discoloration layer 500, the second discoloration layer 600, the second transparent electrode 400 and the electrolyte layer 700 from external physical impact and chemical impact.

The first substrate 100 may include a polymer resin. The first substrate 100 may include at least one selected from the group consisting of a polyester-based resin, a polyimide-based resin, a cyclic olefin polymer resin, a polyethersulfone, a polycarbonate and a polyolefin-based resin. The first substrate 100 may be a polymer substrate.

The first substrate 100 may include a polyester resin as a main component. The first substrate 100 may include

the polyethylene terephthalate in a content of about 90 wt% or more based on the total composition amount. The first substrate 100 may include the polyethylene terephthalate in a content of about 95 wt% or more based on the total composition amount. The first substrate 100 may include the polyethylene terephthalate in a content of about 97 wt% or more based on the total composition amount. The first substrate 100 may include the polyethylene terephthalate in a content of about 98 wt% or more based on the total composition amount.

The first substrate 100 may include a uniaxially or biaxially stretched polyethylene terephthalate film. The first substrate 100 may include a polyethylene terephthalate film stretched about 2 to about 5 times in a longitudinal direction and/or width direction.

The first substrate 100 may have high mechanical properties to reinforce the glass when applied to a window of a building or a vehicle.

The first substrate 100 may have a tensile strength of about 7 $kgf/mm^2$ to about 40 $kgf/mm^2$ in the longitudinal direction. The first substrate 100 may have a tensile strength of about 8 $kgf/mm^2$ to about 35 $kgf/mm^2$ in the longitudinal direction.

The first substrate 100 may have a tensile strength of about 7 $kgf/mm^2$ to about 40 $kgf/mm^2$ in the width direction. The first substrate 100 may have a tensile strength of about 8 $kgf/mm^2$ to about 35 $kgf/mm^2$ in the width direction.

The first substrate 100 may have a modulus of about 200 $kgf/mm^2$ to about 400 $kgf/mm^2$ in the longitudinal direction. The first substrate 100 may have a modulus of about 250 $kgf/mm^2$ to about 350 $kgf/mm^2$ in the longitudinal direction. The first substrate 100 may have a modulus of about 250 $kgf/mm^2$ to about 270 $kgf/mm^2$ in the longitudinal direction.

The first substrate 100 may have a modulus of about 200 $kgf/mm^2$ to about 400 $kgf/mm^2$ in the width direction. The first substrate 100 may have a modulus of about 250 $kgf/mm^2$ to about 350 $kgf/mm^2$ in the width direction. The first substrate 100 may have a modulus of about 250 $kgf/mm^2$ to about 270 $kgf/mm^2$ in the width direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The first substrate 100 may have a fracture elongation of about 30% to about 150% in the longitudinal direction. The first substrate 100 may have a fracture elongation of about 30% to about 130% in the longitudinal direction. The first substrate 100 may have a fracture elongation of about 40% to about 120% in the longitudinal direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The modulus, the fracture elongation and the tensile strength may be measured according to KS B 5521.

In addition, the modulus, the tensile strength and the fracture elongation may be measured according to ASTM D882.

Since the first substrate 100 has the improved mechanical strength as described above, it may efficiently protect the first transparent electrode 300, the second transparent electrode 400, the first discoloration layer 500, the second discoloration layer 600 and the electrolyte layer 700. In addition, since the first substrate 100 has the improved mechanical strength as described above, the mechanical strength of the mechanical strength of glass to be attached may be effectively reinforced.

The first substrate 100 may include glass. The first substrate 100 may be a glass substrate.

In addition, the first substrate 100 may have high chemical resistance. Accordingly, even if an electrolyte contained in the first substrate 100 leaks, damage to the surface of the first substrate 100 may be minimized.

The first substrate 100 may have improved optical properties. A total light transmittance of the first substrate 100 may be about 55% or more. The total light transmittance of the first substrate 100 may be about 70% or more. The total light transmittance of the first substrate 100 may be about 75% to about 99%. The total light transmittance of the first substrate 100 may be about 80% to about 99%.

A haze of the first substrate 100 may be less than about 20%. The haze of the first substrate 100 may be about 0.1% to about 20%. The haze of the first substrate 100 may be about 0.1% to about 10%. The haze of the first substrate 100 may be about 0.1% to about 7%.

The total light transmittance and the haze may be measured according to ASTM D 1003, etc.

Since the first substrate 100 has an appropriate total light transmittance and haze, the electrochromic element according to another embodiment may have improved optical properties. That is, since the first substrate 100 has an appropriate transmittance and haze, an improved appearance may be achieved by minimizing distortion of images from the outside while appropriately controlling a transmittance when the electrochromic element according to another embodiment is applied to a window.

In addition, the first substrate 100 may have an in-plane phase difference of about 100 nm to about 4000 nm. The first substrate 100 may have an in-plane phase difference of about 200 nm to about 3500 nm. The first substrate 100 may have an in-plane phase difference of about 200 nm to about 3000 nm.

The first substrate 100 may have an in-plane phase difference of about 7000 nm or more. The first substrate 100 may have an in-plane phase difference of about 7000 nm to about 50000 nm. The first substrate 100 may have an in-plane phase difference of about 8000 nm to about 20000 nm.

The in-plane phase difference may be derived from a refractive index and thickness according to the direction of the first substrate 100.

Since the first substrate 100 has the in-plane phase difference as described above, the electrochromic film according to an embodiment may have an improved appearance.

The thickness of the first substrate 100 may be about 10 $\mu$m to about 200 $\mu$m. The thickness of the first substrate 100 may be about 23 $\mu$m to about 150 $\mu$m. The thickness of the first substrate 100 may be about 30 $\mu$m to about 120 $\mu$m.

The first substrate 100 may include an organic filler or an inorganic filler. The organic or inorganic filler may function as an anti-blocking agent.

An average particle diameter of the filler may be about 0.1 $\mu$m to about 5 $\mu$m. The average particle diameter of the filler may be about 0.1 $\mu$m to about 3 $\mu$m. The average particle diameter of the filler may be about 0.1 $\mu$m to about 1 $\mu$m.

The filler may be at least one selected from the group consisting of silica particles, barium sulfate particles, alumina particles and titania particles.

In addition, the filler may be included in the first substrate 100 in a content of about 0.01 wt% to about 3 wt% based on the total amount of the first substrate 100. The filler may be included in the first substrate 100 in a content of about 0.05 wt% to about 2 wt% based on the total amount of the first substrate 100.

The first substrate 100 may have a single-layer structure. For example, the first substrate 100 may be a single-layer polyester film.

The first substrate 100 may have a multi-layer structure. For example, the first substrate 100 may be a multi-layer co-extruded film. The multi-layer co-extruded structure may include a center layer, a first surface layer and a second surface layer. The filler may be included in the first surface layer and the second surface layer.

The second substrate 200 faces the first substrate 100. The second substrate 200 is disposed on the first substrate 100. One end of the second substrate 200 may be disposed to be misaligned with one end of the first substrate 100. The other end of the second substrate 200 may be disposed to be misaligned with the other end of the first substrate 100.

Together with the first substrate 100, the second substrate 200 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the second substrate 200 and the first substrate 100. Together with the first substrate 100, the second substrate 200 may protect the first transparent electrode 300, the first discoloration layer 500, the second discoloration layer 600, the second transparent electrode 400 and the electrolyte layer 700 from external physical impact and chemical impact.

The second substrate 200 may include a polymer resin. The second substrate 200 may include at least one selected from the group consisting of a polyester-based resin, a polyimide-based resin, a cyclic olefin polymer resin, a polyethersulfone, a polycarbonate and a polyolefin-based resin. The second substrate 200 may be a polymer substrate.

The second substrate 200 may include a polyester resin as a main component. The second substrate 200 may include polyethylene terephthalate. The second substrate 200 may include the polyethylene terephthalate in a content of about 90 wt% or more based on the total composition amount. The second substrate 200 may include the polyethylene terephthalate in a content of about 95 wt% or more based on the total composition amount. The second substrate 200 may include the polyethylene terephthalate in a content of about 97 wt% or more based on the total composition amount. The second substrate 200 may include the polyethylene terephthalate in a content of about 98 wt% or more based on the total composition amount.

The second substrate 200 may include a uniaxially or biaxially stretched polyethylene terephthalate film. The second substrate 200 may include a polyethylene terephthalate film stretched about 2 to about 5 times in a longitudinal direction and/or width direction.

The second substrate 200 may have high mechanical properties to reinforce glass included in the window when applied to a window of a building or a vehicle.

The second substrate 200 may have a tensile strength of about 7 kgf/mm$^2$ to about 40 kgf/mm$^2$ in the length direction. The second substrate 200 may have a tensile strength of about 8 kgf/mm$^2$ to about 35 kgf/mm$^2$ in the length direction.

The second substrate 200 may have a tensile strength of about 7 kgf/mm$^2$ to about 40 kgf/mm$^2$ in the width direction. The second substrate 200 may have a tensile strength of about 8 kgf/mm$^2$ to about 35 kgf/mm$^2$ in the width direction.

The second substrate 200 may have a modulus of about 200 kgf/mm$^2$ to about 400 kgf/mm$^2$ in the length direction. The second substrate 200 may have a modulus of about 250 kgf/mm$^2$ to about 350 kgf/mm$^2$ in the length

direction. The second substrate 200 may have a modulus of about 250 $kgf/mm^2$ to about 270 $kgf/mm^2$ in the length direction.

The second substrate 200 may have a modulus of about 200 $kgf/mm^2$ to about 400 $kgf/mm^2$ in the width direction. The second substrate 200 may have a modulus of about 250 $kgf/mm^2$ to about 350 $kgf/mm^2$ in the width direction. The second substrate 200 may have a modulus of about 250 $kgf/mm^2$ to about 270 $kgf/mm^2$ in the width direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the width direction. The second substrate 200 may have a fracture elongation of about 30% to about 130% in the width direction. The second substrate 200 may have a fracture elongation of about 40% to about 120% in the width direction.

Since the second substrate 200 has the improved mechanical strength as described above, it may efficiently protect the first transparent electrode 300, the second transparent electrode 400, the first discoloration layer 500, the second discoloration layer 600 and the electrolyte layer 700. In addition, since the second substrate 200 has the improved mechanical strength as described above, the mechanical strength of the mechanical strength of glass to be attached may be effectively reinforced.

The second substrate 200 may include glass. The second substrate 200 may be a glass substrate.

In addition, the second substrate 200 may have high chemical resistance. Accordingly, even if an electrolyte contained in the second substrate 200 leaks, damage to the surface of the second substrate 200 may be minimized.

The second substrate 200 may have improved optical properties. The second substrate 200 may have a total light transmittance of about 55% or more. The second substrate 200 may have a total light transmittance of about 70% or more. The second substrate 200 may have a total light transmittance of about 75% to about 99%. The second substrate 200 may have a total light transmittance of about 80% to about 99%.

A haze of the second substrate 200 may be less than about 20%. The haze of the second substrate 200 may be about 0.1% to about 20%. The haze of the second substrate 200 may be about 0.1% to about 10%. The haze of the second substrate 200 may be about 0.1% to about 7%.

Since the second substrate 200 has an appropriate total light transmittance and haze, the electrochromic element according to another embodiment may have improved optical properties. That is, since the second substrate 200 has an appropriate transmittance and haze, an improved appearance may be achieved by minimizing distortion of images from the outside while appropriately controlling a transmittance when the electrochromic element according to another embodiment is applied to a window.

In addition, the second substrate 200 may have an in-plane phase difference of about 100 nm to about 4000 nm. The second substrate 20 may have an in-plane phase difference of about 200 nm to about 3500 nm. The second substrate 200 may have an in-plane phase difference of about 200 nm to about 3000 nm.

The second substrate 200 may have an in-plane phase difference of about 7000 nm or more. The second substrate 200 may have an in-plane phase difference of about 7000 nm to about 50000 nm. The second substrate 200 may have an in-plane phase difference of about 8000 nm to about 20000 nm.

The in-plane phase difference may be derived from a refractive index and thickness according to the direction of the second substrate 200.

Since the second substrate 200 has the in-plane phase difference as described above, the electrochromic element according to an embodiment may have improved appearance.

The thickness of the second substrate 200 may be about 10 $\mu$m to about 200 $\mu$m. The thickness of the first substrate 100 may be about 23 $\mu$m to about 150 $\mu$m. The thickness of the first substrate 100 may be about 30 $\mu$m to about 120 $\mu$m.

The second substrate 200 may include an organic filler or an inorganic filler. The organic or inorganic filler may function as an anti-blocking agent.

An average particle diameter of the filler may be about 0.1 $\mu$m to about 5 $\mu$m The average particle diameter of the filler may be about 0.1 $\mu$m to about 3 $\mu$m. The average particle diameter of the filler may be about 0.1 $\mu$m to about 1 $\mu$m.

The filler may be at least one selected from the group consisting of silica particles, barium sulfate particles, alumina particles and titania particles.

In addition, the filler may be included in the second substrate 200 in a content of about 0.01 wt% to about 3 wt% of the total amount of the second substrate 200. The filler may be included in the second substrate 200 in a content of about 0.05 wt% to about 2 wt% of the total amount of the second substrate 200.

The second substrate 200 may have a single-layer structure. For example, the second substrate 200 may be a single-layer polyester film.

The second substrate 200 may have a multi-layer structure. For example, the second substrate 200 may be a multi-layer co-extruded film.

The first substrate 100 and the second substrate 200 may be flexible. Accordingly, the electrochromic element according to another embodiment may be flexible overall.

The UV-blocking layer 800 is disposed on the first substrate 100.T The UV-blocking layer 800 is disposed under the first transparent electrode 300. The UV-blocking layer 800 is disposed between the first substrate 100 and the first transparent electrode 300.

The UV-blocking layer 800 may include a UV absorbent.

The UV absorbent may be at least one selected from the group consisting of a benzoxazinone-based UV absorbent, a triazine-based UV absorbent, a benzotriazole-based UV absorbent and a benzophenone-based UV absorbent.

Examples of a commercially available UV absorbent are as follows: Examples of a benzoxazinone-based UV absorbent include CYASORB UV-3853S manufactured by CYTEC Co.; examples of triazine-based UV absorbent includes CYASORB UV-1164 manufactured by CYTEC Co., and TINUVIN 1577, TINUVIN P, TINUVIN 234, TINUVIN 326, TINUVIN 328, TINUVIN 329, TINUVIN 571, TINUVIN 400 and TINUVIN 479 manufactured by BASF Co.; examples of a benzotriazole-based UV absorbent include CYASORB UV-2337 and CYASORB UV-5411 manufactured by Ciba Specialty Chemicals Co., TINUVIN 360, TINUVIN 213, TINUVIN 99-2, TINUVIN 171, TINUVIN 328, TINUVIN 384-2, TINUVIN 900, TINUVIN 928 and TINUVIN 1130 manufactured by BASF Co., and SONGSORB 1000, SONGSORB 2340, SONGSORB 3200, SONGSORB 3260, SONGSORB 3270 and SONGSORB 3280 manufactured by SONGWON Co.; examples of a benzophenone-based UV absorbent includes CYASORB UV-9, CYASORB UV-24 and CYASORB UV-531 manufactured by CYTEC Co., CHIMASSORB 81 manufactured by Ciba Specialty Chemicals Co., SONGSORB 8100 manufactured by SONGWON Co., and the like. The respective UV absorbents may be used alone or as a mixture of two or more thereof.

The UV absorbent may have a first absorption maximum in a wavelength range of about 290 nm to about 310 nm, and may have a second absorption maximum in a wavelength range of about 330 nm to about 350 nm.

The UV absorbent may have a first absorption maximum in a wavelength range of about 280 nm to about 300 nm, and may have a second absorption maximum in a wavelength range of about 320 nm to about 340 nm.

The UV absorbent may have a first absorption maximum in a wavelength range of about 270 nm to about 290 nm, and may have a second absorption maximum in a wavelength range of about 330 nm to about 350 nm.

The UV absorbent may have an absorption maximum in a wavelength range of about 290 nm to about 310 nm. The UV absorbent may have an absorption maximum in a wavelength range of about 300 nm to about 320 nm.

Since the UV absorbent has the absorption maximum as described above, it may effectively block ultraviolet light that is incident on the first discoloration layer 500. Accordingly, the UV absorbent may efficiently prevent electrons from being generated by ultraviolet light incident on the first discoloration layer 500.

The UV-blocking layer 800 may further include a photocurable resin. The photocurable resin may include a photocurable (meta)acrylate oligomer and/or a photocurable (meta)acrylate monomer.

One or more selected from the group consisting of urethane (meta)acrylate, polyester (meta)acrylate and epoxy (meta)acrylate may be used as the photocurable (meta)acrylate oligomer. Examples of a commercially available oligomer include EB-1290 (SK CYTEC Co.); Adeka Optomer KR BY series (KR-400, KR-410, KR-550, KR-566, KR-567, BY-320B (ASAHI DENKA Co. Ltd.); Koei Hard A-101-KK, A-101-WS, C-302, C-401-N, C-501, M-101, M-102, T-102, D-102, NS-101, FT-102Q8, MAG-1-P20, AG-106, M-101-C (KOEI CHEMICAL COMPANY, LIMITED); Seika Beam PHC2210(S), PHC X-9(K-3), PHC2213, DP-10, DP-20, DP-30, P1000, P1100, P1200, P1300, P1400, P1500, P1600, SCR900 (Daiichi Seikagaku Corporation); KRM7033, KRM7039, KRM7130, KRM7131, UVECRYL 29201, UVECRYL 29202 (Daicel U. C. B. Co., Ltd.); RC-5015, RC-5016, RC-5020, RC-5031, RC-5100, RC-5102, RC-5120, RC-5122, RC-5152, RC-5171, RC-5180, RC-5181 (Dainippon Ink & Chemicals, Inc.); OLEX No. 340 CLEAR (Chugoku Marine Paints, Ltd.); SANRADH H-601, RC-750, RC-700, RC-600, RC-500, RC-611, RC-612 (Sanyo Chemical Industries, Ltd.); SP-1509, SP-1507 (Showa Highpolymer Co. Ltd.,); RCC-15C (Grace Japan Co., Ltd.), ARONIX M-6100, M-8030, M-8060 (Toagosei Co., Ltd.); and the like.

Examples of the photocurable (meth)acrylate monomer include, without being limited to, trimethylolpropane tri(meth)acrylate, pentaerythritol tri/penta(meta)acrylate, dipentaerythritol penta/hexa(meta)acrylate, isoborneol (meth) acrylate, phenoxyethyl (meth)acrylate, methyl (meta)acrylate, ethyl (meta)acrylate, butyl (meta)acrylate, ethylhexyl (meta)acrylate, glycidyl (meta)acrylate, benzyl (meta)acrylate, cyclohexyl (meta)acrylate, dicyclopentane (meta)acrylate, tetrahydrofuranol (meta)acrylate, lauryl (meta)acrylate, stearyl (meta)acrylate, isodecyl (meta)acrylate, 2-hydroxyethyl (meta)acrylate, 2-hydroxyisopropyl (meta)acrylate, 4-hydroxybutyl(meta)acrylate, dimethylaminoethyl (meta)acrylate, and the like.

As the photocurable resin, a mixture of one or more of the photocurable (meta)acrylate oligomers and photocurable (meth)acrylate monomers shown above may be used, but their types and contents are not particularly limited.

The UV-blocking layer 800 includes a photocurable initiator. The photocurable initiator may include a phosphine oxide-based photoinitiator having an absorption wavelength of 400 nm or more. The photoinitiator may be at least one selected from the group consisting of bis(2,4,6-trimethylbenzoyl)-4-methylphenylphosphine oxide, bis(2,4,6-trimethylbenzoyl)-2,5-diisopropylphenylphosphine oxide, bis(2,4,6-trimethylbenzoyl)-2-methylphenylphosphine oxide, bis(2,4,6-trimethylbenzoyl)-4-methylphenylphosphine oxide, bis(2,4,6-trimethylbenzoyl)-2,5-diethylphenylphosphine oxide, bis(2,4,6-trimethylbenzoyl)-2,3,5,6-tetramethylphenylphosphine oxide, 2,4,6-trimethylbenzoyl-diphenylphosphineoxide (TPO) and bis(2,4,6-trimethylbenzoyl)-phenylphosphine oxide (Igacure-819).

The photocurable resin may be included in the UV-blocking layer 800 in a content of about 60 wt% to about 98 wt% based on 100 wt% of the total UV-blocking layer 800. The photocurable resin may be included in the UV-blocking layer 800 in a content of about 70 wt% to about 90 wt% based on 100 wt% of the total UV-blocking layer 800. The photocurable resin may be included in the UV-blocking layer 800 in a content of about 80 wt% to about 90 wt% based on 100 wt% of the total UV-blocking layer 800.

The UV absorbent may be included in the UV-blocking layer 800 in a content of about 1 part by weight to about 20 parts by weight based on 100 parts by weight of the photocurable resin. The UV absorbent may be included in the UV-blocking layer 800 in a content of about 1 part by weight to about 15 parts by weight based on 100 parts by weight of the photocurable resin. The UV absorbent may be included in the UV-blocking layer 800 in a content of about 1 part by weight to about 10 parts by weight based on 100 parts by weight of the photocurable resin. The UV absorbent may be included in the UV-blocking layer 800 in a content of about 3 parts by weight to about 10 parts by weight based on 100 parts by weight of the photocurable resin.

The photocurable initiator may be included in the UV-blocking layer 800 in a content of about 1 part by weight to about 20 parts by weight based on 100 parts by weight of the photocurable resin. The photocurable initiator may be included in the UV-blocking layer 800 in a content of about 3 parts by weight to about 20 parts by weight based on 100 parts by weight of the photocurable resin. The photocurable initiator may be included in the UV-blocking layer 800 in a content of about 5 parts by weight to about 15 parts by weight based on 100 parts by weight of the photocurable resin. The photocurable initiator may be included in the UV-blocking layer 800 in a content of about 10 parts by weight to about 20 parts by weight based on 100 parts by weight of the photocurable resin.

Since the UV-blocking layer 800 includes the photocurable resin, the UV absorbent and the photocurable initiator in the above ranges, it may have appropriate mechanical properties and appropriate UV-blocking properties.

Accordingly, the first discoloration layer 500 may suppress the generation of electrons due to ultraviolet rays incident from the outside.

The UV-blocking layer 800 may further include a UV stabilizer, a heat stabilizer, an antioxidant or a surfactant.

A thickness of the UV-blocking layer 800 may be about 0.1 $\mu$m to about 20 $\mu$m. The thickness of the UV-blocking layer 800 may be about 1 $\mu$m to about 20 $\mu$m. The thickness of the UV-blocking layer 800 may be about 1 $\mu$m to about 10 $\mu$m. The thickness of the UV-blocking layer 800 may be about 3 $\mu$m to about 8 $\mu$m.

Since the UV-blocking layer 800 has a thickness within the above range, it may have appropriate mechanical properties and appropriate UV-blocking properties.

An UV-blocking laminate including the first substrate 100 and the UV-blocking layer 800 may have a low UV transmittance.

The UV-blocking laminate may have a transmittance of less than about 20% for light in a wavelength range of about 250 nm to about 400 nm. The UV-blocking laminate may have a transmittance of less than about 15% for light in a wavelength range of about 250 nm to about 400 nm. The UV-blocking laminate may have a transmittance of less than about 10% for light in a wavelength range of about 250 nm to about 400 nm.

The UV-blocking laminate may have a transmittance of less than about 20% for light in a wavelength range of about 350 nm. The UV-blocking laminate may have a transmittance of less than about 15% for light in a wavelength range of about 350 nm. The UV-blocking laminate may have a transmittance of less than about 10% for light in a wavelength range of about 350 nm.

The UV-blocking laminate may have a transmittance of greater than about 60% for light in a wavelength range of about 400 nm to about 650 nm. The UV-blocking laminate may have a transmittance of greater than about 70% for light in a wavelength range of about 400 nm to about 650 nm. The UV-blocking laminate may have a transmittance of greater than about 80% for light in a wavelength range of about 400 nm to about 650 nm.

The UV-blocking laminate may have a transmittance of greater than about 60% for light in a wavelength range of about 550 nm. The UV-blocking laminate may have a transmittance of greater than about 70% for light in a wavelength range of about 550 nm. The UV-blocking laminate may have a transmittance of greater than about 80% for light in a wavelength range of about 550 nm.

Since the UV-blocking laminate has the ultraviolet light transmittance and visible light transmittance described above, it may have improved appearance while suppressing the generation of electrons caused by external light.

FIG. 2 is a sectional view illustrating one cross-section of an electrochromic element according to another embodiment of the present disclosure.

Referring to FIG. 2, the UV-blocking layer 800 may be disposed under the first substrate 100. The UV-blocking layer 800 may be directly disposed on the lower surface of the first substrate 100. The UV-blocking layer 800 may be directly coated, cured and formed on the lower surface of the first substrate 100.

Alternatively, the UV-blocking layer 800 and the first substrate 100 may be formed as a single layer. The UV absorbent may be included in the first substrate 100. Accordingly, the first substrate 100 may simultaneously perform a support layer function and a UV-blocking function.

The first transparent electrode 300 is disposed on the first substrate 100. The first transparent electrode 300 is disposed on the UV-blocking layer 800. The first transparent electrode 300 may be deposited on the UV-blocking layer 800.

The first transparent electrode 300 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the first transparent electrode 300 may include graphene, silver nanowires and/or metal mesh.

The first transparent electrode 300 may have a total light transmittance of about 80% or more. The first transparent electrode 300 may have a total light transmittance of about 85% or more. The first transparent electrode 300 may have a total light transmittance of about 88% or more.

The first transparent electrode 300 may have a haze of less than about 10%. The first transparent electrode 300 may have a haze of less than about 7%. The first transparent electrode 300 may have a haze of less than about 5%.

A surface resistance of the first transparent electrode 300 may be about 1 Ω/sq to 60 Ω/sq. The surface resistance of the first transparent electrode 300 may be about 1 Ω/sq to 40 Ω/sq. The surface resistance of the first transparent electrode 300 may be about 1 Ω/sq to 30 Ω/sq.

The thickness of the first transparent electrode 300 may be about 50 nm to about 50 μm The thickness of the first transparent electrode 300 may be about 100 nm to about 10 μm. The thickness of the first transparent electrode 300 may be about 150 nm to about 5 μm.

The first transparent electrode 300 is electrically connected to the first discoloration layer 500. In addition, the first transparent electrode 300 is electrically connected to the electrolyte layer 700 through the first discoloration layer 500.

The second transparent electrode 400 is disposed under the second substrate 200. The second transparent electrode 400 may be deposited on the second substrate 200. In addition, a hard coating layer may be further included between the second transparent electrode 400 and the second substrate 200.

The second transparent electrode 400 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the second transparent electrode 400 may include graphene, silver nanowires and/or metal mesh.

The second transparent electrode 400 may have a total light transmittance of about 80% or more. The second transparent electrode 400 may have a total light transmittance of about 85% or more. The second transparent electrode 400 may have a total light transmittance of about 88% or more.

The second transparent electrode 400 may have a haze of less than about 10%. The second transparent electrode 400 may have a haze of less than about 7%. The second transparent electrode 400 may have a haze of less than about 5%.

The surface resistance of the second transparent electrode 400 may be about 1 Ω/sq to 60 Ω/sq. The surface resistance of the second transparent electrode 400 may be about 1 Ω/sq to 40 Ω/sq. The surface resistance of the second transparent electrode 400 may be about 1 Ω/sq to 30 Ω/sq.

The thickness of the second transparent electrode 400 may be about 50 nm to about 50 μm. The thickness of the second transparent electrode 400 may be about 100 nm to about 10 μm. The thickness of the second transparent electrode 400 may be about 150 nm to about 5 μm.

The second transparent electrode 400 is electrically connected to the second discoloration layer 600. In addition, the second transparent electrode 400 is electrically connected to the electrolyte layer 700 through the second discoloration layer 600.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may directly access the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color is changed when supplied with electrons. The first electrochromic

material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having an average particle diameter of about 1 nm to about 200 nm. An average particle diameter of the first electrochromic material may be about 5 nm to about 100 nm. The average particle diameter of the first electrochromic material may be about 10 nm to about 50 nm.

The first discoloration layer 500 may include the first electrochromic material in a content of about 70 wt% to about 98 wt% based on the total weight of based on the total weight of the first discoloration layer 500. The first discoloration layer 500 may include the first electrochromic material in a content of about 80 wt% to about 96 wt% based on the total weight of the first discoloration layer 500. The first discoloration layer 500 may include the first electrochromic material in a content of about 85 wt% to about 94 wt% based on the total weight of the first discoloration layer 500.

Since the first discoloration layer 500 includes the first electrochromic material in the average particle diameter range and weight range described above, the electrochromic element according to an embodiment may have improved optical properties and electrochromic properties.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 5 wt% to 15 wt% based on the total weight of the first discoloration layer 500. The first discoloration layer 500 may include the binder in a content of about 7 wt% to 13 wt% based on the total weight of the first discoloration layer 500.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may directly access the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm.

In addition, the second discoloration layer 600 may further include the binder.

The second substrate 200, the second transparent electrode 400 and the second discoloration layer 600 are included in a second laminate. That is, the second laminate includes the second substrate 200, the second transparent electrode 400 and the second discoloration layer 600. The second laminate may be composed of the second substrate 200, the second transparent electrode 400 and the second discoloration layer 600.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include a solid polymer electrolyte containing metal ions, an inorganic hydrate, etc. The electrolyte layer 700 may include lithium ions ($Li^+$), sodium ions ($Na^+$), potassium ions ($K^+$), and the like.

Specifically, poly-AMPS, PEO/$LiCF_3SO_3$, etc. may be used as the solid polymer electrolyte, and $Sb_2O_5 \cdot 4H_2O$, etc. may be used as the inorganic hydrate.

In addition, the electrolyte layer 700 is a configuration that provides electrolyte ions involved in an electrochromic reaction. The electrolyte ions may be, for example, monovalent cations such as $H^+$, $Li^+$, $Na^+$, $K^+$, $Rb^+$ or $Cs^+$.

The electrolyte layer 700 may include an electrolyte. For example, a liquid electrolyte, a gel polymer electrolyte, an inorganic solid electrolyte, etc. may be used as the electrolyte without limitation. In addition, the electrolyte may be used in the form of a single layer or film to be laminated together with the electrode or the substrate.

The type of electrolyte salt used in the electrolyte layer 700 is not particularly limited so long as it contains a compound capable of providing monovalent cations, i.e., $H^+$, $Li^+$, $Na^+$, $K^+$, $Rb^+$ or $Cs^+$. For example, the electrolyte layer 700 may include a lithium salt compound such as $LiClO_4$, $LiBF_4$, $LiAsF_6$, $LiPF_6$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$ or $(CF_3SO_2)_2NLi$; or a sodium salt compound such as $NaClO_4$.

As one example, the electrolyte layer 700 may include a Cl or F element-containing compound as an electrolyte

salt. Specifically, the first electrolyte layer 410 may include one or more electrolyte salts selected from among $LiClO_4$, $LiBF_4$, $LiAsF_6$, $LiPF_6$, LiCl, $LiB_{10}Cl_{10}$, $LiCF_3SO_3$, $LiCF_3CO_2$, $LiAsF_6$, $LiSbF_6$, $LiAlCl_4$, $CF_3SO_3Li$, $(CF_3SO_2)_2NLi$ and $NaClO_4$.

The electrolyte may additionally include a carbonate compound as a solvent. Since a carbonate compound has a high dielectric constant, it may increase ionic conductivity. As a non-limiting example, a solvent such as propylene carbonate (PC), ethylene carbonate (EC), dimethyl carbonate (DMC), diethyl carbonate (DEC) or ethylmethyl carbonate (EMC) may be used as a carbonate compound.

As another example, when the electrolyte layer 700 includes a gel polymer electrolyte, the electrolyte layer 700 may include a polymer such as poly-vinyl sulfonic acid, poly-styrene sulfonic acid, polyethylene sulfonic acid, poly-2-acrylamido-2methyl-propane sulfonic acid, poly-perfluoro sulfonic acid, poly-toluene sulfonic acid, poly-vinyl alcohol, poly-ethylene imine, poly-vinyl pyrrolidone, poly-ethylene oxide (PEO), poly-propylene oxide (PPO), poly-(ethylene oxide (siloxane PEOS), poly-(ethylene glycol, siloxane), poly-(propylene oxide, siloxane), poly-(ethylene oxide, methyl methacrylate) (PEO-PMMA), poly-(ethylene oxide, acrylic acid) (PEO PAA), poly-(propylene glycol, methyl methacrylate) (PPG PMMA), polyethylene succinate or poly-ethylene adipate. In one example, a mixture of two or more of the listed polymers or two or more copolymers may be used as a polymer electrolyte.

In addition, the electrolyte layer 700 may include a curable resin that can be cured by ultraviolet irradiation or heat. The curable resin may be at least one selected from the group consisting of an acrylate-based oligomer, a polyethylene glycol-based oligomer, a urethanebased oligomer, a polyester-based oligomer, polyethylene glycol dimethyl and polyethylene glycol diacrylate. In addition, the electrolyte layer 700 may include a photocurable initiator and/or a heat-curable initiator.

A thickness of the electrolyte layer 700 may be about 10 $\mu$m to about 200 $\mu$m. The thickness of the electrolyte layer 700 may be about 50 $\mu$m to about 150 $\mu$m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be measured using a known haze meter (HM).

The electrochromic element according to an embodiment may further include a sealing part (not shown).

The sealing part includes a curable resin. The sealing part may include a thermosetting resin and/or a photocurable resin.

Examples of the thermosetting resin include epoxy resin, melamine resin, urea resin, unsaturated polyester resin, and the like. In addition, examples of the epoxy resin include phenol novolac-type epoxy resin, cresol novolac-type epoxy resin, biphenyl novolac-type epoxy resin, trisphenol novolac-type epoxy resin, dicyclopentadiene novolac-type epoxy resin, bisphenol A-type epoxy resin, bisphenol F-type epoxy resin, 2, 2'-diarylbisphenol A-type epoxy resin, bisphenol S-type epoxy resin, hydrogenated bisphenol A-type epoxy resin, propylene oxide-added bisphenol A-type epoxy resin, biphenyl type epoxy resin, naphthalenetype epoxy resin, resorcinol-type epoxy resin, glycidyl amines, and the like.

In addition, the sealing part may further include a heat-curing agent. Examples of the sealing part include hydrazide compounds such as 1, 3-bis[hydrazinocarbonoethyl 5-isopropyl hydantoin], adipic acid (adipic acid) hydrazide; dicyandiamide, guanidine derivatives, 1-cyanoethyl-2-phenyl imidazole, N-[2-(2-methyl-1-imidazolyl) ethyl]urea, 2, 4-diamino-6-[2'-methylimidazolyl(1')]-ethyl-s-thoriazine, N,N'-bis(2-methyl-1-imidazolyl ethyl) urea, N, N'-(2-methyl-1-imidazolyl ethyl)-azipoamido, 2-phenyl-4-methyl-5-hydroxymethyl imidazole, 2-imidazoline-2-thiol, 2, 2'-thiodiethanethiol, additional products of various amines and epoxy resins, and the like.

The first sealing part may include a photocurable resin. Examples of the photocurable resin include acrylate-based resins such as urethane acrylate, and the like. In addition, the sealing part may further include a photocurable initiator. The photocurable initiator may be at least one selected from the group consisting of acetophenone-based compounds, benzophenone-based compounds, thioxanthone-based compounds, benzoin-based compounds, triazine-based compounds and oxime-based compounds.

In addition, the sealing part may further include a moisture absorbent such as zeolite and/or silica. In addition, the sealing part may further include an inorganic filler. The inorganic filler may have a material having high insulating nature, transparency and durability. Examples of the inorganic filler include silicon, aluminum, zirconia, a mixture thereof, and the like.

In addition, the electrochromic element according to an embodiment may further include a first bus bar (not shown) and a second bus bar (not shown).

The first bus bar may be disposed on the first transparent electrode 300. The first bus bar may access the first transparent electrode 300.

The first bus bar may be electrically connected to the first transparent electrode 300. The first bus bar may be in direct contact with the upper surface of the first transparent electrode 300. The first bus bar may access the first transparent electrode 300 through solder.

The second bus bar is disposed under the second transparent electrode 400. The second bus bar accesses the second transparent electrode 400.

The second bus bar may be electrically connected to the second transparent electrode 400. The second bus bar may be in direct contact with the lower surface of the second transparent electrode 400. The second bus bar may access the second transparent electrode 400 through solder.

The first bus bar and/or the second bus bar may include a metal. The first bus bar and/or the second bus bar may include a metal ribbon. The first bus bar and/or the second bus bar may include a conductive paste. The first bus bar and/or the second bus bar may include a binder and a conductive filler.

The electrochromic element according to an embodiment may be fabricated by the following method. FIGS. 3 to 6 are sectional views illustrating processes of fabricating the electrochromic element according to an embodiment of the present disclosure.

Referring to FIG. 3, a UV-blocking layer 800 is formed on a first substrate 100.

To form the UV-blocking layer 800, a photocurable resin composition including the UV absorbent is formed.

The photocurable resin composition includes the photocurable resin, the UV absorbent and the photoinitiator. In addition, the photocurable resin composition may further include an organic solvent.

Examples of the organic solvent include alcohols (methanol, ethanol, isopropanol, butanol, propylene glycol methoxy alcohol, etc.), ketones (methyl ethyl ketone, methyl butyl ketone, methyl isobutyl ketone, diethyl ketone, dipropyl ketone, etc.), acetates (methyl acetate, ethyl acetate, butyl acetate, propylene glycol methoxy acetate, etc.), cellosolves (methyl cellosolve, ethyl cellosolve, propyl cellosolve, etc.), hydrocarbons (normal hexane, normal heptane, benzene, toluene, xylene, etc.), and the like. The solvents may be used alone or in combination of two or more.

The photocurable resin composition may include the organic solvent in a content of about 30 parts by weight to about 200 parts by weight based on 100 parts by weight of the photocurable resin. The photocurable resin composition may include the organic solvent in a content of about 50 parts by weight to about 150 parts by weight based on 100 parts by weight of the photocurable resin. The photocurable resin composition may include the organic solvent in a content of about 70 parts by weight to about 120 parts by weight based on 100 parts by weight of the photocurable resin.

The photocurable resin composition may be coated on the first substrate 100 appropriately using a known method such as a die coater, air knife, reverse roll, spray, blade, casting, gravure, micro gravure, or spin coating.

A thickness of the coating layer formed by coating with the curable resin composition may be about 0.1 $\mu$m to about 50 $\mu$m. The thickness of the coating layer formed by coating with the curable resin composition may be about 0.5 $\mu$m to about 50 $\mu$m.

After the curable resin composition is coated, a drying process may be performed. The drying process may be performed at about 40°C to about 120°C for about 1 minute to about 5 minutes.

Next, the dried curable resin composition coating layer may be cured by light. In the curing process, a light source may be a lamp having a main wavelength of 400 nm or more.

Accordingly, the UV-blocking layer 800 is formed on the first substrate 100.

Next, a first transparent electrode 300 is formed on the UV-blocking layer 800. The first transparent electrode 300 may be formed by a vacuum deposition process. A metal oxide such as indium tin oxide is deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that the layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. The first sol solution including a first electrochromic material, a binder and a solvent may be coated on the layer of the first transparent electrode 300. A first sol solution including a first electrochromic material, an electron-accepting material, a binder and a solvent may be coated on the layer of the first transparent electrode 300.

The first sol solution may include the first electrochromic material in the form of particles in a content of about 5 wt% to about 30 wt% based on the total weight of the first sol solution. The first sol solution may include the binder in a content of about 0.5 wt% to about 5 wt% based on the total weight of the first sol solution. The first sol solution may include the solvent in a content of about 70 wt% to about 95 wt% based on the total weight of the first sol solution.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether,

diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Referring to FIG. 4, an electrolyte composition for forming an electrolyte layer 700 is formed.

The electrolyte composition may include a metal salt, an electrolyte, a photocurable resin and a photocurable initiator. The photocurable resin may be at least one selected from the group consisting of hexanediol diacrylate (HDDA), tripropylene glycoldiacrylate, ethylene glycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA), and dipentaerythritol hexaacrylate (DPHA).

The metal salt, the electrolyte and the photocurable initiator may be the same as described above.

The electrolyte composition is coated on the first discoloration layer 500. Accordingly, an electrolyte composition coating layer 701 is formed on the first discoloration layer 500.

Referring to FIG. 5, a second transparent electrode 400 is formed on a second substrate 200.

The second transparent electrode 400 may be formed by a vacuum deposition process. A metal oxide such as indium tin oxide may be deposited on the second substrate 200 by a sputtering process, etc., thereby forming the second transparent electrode 400.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the layer of the second transparent electrode 400. The second discoloration layer 600 may be formed by a sol-gel coating process. A second sol solution including a second electrochromic material, a binder and a solvent may be coated on the layer of the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt% based on the total weight of the second sol solution. The second sol solution may include the binder in a content of about 0.5 wt% to about 5 wt% based on the total weight of the second sol solution. The second sol solution may include the solvent in a content of about 70 wt% to about 95 wt% based on the total weight of the second sol solution.

The second sol solution may additionally include a dispersant.

Referring to FIG. 6, the second substrate 200, the second transparent electrode 400 and the second discoloration layer 600 are laminated on the coated electrolyte composition layer 701. Here, the second discoloration layer 600 is brought into direct contact with the coated electrolyte composition layer 701.

Next, the coated electrolyte composition layer 701 is cured by light, and a first laminate including the first substrate 100, the first transparent electrode 300 and the first discoloration layer 500, and a second laminate including the second substrate 200, the second transparent electrode 400 and the second discoloration layer 600 are laminated to each other. That is, the first laminate and the second laminate may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 50% to about 90%. The light transmittance of the electrochromic element may be about 55% to about 88%. The light transmittance of the electrochromic element may be about 68% to about 86%.

The electrochromic element according to an embodiment may have a change in light transmittance. The change in light transmittance is a change in light transmittance after exposure to ultraviolet light relative to an initial light transmittance.

The change in light transmittance may be measured Measurement Method 1 below:

Measurement Method 1

The electrochromic part 11 was irradiated with ultraviolet light at an intensity of about 7.5 W/$m^2$ for 1 hour through the first substrate 100

The electrochromic part 11 was irradiated with ultraviolet light at an intensity of about 7.5 W/$m^2$ for 1 hour through the first substrate 100, a first light transmittance of the electrochromic element before the irradiation with ultraviolet light is measured, a second light transmittance of the electrochromic element after the irradiation with ultraviolet light is measured, and a change in light transmittance is obtained by dividing a difference between the first light transmittance

and the second light transmittance by the first light transmittance.

The ultraviolet light may be light emitted from a UVA 340 UV lamp. The UVA 340 UV lamp may be a fluorescent lamp that emits light with a spectrum having a maximum peak of about 340 nm. The UVA 340 UV lamp may have a light-emitting spectrum as in FIG. 7.

The change in light transmittance (△TR) may be represented by Equation 1 below:

Equation 1

$$\triangle TR = (T1 - T2) / T1$$

where T1 denotes the initial light transmittance of the electrochromic element, and T2 denotes the light transmittance of the electrochromic element after the electrochromic part is irradiated with the ultraviolet light at an intensity of about 7.5 $W/m^2$ for 1 hour through the first substrate 100.

The change in light transmittance of the electrochromic element according to an embodiment may be less than about 0.25. The change in light transmittance of the electrochromic element according to an embodiment may be about 0 to about 0.30. The change in light transmittance of the electrochromic element according to an embodiment may be about 0 to about 0.25. The change in light transmittance of the electrochromic element according to an embodiment may be about 0.01 to about 0.20. The change in light transmittance of the electrochromic element according to an embodiment may be about 0.02 to about 0.18. The change in light transmittance of the electrochromic element according to an embodiment may be about 0.03 to about 0.15.

The light transmittance of the electrochromic element according to an embodiment may be about 45% to about 90%. The light transmittance of the electrochromic element according to an embodiment may be about 50% to about 85%. The light transmittance of the electrochromic element according to an embodiment may be about 60% to about 80%.

The light transmittance of the electrochromic element according to an embodiment after irradiation with the UV may be about 40% to about 80%. The light transmittance of the electrochromic element according to an embodiment after irradiation with the UV may be about 45% to about 80%. The light transmittance of the electrochromic element according to an embodiment after irradiation with the UV may be about 50% to about 70%.

The electrochromic element according to an embodiment has the change in light transmittance described above. Accordingly, the electrochromic element according to an embodiment may reduce a change in transmittance caused by external sunlight, etc.

That is, since the electrochromic element according to an embodiment may reduce a transmittance deviation due to external sunlight, it may easily control a target transmittance at the on-off time.

The electrochromic element according to an embodiment may have a haze.

The haze may refer to the haze of the electrochromic element according to an embodiment in a non-photochromic or non-electrochromic state.

The haze of the electrochromic element according to an embodiment may be less than about 5%. The haze of the electrochromic element according to an embodiment may be less than about 4%. The haze of the electrochromic element according to an embodiment may be less than about 3%. The haze of the electrochromic element according to an embodiment may be less than about 2%.

The electrochromic element according to an embodiment may have a haze change.

The haze change may be measured by Measurement Method 2 below:

Measurement Method 2

A first haze of the electrochromic element according to an embodiment is measured before irradiation with the UV, a second haze of the electrochromic element according to an embodiment is measured after irradiation with the UV, and the haze change is a value obtained by subtracting the first haze from the second haze.

The haze change of the electrochromic element according to an embodiment may be less than 5.5%. The haze change of the electrochromic element according to an embodiment may be less than 5%. The haze change of the electrochromic element according to an embodiment may be less than 4%. The haze change of the electrochromic element according to an embodiment may be less than 3%. The haze change of the electrochromic element according to an embodiment may be less than 2%.

In the electrochromic element according to an embodiment, the haze after irradiation with the UV may be less than about 6%. In the electrochromic element according to an embodiment, the haze after irradiation with the UV may be less than about 5%. In the electrochromic element according to an embodiment, the haze after irradiation with the UV may

be less than about 4%. In the electrochromic element according to an embodiment, the haze after irradiation with the UV may be less than about 3%.

The light transmittance may be a total light transmittance. The total light transmittance may be a light transmittance in a wavelength range of about 380 nm to about 780 nm.

The light transmittance and the haze may be measured according to ASTM D1003.

The electrochromic element according to an embodiment may have L*, a* and b*.

The L* of the electrochromic element according to an embodiment may be about 70 to about 100. The L* of the electrochromic element according to an embodiment may be about 80 to about 100. The L* of the electrochromic element according to an embodiment may be about 91 to about 100. The L* may be measured in a state where the electrochromic element according to an embodiment is non-photochromic or non-electrochromic.

The L* of the electrochromic element according to an embodiment may be changed.

The change in L* may be measured by Measurement Method 3 below:

Measurement Method 3

First L* of the electrochromic element according to an embodiment is measured before irradiation with the UV, second L* of the electrochromic element according to an embodiment is measured after irradiation with the UV, and the change in L* is an absolute value of a difference between the second L* and the first L*.

The change in L* may be represented by Equation 2 below:

Equation 2

$$\text{Change in L*} = \left|\text{second L*} - \text{first L*}\right|$$

The change in L* of the electrochromic element according to an embodiment may be less than 7. The change in L* of the electrochromic element may be less than 6. The change in L* of the electrochromic element according to an embodiment may be less than 5. The change in L* of the electrochromic element according to an embodiment may be less than 4.

The L* of the electrochromic element according to an embodiment after irradiation with the UV may be about 70 to about 95. The L* of the electrochromic element according to an embodiment after irradiation with the UV may be 76 to about 94.

The a* of the electrochromic element according to an embodiment may be -3 to 2. The a* of the electrochromic element according to an embodiment may be -2.5 to 1.5. The a* of the electrochromic element according to an embodiment may be -2 to 1. The a* may be measured in a state where the electrochromic element according to an embodiment is non-photochromic or non-electrochromic.

The a* of the electrochromic element according to an embodiment may be changed.

The change in a* may be measured by Measurement Method 4 below:

Measurement Method 4

The first a* of the electrochromic element according to an embodiment before irradiation with the UV is measured, the second a* of the electrochromic element according to an embodiment after irradiation with the UV is measured, and the change in a* is a value obtained by subtracting the first a* from the second a*.

The change in the a* of the electrochromic element according to an embodiment may be represented by Equation 3 below:

Equation 3

$$\text{Change in a*} = \left|\text{Second a*} - \text{First a*}\right|$$

The change in the a* of the electrochromic element according to an embodiment may be less than 6. The change in the a* of the electrochromic element according to an embodiment may be less than 5. The change in the a* of the

electrochromic element according to an embodiment may be less than 2. The change in the a* of the electrochromic element according to an embodiment may be less than 3. The change in the a* of the electrochromic element according to an embodiment may be less than 1.8. The change in the a* of the electrochromic element according to an embodiment may be less than 1.6. The change in the a* of the electrochromic element according to an embodiment may be less than 1.5.

The a* of the electrochromic element according to an embodiment after irradiation with the UV may be about -5 to about 0. The a* of the electrochromic element according to an embodiment after irradiation with the UV may be about -4.5 to about 0.

The b* of the electrochromic element according to an embodiment may be 0 to 4. The b* of the electrochromic element according to an embodiment may be 0.1 to 3.5. The b* of the electrochromic element according to an embodiment may be 0.5 to 3. The b* may be measured in a state where the electrochromic element according to an embodiment is non-photochromic or non-electrochromic.

The b* of the electrochromic element according to an embodiment may be changed.

The change in b* may be measured by Measurement Method 5 below:

Measurement Method 5

The first b* of the electrochromic element according to an embodiment before irradiation with the UV is measured, the second b* of the electrochromic element according to an embodiment after irradiation with the UV is measured, and the change in b* is a value obtained by subtracting the first b* from the second b*.

The change in b* may be calculated by Equation 4 below:

Equation 4

$$\text{Change in } b^* = \left| \text{Second } b^* - \text{First } b^* \right|$$

The change in the b* of the electrochromic element according to an embodiment may be less than 10. The change in the b* of the electrochromic element according to an embodiment may be less than 8. The change in the b* of the electrochromic element according to an embodiment may be less than 7. The change in the b* of the electrochromic element according to an embodiment may be less than 2.8. The change in the b* of the electrochromic element according to an embodiment may be less than 2.6. The change in the b* of the electrochromic element according to an embodiment may be less than 2.5.

The b* of the electrochromic element according to an embodiment after irradiation with the UV may be about -5 to about 3. The b* of the electrochromic element according to an embodiment after irradiation with the UV may be about -4.5 to about 2.

The L*, the a* and the b* may be measured using a colorimeter.

The electrochromic element according to an embodiment may have the haze changes described above. In addition, the electrochromic element according to an embodiment may have a change in the L*, a change in the a* and a change in the b*.

Accordingly, the electrochromic element according to an embodiment may reduce changes in appearance due to external sunlight. Accordingly, the electrochromic element according to an embodiment may have a consistent appearance even when the external environment changes.

Since the electrochromic element according to an embodiment effectively blocks external ultraviolet light, an electrochromic part inside may be effectively protected from external ultraviolet light.

Accordingly, the electrochromic element according to an embodiment may prevent electrons from being generated from the first discoloration layer when external ultraviolet light is incident. Therefore, the electrochromic element according to an embodiment may prevent some discoloration due to external ultraviolet light.

Accordingly, the electrochromic element according to an embodiment may have uniform optical characteristics regardless of external environments such as ultraviolet light contained in sunlight.

Accordingly, the electrochromic element according to an embodiment is driven to have constant optical characteristics. In addition, since the electrochromic element according to an embodiment has constant driving characteristics, it may be driven with a constant driving voltage.

Accordingly, since the electrochromic element according to an embodiment may be driven with a constant driving voltage, it may have improved durability.

FIG. 8 is a sectional view illustrating the cross-section of an electrochromic element according to an embodiment of the present disclosure.

Referring to FIG. 8, the electrochromic element according to an embodiment includes a first substrate 100, a second substrate 200, a first transparent electrode 300, a second transparent electrode 400, a first discoloration layer 500, a second discoloration layer 600 and an electrolyte layer 700.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200. Together with the second substrate 200, the first substrate 100 may protect the first transparent electrode 300, the first discoloration layer 500, the second discoloration layer 600, the second transparent electrode 400 and the electrolyte layer 700 from external physical impact and chemical impact.

The second substrate 200 faces the first substrate 100. The second substrate 200 is disposed on the first substrate 100. One end 11 of the second substrate 200 may be disposed to be misaligned with one end 11 of the first substrate 100. Another end 12 of the second substrate 200 may be disposed to be misaligned with another end 12 of the first substrate 100.

Together with the first substrate 100, the second substrate 200 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the second substrate 200 and the first substrate 100. Together with the first substrate 100, the second substrate 200 may protect the first transparent electrode 300, the first discoloration layer 500, the second discoloration layer 600, the second transparent electrode 400 and the electrolyte layer 700 from external physical impact and chemical impact.

The first transparent electrode 300 is disposed on the first substrate 100. The first transparent electrode 300 may be deposited on the first substrate 100. In addition, a hard coating layer may be further included between the first transparent electrode 300 and the first substrate 100.

The second transparent electrode 400 is disposed under the second substrate 200. The second transparent electrode 400 may be deposited on the second substrate 200. In addition, a hard coating layer may further included between the second transparent electrode 400 and the second substrate 200.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may directly access the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color is changed when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having a particle diameter of about 1nm to about 200 nm. That is, the diameter of first electrochromic particles included in the first discoloration layer 500 may be about 2 nm to about 150 nm. The diameter of the first electrochromic particles included in the first discoloration layer 500 may be about 5 nm to about 100 nm. The diameter of the first electrochromic particles included in the first discoloration layer 500 may be about 10 nm to about 50 nm.

The first discoloration layer 500 may include the first electrochromic material in a content of about 70 wt% to about 98 wt% based on the total weight of the first discoloration layer 500. The first discoloration layer 500 may include the first electrochromic material in a content of about 80 wt% to about 96 wt% based on the total weight of the first discoloration layer 500. The first discoloration layer 500 may include the first electrochromic material in a content of about 85 wt% to about 94 wt% based on the total weight of the first discoloration layer 500.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 2 wt% to 15 wt% based on the total weight of the first discoloration layer 500. The first discoloration layer 500 may include the binder in a content of about 3 wt% to 10 wt% based on the total weight of the first discoloration layer 500.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may directly access the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm. That is, a diameter of second electrochromic particles included in the second discoloration layer 600 may be about 2 nm to about 150 nm. The diameter of the second electrochromic particles may be about 5 nm to about 100 nm. The diameter of the second electrochromic particles may be about 10 nm to about 50 nm.

The second discoloration layer 600 may include the second electrochromic material in a content of about 70 wt% to about 98 wt% based on the total weight of the second discoloration layer 600. The second discoloration layer 600 may include the second electrochromic material in a content of about 80 wt% to about 96 wt% based on the total weight of the second discoloration layer 600. The second discoloration layer 600 may include the second electrochromic material in a content of about 85 wt% to about 94 wt% based on the total weight of the second discoloration layer 600.

In addition, the second discoloration layer 600 may further include the binder. The binder may be an inorganic binder. The binder may include a silica gel. The binder may be formed by a silica sol containing tetramethoxysilane or methyltrimethoxysilane.

The second discoloration layer 600 may include the binder in a content of about 1 wt% to 20 wt% based on the total weight of the second discoloration layer 600. The second discoloration layer 600 may include the binder in a content of about 2 wt% to 15 wt% based on the total weight of the second discoloration layer 600. The second discoloration layer 600 may include the binder in a content of about 3 wt% to 10 wt% based on the total weight of the first discoloration layer 500.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include cations involved in an electrochromic reaction. The cations may include metal ions. The metal ions may be at least one selected from the group consisting of lithium ions ($Li^+$), sodium ions ($Na^+$) and potassium ions ($K^+$). The cations may be rubidium ions ($Rb^+$) or cesium ions ($Cs^+$).

The electrolyte layer 700 includes a solvent. The solvent may be at least one selected from the group consisting of acetamide, adiponitrile, sulfolane and polyethylene glycol.

The electrolyte layer 700 may include a metal salt. The metal salt may be at least one selected from the group consisting of $LiClO_4$, $LiBF_4$, $LiAsF_6$, $LiPF_6$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$ and $NaClO_4$.

In addition, the electrolyte layer 700 may include a Cl or F element-containing compound as a metal salt. The electrolyte layer 700 may include one or more metal salts selected from among $LiClO_4$, $LiBF_4$, $LiAsF_6$, $LiPF_6$, LiCl, $LiB_{10}Cl_{10}$, $LiCF_3SO_3$, $LiCF_3CO_2$, $LiAsF_6$, $LiSbF_6$, $LiAlCl_4$, $CF_3SO_3Li$, $(CF_3SO_2)_2NLi$ and $NaClO_4$.

The electrolyte layer 700 may include a curable resin composition that can be cured by ultraviolet irradiation or heat. The curable resin composition may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocuring initiator and/or a thermal curing initiator.

In more detail, the electrolyte layer 700 may include a curable resin composition. The curable resin composition may have photo-curability and/or thermal curability.

The curable resin composition may include an acrylate copolymer.

The acrylate copolymer may be at least one selected from the group consisting of urethane acrylate and epoxy acrylate.

The molecular weight of the urethane acrylate may be about 3000 g/mol to about 50000 g/mol. The molecular weight of the urethane acrylate may be about 5000 g/mol to about 50000 g/mol.

The urethane acrylate may include an ether-based urethane acrylate.

The ether-based urethane acrylate may include a first polyol, a diisocyanate and an acrylate. The ether-based urethane acrylate may be formed by reacting with the polyether diol, the diisocyanate and the acrylate.

The ether-based urethane acrylate may include a first polyol having a molecular weight of about 100 g/mol to

about 1000 g/mol; a first diisocyanate having a molecular weight of about 100 g/mol to about 1000 g/mol; and a first acrylate having a molecular weight of about 50 g/mol to about 500 g/mol.

The first polyol may have a molecular weight of about 100 g/mol to about 1000 g/mol. The first polyol may have a molecular weight of about 200 g/mol to about 1000 g/mol. The first polyol may have a molecular weight of about 200 g/mol to about 700 g/mol.

The first polyol may include polyether diol.

The first polyol may include poly(tetramethylene ether)diol.

The ether-based urethane acrylate may include the first polyol in a content of about 60 mol parts to about 100 mol parts based on 100 mol parts of the first diisocyanate. The ether-based urethane acrylate may include the first polyol in a content of about 65 mol parts to about 95 mol parts based on 100 mol parts of the first diisocyanate. The ether-based urethane acrylate may include the first polyol in a content of about 70 mol parts to about 90 mol parts based on 100 mol parts of the first diisocyanate.

The first diisocyanate may have a molecular weight of about 100 g/mol to about 1000 g/mol.

The first diisocyanate may be one or more selected from the group consisting of isophorone diisocyanate, toluene diisocyanate, hexamethylene diisocyanate and methylene diphenyl diisocyanate.

The first diisocyanate may be an isophorone diisocyanate.

The first diisocyanate may be included in a content of about 30 mol% to about 70 mol% in the ether-based urethane acrylate based on the total mole number of the ether-based urethane acrylate. The diisocyanate may be included in a content of about 40 mol% to about 60 mol% in the ether-based urethane acrylate based on the total mole number of the ether-based urethane acrylate.

The first acrylate may have a molecular weight of about 50 g/mol to about 500 g/mol.

The first acrylate may include a monoacrylate.

The first acrylate may be at least one selected from the group consisting of 2-hydroxyethyl acrylate and 2-hydroxypropyl acrylate methacrylate.

The ether-based urethane acrylate may include the first acrylate in a content of about 20 mol parts to about 40 mol parts based on 100 mol parts of the first diisocyanate. The ether-based urethane acrylate may include the first acrylate in a content of about 23 mol parts to about 37 mol parts based on 100 mol parts of the first diisocyanate. The ether-based urethane acrylate may include the first acrylate in a content of about 25 mol parts to about 35 mol parts based on 100 mol parts of the first diisocyanate.

The ether-based urethane acrylate may have a weight average molecular weight of about 1000 g/mol to about 100000 g/mol. The weight average molecular weight of the ether-based urethane acrylate may be about 2000 g/mol to about 70000 g/mol. The weight average molecular weight of the ether-based urethane acrylate may be about 5000 g/mol to about 50000 g/mol.

The ether-based urethane acrylate may include a second diisocyanate, a second polyol and a second acrylate.

The second diisocyanate may include an aliphatic diisocyanate.

The second diisocyanate may be at least one selected from the group consisting of hexamethylene diisocyanate, toluene diisocyanate, dicyclohexylmethane-4,4'-diisocyanate (H12MDI) and methylene diphenyl diisocyanate.

The second diisocyanate may be included in a content of about 20 mol% to about 60 mol% in the ether-based urethane acrylate based on 100 mol% of the ether-based urethane acrylate. The second diisocyanate may be included in a content of about 30 mol% to about 50 mol% in the ether-based urethane acrylate based on 100 mol% of the ether-based urethane acrylate.

The second polyol may include a polyester diol or a polycaprolactone diol.

A weight average molecular weight of the polycaprolactone diol may be about 100 g/mol to about 1000 g/mol. The weight average molecular weight of the polycaprolactone diol may be about 100 g/mol to about 800 g/mol. The weight average molecular weight of the polycaprolactone diol may be about 200 g/mol to about 800 g/mol.

The second acrylate may be at least one selected from the group consisting of 2-hydroxyethyl acrylate and 2-hydroxypropyl acrylate methacrylate.

A molecular weight of the ether-based urethane acrylate may be about 3000 g/mol to about 50000 g/mol. The molecular weight of the ether-based urethane acrylate may be about 5000 g/mol to about 50000 g/mol.

A viscosity of the urethane acrylate at about 25°C may be about 10000 cPs to about 100000 cPs. A viscosity of the urethane acrylate at about 60°C may be about 1000 cPs to about 8000 cPs.

The urethane acrylate is commercially available. The urethane acrylate may be at least one selected from the group consisting of, for example, Miramer PU210, Miramer PU256, Miramer PU2050, Miramer PU2100, Miramer PU2300C, Miramer PU2560, Miramer PU320, Miramer PU340, Miramer PU3000, Miramer PU3200, Miramer PU3450, Miramer PU5000, Miramer PU610, Miramer MU9500, Miramer MU9800, Miramer SC2154, Miramer SC2404 and Miramer SC2565 among MIWON Co.'s products.

The acrylate copolymer may include an epoxy acrylate.

The epoxy acrylate may be formed by reacting an epoxy compound and acrylate. A molar ratio of the epoxy

compound to the acrylate may be about 1:1.5 to about 1:3.5.

The epoxy compound may be at least one selected from the group consisting of glycerol diglycidyl ether, a bisphenol A epoxy compound, a bisphenol F epoxy compound and a novolac epoxy compound.

The acrylate may be at least one selected from the group consisting of 2-carboxyethyl acrylate, 2-hydroxyethyl acrylate and acrylic acid.

The epoxy acrylate may have a weight average molecular weight of about 200 g/mol to about 3000 g/mol. The epoxy acrylate may have a weight average molecular weight of about 500 g/mol to about 2000 g/mol. The epoxy acrylate may have a weight average molecular weight of about 500 g/mol to about 2000 g/mol.

The epoxy acrylate may have a viscosity of about 100 cPs to about 5000 cPs at about 25°C. The epoxy acrylate may have a viscosity of about 100 cPs to about 5000 cPs at about 25°C. The epoxy acrylate may have a viscosity of about 10000 cPs to about 40000 cPs at about 25°C.

In addition, the epoxy acrylate may have a viscosity of about 3000 cPs to about 8000 cPs at about 40°C.

In addition, the epoxy acrylate may have a viscosity of about 200 cPs to about 6000 cPs at about 60°C.

The epoxy acrylate is commercially available. The epoxy acrylate may be at least one selected from the group consisting of, for example, Miramer PE210, Miramer PE250, Miramer SC6300, Miramer SC6400, Miramer PE110H, Miramer PE230, Miramer PE310, Miramer EA2235, Miramer EA2255, Miramer EA2259 or Miramer EA2280 among MIWON Co.'s products.

The curable resin composition may further include a multifunctional acrylate monomer.

The multifunctional acrylate monomer may include a difunctional acrylate or a trifunctional acrylate.

The multifunctional acrylate monomer may include two or more functional groups. The multifunctional acrylate monomer may be a monomer including two or more functional acrylate groups. The multifunctional acrylate monomer may be an aliphatic compound including three acrylates.

The multifunctional acrylate monomer may be at least one selected from the group consisting of trimethylolpropane triacrylate, trimethylolpropane (ethylene oxide)$_3$ triacrylate (trimethylolpropane (EO)$_3$ triacrylate), trimethylolpropane (ethylene oxide)$_6$ triacrylate (trimethylolpropane (EO)$_6$ triacrylate), trimethylolpropane (ethylene oxide) triacrylate (trimethylolpropane (EO)$_9$ triacrylate), trimethylolpropane (ethylene oxide)$_{15}$ triacrylate (trimethylolpropane (EO)$_{15}$ triacrylate), glycerin (propylene oxide)$_3$ triacrylate (glycerine (PO)$_3$ triacrylate) and pantaerythritol triacrylate.

The multifunctional acrylate monomer may have a molecular weight of about 200 to about 800. The multifunctional acrylate monomer may have a molecular weight of about 200 to about 400.

The multifunctional acrylate monomer may have a viscosity of about 20 cps to about 300 cps at about 25°C.

The multifunctional acrylate monomer may be included in a content of about 5 wt% to about 30 wt% in the curable resin composition based on the total weight of the curable resin composition. The multifunctional acrylate monomer may be included in a content of about 10 wt% to about 25 wt% in the curable resin composition based on the total weight of the curable resin composition. The multifunctional acrylate monomer may be included in a content of about 13 wt% to about 23 wt% in the curable resin composition based on the total weight of the curable resin composition.

The curable resin composition may include a monofunctional acrylate monomer. The monofunctional acrylate monomer may be a monomer including one functional acrylate group. The monofunctional acrylate monomer may be an aromatic compound including one functional acrylate group.

The monofunctional acrylate monomer may be at least one selected from the group consisting of caprolactone acrylate, cyclic trimethylolpropane formal acrylate, phenoxy benzyl acrylate, 3,3,5-trimethyl cyclohexyl acrylate, isobornyl acrylate, o-phenylphenol EO acrylate, 4-tert-butylcyclohexyl acrylate, benzyl acrylate, biphenylmethyl acrylate, lauryl acrylate, isodecyl acrylate, phenol(ethylene oxide) acrylate (phenol(EO) acrylate), phenol(ethylene oxide)$_2$ acrylate (phenol(EO)$_2$ acrylate), phenol(ethylene oxide) acrylate (phenol(EO)$_4$ acrylate) and tetra hydrofurfuryl acrylate.

In addition, the molecular weight of the monofunctional acrylate monomer may be about 150 to about 800. The molecular weight of the monofunctional acrylate monomer may be about 200 to about 400.

In addition, a viscosity of the monofunctional acrylate monomer at about 25°C may be about 10 cps to about 60 cps.

The monofunctional acrylate monomer may be included in a content of about 5 wt% to about 20 wt% in the curable composition based on the weight of the curable composition. The monofunctional acrylate monomer may be included in a content of about 5 wt% to about 10 wt% in the curable composition based on the weight of the curable composition. The monofunctional acrylate monomer may be included in a content of about 10 wt% to about 15 wt% in the curable composition based on the total weight of the curable composition.

The curable composition may include acrylate including a thermosetting functional group. That is, the acrylate including a thermosetting functional group may have thermal both curability and photo-curability.

The thermally curable acrylate may be at least one selected from the group consisting of urethane acrylate including a thermosetting functional group, epoxy acrylate including a thermosetting functional group, ester-based acrylate including a thermosetting functional group and ether-based acrylate including a thermosetting functional group.

The thermally curable acrylate may include a carboxyl group. The thermally curable acrylate may be at least one

of compounds represented by Chemical Formulas 1 to 9 below:

Chemical Formula 1

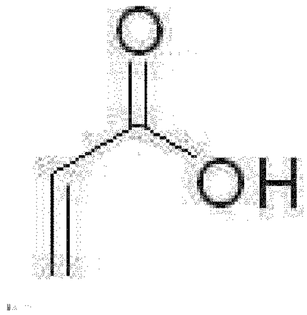

Chemical Formula 2

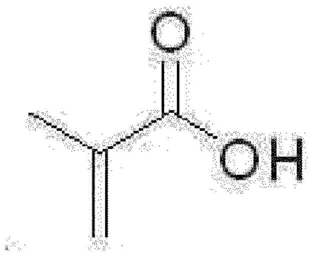

Chemical Formula 3

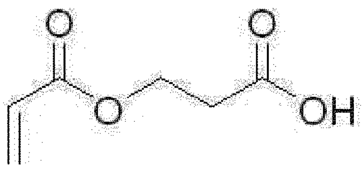

Chemical Formula 4

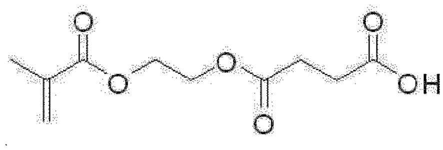

Chemical Formula 5

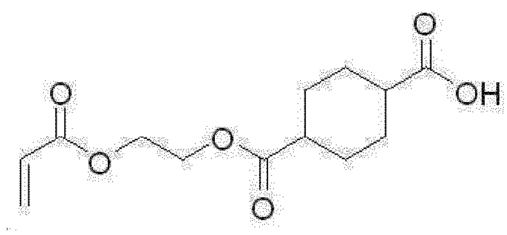

Chemical Formula 6

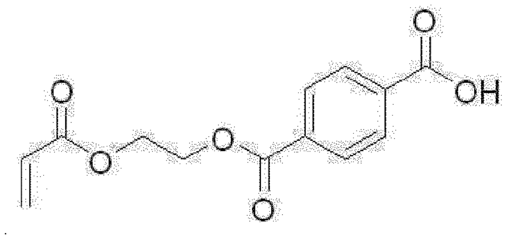

Chemical Formula 7

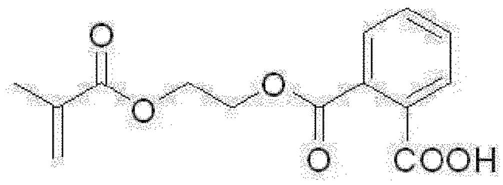

Chemical Formula 8

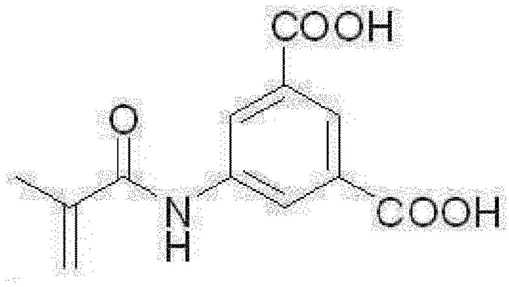

Chemical Formula 9

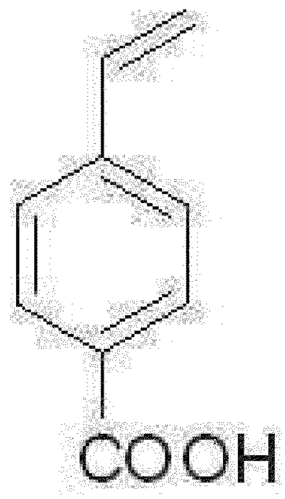

The thermally curable acrylate may be included in a content of about 1 wt% to about 10 wt% in the curable resin composition based on the total weight of the curable resin composition. The thermally curable acrylate may be included in a content of about 0.5 wt% to about 5 wt% in the curable resin composition based on the total weight of the curable resin

composition. The thermally curable acrylate may be included in a content of about 2 wt% to about 8 wt% in the curable resin composition based on the total weight of the curable resin composition.

Since the curable resin composition includes the thermally curable acrylate, a coating layer of the electrolyte composition that is coated with an electrolyte composition including the curable resin composition may be easily cured or semi-cured.

Accordingly, the coating layer of the electrolyte composition may be effectively protected against external physical and chemical impacts.

The curable resin composition may further include a photocurable initiator.

The photoinitiator may be one or more selected from the group consisting of benzophenone-based photoinitiators, thioxanthone-based photoinitiators, $\alpha$-hydroxy ketone-based photoinitiators, ketone-based photoinitiators, phenyl glyoxylate-based photoinitiators and acryl phosphine oxide-based photoinitiators.

The photoinitiator may be included in a content of about 0.1 wt% to about 5 wt% in the curable resin composition based on the total weight of the curable resin composition.

The photocurable resin composition may include a first photoinitiator and second photoinitiator that operate in different wavelength bands.

Specifically, the curable resin composition may include a first photoinitiator operating in a wavelength band of 208 nm to 295 nm; and a second photoinitiator operating in a wavelength band of 320 nm to 395 nm.

An operating wavelength band of the first photoinitiator may be 208 nm to 275 nm, or 208 nm to 245 nm, and an operating wavelength band of the second photoinitiator may be 330 nm to 390 nm, or 340 nm to 385 nm.

As a specific example, the first photoinitiator may generate radicals by UV light having a wavelength band of 208 nm to 295 nm and an amount of 100 $mJ/cm^2$ to 200 $mJ/cm^2$. In addition, the second photoinitiator may be decomposed and generate radicals by UV light having a wavelength band of 320 nm to 395 nm and an amount of 500 $mJ/cm^2$ to 1000 $mJ/cm^2$.

The first photoinitiator may be, for example, a ketone-based photoinitiator, and may have one or more aromatic groups or alicyclic groups. A specific example of the first photoinitiator includes hydroxycyclohexylphenyl ketone.

The second photoinitiator may be, for example, a phosphine-based photoinitiator, and may have one or more aromatic groups. A specific example of the second photoinitiator includes 2,4,6-trimethylbenzoyldiphenylphosphine.

Since the curable resin composition includes the first photoinitiator and the second photoinitiator, a coating layer of the electrolyte composition which is coated with an electrolyte composition including the curable resin composition may be easily cured or semi-cured. That is, ultraviolet rays of a specific wavelength may be used, and the coating layer of the electrolyte composition may be easily cured or semi-cured.

Accordingly, the coating layer of the electrolyte composition may be effectively protected against external physical and chemical impacts.

The electrolyte layer 700 may further include an antioxidant.

The antioxidant may be at least one selected from the group consisting of phenol-based antioxidants, sulfur-based antioxidants, amine-based antioxidants, polyimide-based antioxidants and phosphorus-based antioxidants.

The antioxidant may be included in a content of 0.1 wt% to about 5 wt% in the electrolyte layer 700 based on the total weight of the electrolyte layer 700. The antioxidant may be included in a content of about 0.1 wt% to about 3 wt% in the electrolyte layer 700.

Since the electrolyte layer 700 includes the antioxidant, it may be easily protected from chemical shocks such as external oxygen. Accordingly, the electrolyte layer 700 may have a constant transmittance even if left for a long time.

The thickness of the electrolyte layer 700 may be about 10 $\mu$m to about 200 $\mu$m. The thickness of the electrolyte layer 700 may be about 50 $\mu$m to about 150 $\mu$m. The thickness of the electrolyte layer 700 may be about 30 $\mu$m to about 200 $\mu$m. The thickness of the electrolyte layer 700 may be about 50 $\mu$m to about 200 $\mu$m. The thickness of the electrolyte layer 700 may be about 30 $\mu$m to about 150 $\mu$m.

When the electrochromic element according to an embodiment is subjected to mechanical deformation such as winding, bending or twisting, the electrolyte layer 700 may maintain an appropriate cell gap since the electrolyte layer 700 has the thickness range described above. Accordingly, the electrochromic element according to an embodiment may have uniform optical characteristics overall.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be a total light transmittance, and may be measured using a known haze meter (HM).

The electrochromic element according to the embodiment may be fabricated by the following method. FIGS. 9 to 12 are sectional views illustrating processes of fabricating the electrochromic element according to an embodiment of the present disclosure.

Referring to FIG. 9, a first transparent electrode 300 is formed on a first substrate 100. The first transparent electrode 300 may be formed by a vacuum deposition process. A metal oxide such as indium tin oxide is deposited on the

first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that the layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. The first sol solution including a first electrochromic material, a binder and a solvent may be coated on the layer of the first transparent electrode 300. A first sol solution including a first electrochromic material, an electron-accepting material, a binder and a solvent may be coated on the layer of the first transparent electrode 300.

The first sol solution may include the first discoloration material in the form of particles in a content of about 5 wt% to about 30 wt%. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Referring to FIG. 10, a second transparent electrode 400 is formed on a second substrate 200.

The second transparent electrode 400 may be formed by a vacuum deposition process. A metal oxide such as indium tin oxide may be deposited on the second substrate 200 by a sputtering process, etc., thereby forming the second transparent electrode 400.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the layer of the second transparent electrode 400. The second discoloration layer 600 may be formed by a sol-gel coating process. A second sol solution including a second electrochromic material, a binder and a solvent may be coated on the layer of the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

Referring to FIG. 11, an electrolyte composition for forming an electrolyte layer 700 is formed on the first discoloration layer 500.

As described above, the electrolyte composition may include the solvent, the metal salt and the curable resin composition. In addition, the electrolyte composition may further include an additional additive such as the antioxidant.

The electrolyte composition is coated on the first discoloration layer 500. Accordingly, an electrolyte composition layer is formed on the first discoloration layer 500.

Next, the electrolyte composition layer 701 may be cured or semi-cured.

The electrolyte composition layer may be cured or semi-cured by heat. The electrolyte composition layer may be cured or semi-cured at about 30°C to about 60°C for about 1 minute to about 10 minutes.

The electrolyte composition layer 701 may be cured or semi-cured by light. The electrolyte composition layer may be cured or semi-cured by UV light having a wavelength band of 320 nm to 395 nm and an amount of 500 $mJ/cm^2$ to 1000 $mJ/cm^2$.

Referring to FIG. 12, the second substrate 200, the second transparent electrode 400 and the second discoloration layer 600 are laminated on the electrolyte composition layer. Here, the second discoloration layer 600 is brought into direct contact with the electrolyte composition layer.

Next, the electrolyte composition layer is cured by light, and a first laminate including the first substrate 100, the

first transparent electrode 300 and the first discoloration layer 500 and a second laminate including the second substrate 200, the second transparent electrode 400 and the second discoloration layer 600 are laminated to each other. That is, the first laminate and the second laminate may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, in the description of this embodiment, the light transmittance may mean a total light transmittance.

The light transmittance of the electrochromic element may be about 70% to about 90%. The light transmittance of the electrochromic element may be about 75% to about 88%. The light transmittance of the electrochromic element may be about 78% to about 86%.

The electrochromic element according to an embodiment may have a haze of about 5% or less. The haze of the electrochromic element according to an embodiment may be about 0.1% to about 5%. The haze of the electrochromic element according to an embodiment may be about 0.1% to about 4%. The haze of the electrochromic element according to an embodiment may be about 0.1% to about 3%.

The light transmittance and the haze may be measured according to ASTM D 1003, etc.

The electrochromic element according to an embodiment may be subjected to a winding test.

FIGS. 13 and 14 illustrate a process of conducting a winding test on the electrochromic element according to an embodiment of the present disclosure. FIG. 15 illustrates the plan view of a sample formed by cutting a portion of the electrochromic element according to an embodiment of the present disclosure.

Referring to FIG. 13, one end of the electrochromic element 10 according to an embodiment is fixed to the outer circumference of a first core 11 to perform the winding test of the electrochromic element according to an embodiment.

The electrochromic element according to an embodiment may be machined to undergo the winding test. The electrochromic element according to an embodiment may be cut. The cut electrochromic element may have a planar shape elongated in one direction. The cut electrochromic element may have a rectangular planar shape.

The cut electrochromic element may have a rectangular shape with a length of about 5 m and a width of about 0.5 m. The cut electrochromic element may have a rectangular shape with a length of about 4 m and a width of about 0.5 m. The cut electrochromic element may have a rectangular shape with a length of about 4.5 m and a width of about 0.45 m.

The first core 11 may be a pipe-shaped paper core or a pipe-shaped plastic core. The first core 11 may have a cylindrical shape.

A diameter of the first core 11 may be about 20 cm. The diameter of the first core may be about 25 cm. The diameter of the first core 11 may be about 30 cm. The diameter of the first core 11 may be about 15 cm.

Next, the electrochromic element according to an embodiment is wound around the first core 11 in a state where a constant tension is applied to the electrochromic element 10 according to an embodiment.

A tension when the electrochromic element according to an embodiment is wound on the first core 11 may be about 10 N. The tension when the electrochromic element according to an embodiment is wound on the first core 11 may be about 15 N. The tension when the electrochromic element according to an embodiment is wound on the first core 11 may be about 5 N. The tension when the electrochromic element according to an embodiment is wound on the first core 11 may be about 20 N.

Next, the first wound electrochromic element may be left for about a certain period. The first wound electrochromic element may be left at room temperature and a relative humidity of about 50% for about 24 hours. The first wound electrochromic element may be left at room temperature and a relative humidity of about 50% for about 10 days. The first wound electrochromic element may be left at room temperature and a relative humidity of about 50% for about 15 days. The first wound electrochromic element may be left at room temperature and a relative humidity of about 50% for about 20 days.

The first wound electrochromic element may be left for about at about 85°C and a relative humidity of about 30% for about 500 hours. The first wound electrochromic element may be left for about at about 85°C and a relative humidity of about 30% for about 1000 hours. The first wound electrochromic element may be left for about at about 85°C and a relative humidity of about 30% for about 700 hours.

Next, as shown in FIG. 14, another end of the first wound electrochromic element 10 is fixed to the outer circumference of a second core 12.

The second core 12 may be a pipe-shaped paper core or a pipe-shaped plastic core. The second core 12 may have a cylindrical shape.

The diameter of the second core 12 may be about 20 cm. The diameter of the second core 12 may be about 25 cm. The diameter of the second core 12 may be about 30 cm. The diameter of the second core 12 may be about 15 cm.

Next, in a state where constant tension is applied to the electrochromic element fixed to the second core 12, the electrochromic element according to an embodiment is secondarily wound on the second core 12 while being unwound from the first core 11.

An interval between the center of the first core 11 and the center of the second core 12 may be about 1 m.

A tension when the electrochromic element 10 according to an embodiment is wound on the second core 12 may be about 10 N. The tension when the electrochromic element according to an embodiment is wound on the second core 12 may be about 15 N. The tension when the electrochromic element according to an embodiment is wound on the second core 12 may be about 5 N. The tension when the electrochromic element according to an embodiment is wound on the second core 12 may be about 20 N.

Next, the secondarily wound electrochromic element may be left for about a certain period. The secondarily wound electrochromic element may be left at room temperature and a relative humidity of about 50% for about 24 hours. The secondarily wound electrochromic element may be left at room temperature and a relative humidity of about 50% for about 10 days. The secondarily wound electrochromic element may be left at room temperature and a relative humidity of about 50% for about 15 days. The secondarily wound electrochromic element may be left at room temperature and a relative humidity of about 50% for about 20 days.

The secondarily wound electrochromic element may be left for about at about 85°C and a relative humidity of about 30% for about 500 hours. The secondarily wound electrochromic element may be left for about at about 85°C and a relative humidity of about 30% for about 1000 hours. The secondarily wound electrochromic element may be left for about at about 85°C and a relative humidity of about 30% for about 700 hours.

As described above, the electrochromic element according to an embodiment may be subjected to the winding test.

More specifically, the winding test may be conducted in the following manner.

1) The electrochromic element is cut into pieces with a length of about 4 m and a width of about 0.5 m.
2) One end of the electrochromic element is fixed to the first core 11 with a diameter of 15 cm.
3) The fixed electrochromic element is wound around the first core 11 at a speed of 6 revolutions per minute while maintaining a tension of 10 N.
4) In the state where it is wound on the first core 11, the electrochromic element is left for 24 hours under the conditions of a temperature of 85°C and a relative humidity of about 50%.
5) Another end of the left electrochromic element is fixed to a second core 12 with a diameter of 20 cm.
6) The electrochromic element wound on the first core 11 is wound on the second core 12 at a speed of 6 revolutions per minute in the opposite direction to the direction in which it was wound on the first core 11, while being unwound in a state where a tension of 10 N is maintained.
7) In the state of being wound on the second core 12, the electrochromic element is left for 24 hours under the conditions of a temperature of 85°C and a relative humidity of about 50%, and the winding test is completed.

Next, the electrochromic element that has undergone the winding test may be cut into multiple samples.

Next, referring to FIG. 15, a central region (CR) may be defined in the electrochromic element that has undergone the winding test 10, and measurement regions may be defined for respective locations within the central region (CR).

In the electrochromic element 10 according to an embodiment, the central region (CR) may have a length of about 4 m and a width of about 0.4 m. The central region (CR) may have a length of about 3 m and a width of about 0.4 m. The central region (CR) may have a length of about 3 m and a width of about 0.35 m.

In addition, the size of each of the samples (S) may be about 10 cm × 10 cm. That is, the samples (S) may be obtained by cutting the central region (CR) into squares of about 10 cm × 10 cm.

Alternatively, the samples may be obtained by cutting squares of about 10 cm × 10 cm in the entire region.

Next, driving voltage is applied to the cut samples, and the samples are colored. The driving voltage may be about 1 V to about 5 V. In addition, the driving voltage may be applied to the samples for about 20 seconds to about 2 minutes. A driving voltage of about 1.5 V may be applied to the samples for about 1 minute. The driving voltage may be applied to the samples so that the samples may be sufficiently colored.

In the samples, the driving voltage may be respectively applied to the first transparent electrode 300 and the second transparent electrode 400. In the samples, the driving voltage may be applied to each of the samples in a state where a portion of the first transparent electrode 300 and a portion of the second transparent electrode 400 are opened and electrically connected to the first transparent electrode 300 and the second transparent electrode 400.

The electrochromic element according to an embodiment may have a coloring transmittance deviation after the winding test.

The coloring transmittance deviation may be measured by Measurement Method 6 below:

Measurement Method 6

After the winding test is performed, a coloring transmittance is measured for each of the samples. Here, an average coloring transmittance, a maximum coloring transmittance and a minimum coloring transmittance may be derived from the samples. Here, the coloring transmittance deviation is a value (%) obtained by dividing a difference between the

maximum coloring transmittance and the minimum coloring transmittance by the average coloring transmittance.

After the winding test, the coloring transmittance deviation may be represented by Equation 1 below:

Coloring transmittance deviation = (Maximum coloring transmittance - Minimum coloring transmittance)/Average coloring transmittance    Equation 1

The coloring transmittance deviation after the winding test may be less than about 0.4. The coloring transmittance deviation after the winding test may be less than about 0.35. The coloring transmittance deviation after the winding test may be less than about 0.3. The coloring transmittance deviation after the winding test may be less than about 0.25. The coloring transmittance deviation after the winding test may be less than about 0.2. The coloring transmittance deviation after the winding test may be less than about 0.15. The coloring transmittance deviation after the winding test may be less than about 0.1. The coloring transmittance deviation after the winding test may be less than about 0.07. The coloring transmittance deviation after the winding test may be less than about 0.05. A minimum value of the coloring transmittance deviation after the winding test may be about 0.001.

The average coloring transmittance may be about 5% to about 40%. The average coloring transmittance may be about 10% to about 30%. The average coloring transmittance may be about 10% to about 40%. The average coloring transmittance may be about 10% to about 30%. The average coloring transmittance may be about 10% to about 20%.

The maximum coloring transmittance may be about 8% to about 43%. The maximum coloring transmittance may be about 13% to about 33%. The maximum coloring transmittance may be about 13% to about 43%. The maximum coloring transmittance may be about 13% to about 33%. The maximum coloring transmittance may be about 13% to about 23%.

The minimum coloring transmittance may be about 3% to about 37%. The minimum coloring transmittance may be about 7% to about 27%. The minimum coloring transmittance may be about 7% to about 37%. The minimum coloring transmittance may be about 7% to about 27%. The minimum coloring transmittance may be about 7% to about 17%.

A difference between the maximum coloring transmittance and the average coloring transmittance may be less than about 5%. The difference between the maximum coloring transmittance and the average coloring transmittance may be less than about 3%. The difference between the maximum coloring transmittance and the average coloring transmittance may be less than about 2%.

A difference between the average coloring transmittance and the minimum coloring transmittance may be less than about 5%. The difference between the average coloring transmittance and the minimum coloring transmittance may be less than about 3%. The difference between the average coloring transmittance and the minimum coloring transmittance may be less than about 2%.

Since the electrochromic element according to an embodiment has a coloring transmittance deviation in the above range, and a maximum coloring transmittance, a minimum coloring transmittance, an average discoloring transmittance and a difference therebetween in the above ranges, it may have improved appearance.

After the winding test, the electrochromic element according to an embodiment may have a discoloring transmittance deviation.

After the winding test, the discoloring transmittance deviation may be measured by Measurement Method 7 below:

Measurement Method 7

The colored samples are grounded, or discolored as it is applied with an opposite driving voltage, and a discoloring transmittance is measured for each of the discolored samples.

The opposite driving voltage may be about 1 V to about 5 V. In addition, the opposite driving voltage may be applied to the samples for about 20 seconds to about 2 minutes. An opposite driving voltage of about 1.5 V may be applied to the samples for about 1 minute.

After the winding test, the discoloring transmittance deviation is a value obtained by dividing a difference between the maximum discoloring transmittance and the minimum discoloring transmittance among the discoloring transmittances of the samples by an average discoloring transmittance.

After the winding test, the discoloring transmittance deviation may be represented by Equation 2 below:

Discoloring transmittance deviation = (Maximum discoloring transmittance - Minimum discoloring transmittance)/Average discoloring transmittance    Equation 2

After the winding test, the discoloring transmittance deviation may be less than about 0.2. After the winding, the discoloring transmittance deviation may be less than about 0.15. After the winding, the discoloring transmittance deviation

may be less than about 0.1. After the winding, the discoloring transmittance deviation may be less than about 0.07. After the winding test, the discoloring transmittance deviation may be less than about 0.05. After the winding test, a minimum value of the discoloring transmittance deviation may be about 0.001.

The average discoloring transmittance may be about 40% to about 80%. The average discoloring transmittance may be about 45% to about 80%. The average discoloring transmittance may be about 50% to about 70%. The average discoloring transmittance may be about 50% to about 90%. The average discoloring transmittance may be about 55% to about 80%.

The maximum discoloring transmittance may be about 43% to about 83%. The maximum discoloring transmittance may be about 48% to about 83%. The maximum discoloring transmittance may be about 53% to about 73%. The maximum discoloring transmittance may be about 53% to about 93%. The maximum discoloring transmittance may be about 58% to about 83%.

The minimum discoloring transmittance may be about 37% to about 77%. The minimum discoloring transmittance may be about 42% to about 77%. The minimum discoloring transmittance may be about 47% to about 67%. The minimum discoloring transmittance may be about 47% to about 87%. The minimum discoloring transmittance may be about 52% to about 77%.

A difference between the maximum discoloring transmittance and the average discoloring transmittance may be less than about 5%. The difference between the maximum discoloring transmittance and the average discoloring transmittance may be less than about 3%. The difference between the maximum discoloring transmittance and the average discoloring transmittance may be less than about 2%.

A difference between the average discoloring transmittance and the minimum discoloring transmittance may be less than about 5%. The difference between the average discoloring transmittance and the minimum discoloring transmittance may be less than about 3%. The difference between the average discoloring transmittance and the minimum discoloring transmittance may be less than about 2%.

Since the electrochromic element according to an embodiment has a discoloring transmittance deviation in the above range, and a maximum discoloring transmittance, a minimum discoloring transmittance, an average discoloring transmittance and a difference therebetween in the above ranges, it may have improved appearance.

The electrochromic element according to an embodiment may have a haze deviation after the winding test.

After the winding test, the haze deviation may be measured by Measurement Method 8 below:

Measurement Method 8

In the electrochromic element that has undergone the winding test, the haze of each of the samples is measured.

After the winding test, the haze deviation is a value obtained by dividing a difference between a maximum haze and a minimum haze among the haze of the samples by an average haze.

After the winding test, the haze deviation may be less than about 0.2. After the winding test, the haze deviation may be less than about 0.15. After the winding test, the haze deviation may be less than about 0.1. After the winding test, the haze deviation may be less than about 0.07. After the winding test, the haze deviation may be less than about 0.05. After the winding test, a minimum value of the haze deviation may be about 0.001.

After the winding test, the maximum haze may be less than about 5%. After the winding test, the maximum haze may be less than about 4%. After the winding test, the maximum haze may be less than about 3%.

After the winding test, the minimum haze may be less than about 4.5%. After the winding test, the minimum haze may be less than about 3.5%. After the winding test, the minimum haze may be less than about 2.5%.

After the winding test, the average haze may be less than about 5%. After the winding test, the average haze may be less than about 4%. After the winding test, the average haze may be less than about 3%.

After the winding test, a difference between the maximum haze and the average haze may be less than 1%. After the winding test, the difference between the maximum haze and the average haze may be less than 0.5%.

After the winding test, the difference between the average haze and the minimum haze may be less than 1%. After the winding test, the difference between the average haze and the minimum haze may be less than 0.5%.

Since the electrochromic element according to an embodiment has a haze deviation in the above range, and an average haze, a maximum haze, a minimum haze and a difference therebetween in the above ranges, the electrochromic element according to an embodiment may have improved appearance.

The electrochromic element according to an embodiment may have a driving range and a driving range deviation.

The driving range and the driving range deviation may be measured by Measurement Method 9 below:

Measurement Method 9

In the electrochromic element that has undergone the winding test, the driving range in the samples is a difference between the discoloring transmittance and coloring transmittance in the samples, and the driving range deviation is a value

obtained by dividing a difference between the maximum driving range and the minimum driving range in the samples by an average driving range.

In the electrochromic element according to an embodiment, the driving range deviation after the winding test may be less than about 0.2. After the winding test, the driving range deviation may be less than about 0.15. After the winding test, the driving range deviation may be less than about 0.1. After the winding test, the driving range deviation may be less than about 0.07. After the winding test, the driving range deviation may be less than about 0.05. After the winding test, a minimum value of the driving range deviation may be about 0.001.

The driving range may be derived by Equation 3 below:

Equation 3

$$\text{Driving range} = \text{Discoloring transmittance} - \text{Coloring transmittance}$$

The driving range deviation may be derived by Equation 4 below:

$$\text{Driving range deviation} = (\text{Maximum driving range} - \text{Minimum driving range})/\text{Average driving range} \qquad \text{Equation 4}$$

The average driving range may be about 30% to about 70%. The average driving range may be about 40% to about 60%. The average driving range may be about 42% to about 58%.

The maximum driving range may be about 35% to about 75%. The maximum driving range may be about 45% to about 65%. The maximum driving range may be about 45% to about 61%.

The minimum driving range may be about 25% to about 65%. The minimum driving range may be about 35% to about 55%. The minimum driving range may be about 39% to about 55%.

Since the electrochromic element according to an embodiment has a driving range deviation, an average driving range, a maximum driving range and a minimum driving range in the above ranges, the light incident on the inside may be appropriately controlled according to the external environment.

After the winding test, the electrochromic element according to an embodiment has an appropriate coloring transmittance deviation, an appropriate discoloring transmittance deviation, an appropriate haze deviation, an appropriate driving range deviation, an appropriate maximum coloring transmittance, an appropriate minimum coloring transmittance, an appropriate average coloring transmittance, an appropriate maximum discoloring transmittance, an appropriate minimum discoloring transmittance and an appropriate average discoloring transmittance in the above ranges. That is, the electrochromic element according to an embodiment is flexible while preventing performance degradation due to a certain degree of mechanical deformation such as winding.

Since the first substrate 100 and the second substrate 200 have appropriate mechanical properties, they may be appropriately bent by external force. In addition, since the electrolyte layer 700 has appropriate mechanical properties, it may be easily bent by an external force while simultaneously efficiently maintaining a cell gap.

Accordingly, even if mechanical deformation such as a wound is applied to the electrochromic element according to an embodiment by an external force, the electrochromic element according to an embodiment may have uniform optical properties overall.

Accordingly, the electrochromic element according to an embodiment may have a uniform coloring transmittance, discoloring transmittance and haze overall when restored after an external mechanical deformation is applied thereto.

In particular, the electrolyte layer 700 in the electrochromic element according to an embodiment may have a thickness of about 30 $\mu$m or more. Accordingly, the electrolyte layer 700 of the electrochromic element according to an embodiment may have a buffering function even under external mechanical shock. At the same time, the electrochromic element according to an embodiment may have appropriate flexibility.

Accordingly, the electrochromic element according to an embodiment may minimize changes in appearance due to pressing and/or bending, etc., and may maintain discoloration performance. In addition, since the electrochromic element according to the embodiment has a fast restoration performance, it may have an improved appearance.

In addition, since the electrochromic element according to the embodiment is resistant to mechanical deformation such as winding, it may be easily manufactured by a production process including a winding process such as a roll-to-roll process.

In addition, the electrolyte layer 700 may be formed by a thermal crosslinking process and a photocuring process of the curable resin. Accordingly, the electrolyte layer 700 may have a high crosslinking density.

Accordingly, the electrolyte layer 700 may be strongly bonded to the first discoloration layer 500 and the second discoloration layer 600. Accordingly, the electrochromic element according to the embodiment may have improved peel strength.

In addition, since the electrolyte layer 700 has an improved crosslinking density, the electrochromic element according to an embodiment may prevent leakage of the electrolyte included in the electrolyte layer 700. In addition, since the electrolyte layer 700 has appropriate bonding strength and elasticity even if the electrochromic element according to an embodiment is wound or twisted, a coloring transmittance deviation that may occur due to exfoliation, etc. may be reduced.

FIG. 16 is a sectional view illustrating the cross-section of an electrochromic element according to an embodiment of the present disclosure.

Referring to FIG. 16, the electrochromic element according to an embodiment includes a first laminate 11 and a second laminate 12. The second laminate 12 is disposed on the first laminate 11. The second laminate 12 is laminated on the first laminate 11.

The first laminate 11 includes a first substrate 100, a first transparent electrode 300, a first discoloration layer 500 and an electrolyte layer 700. The second laminate 12 includes a second substrate 200, a second transparent electrode 400 and a second discoloration layer 600.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200. Together with the second substrate 200, the first substrate 100 may protect the first transparent electrode 300, the first discoloration layer 500, the second discoloration layer 600, the second transparent electrode 400 and the electrolyte layer 700 from external physical impact and chemical impact.

The second substrate 200 faces the first substrate 100. The second substrate 200 is disposed on the first substrate 100. One end of the second substrate 200 may be disposed to be misaligned with one end of the first substrate 100. The other end of the second substrate 200 may be disposed to be misaligned with the other end of the first substrate 100.

Together with the first substrate 100, the second substrate 200 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the second substrate 200 and the first substrate 100. Together with the first substrate 100, the second substrate 200 may protect the first transparent electrode 300, the first discoloration layer 500, the second discoloration layer 600, the second transparent electrode 400 and the electrolyte layer 700 from external physical impact and chemical impact.

The first transparent electrode 300 is disposed on the first substrate 100. The first transparent electrode 300 may be deposited on the first substrate 100. In addition, a hard coating layer may be further included between the first transparent electrode 300 and the first substrate 100.

The second transparent electrode 400 is disposed under the second substrate 200. The second transparent electrode 400 may be deposited on the second substrate 200. In addition, a hard coating layer may be further included between the second transparent electrode 400 and the second substrate 200.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may directly access the first transparent electrode 300. In addition, the first discoloration layer 500 is electrically connected to the electrolyte layer 700. The first discoloration layer 500 may be electrically connected to the electrolyte layer 700.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may directly access the second transparent electrode 400. In addition, the second discoloration layer 600 is electrically connected to the electrolyte layer 700. The second discoloration layer 600 may be electrically connected to the electrolyte layer 700.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include cations involved in an electrochromic reaction. The cations may include metal ions. The metal ions may be at least one selected from the group consisting of lithium ions ($Li^+$), sodium ions ($Na^+$) and potassium ions ($K^+$). The cations may be rubidium ions ($Rb^+$) or cesium ions ($Cs^+$).

The electrolyte layer 700 includes a solvent. The solvent is a solvent having low permeability.

When the solvent contacts the first substrate 100 and/or the second substrate 200, it may barely penetrate the interior of the first substrate 100 and/or the second substrate 200.

A molecular weight of the solvent may be about 100 to about 1000. The molecular weight of the solvent may be about 100 to about 800. The molecular weight of the solvent may be about 500 to about 1000.

The melting point of the solvent may be about 25°C to about 98°C. The melting point of the solvent may be about -5 to about 10°C.

The boiling point of the solvent may be higher than about 200°C. The boiling point of the solvent may be about 200°C to about 300°C.

The relative polarity of the solvent may be about 0.3 to about 0.5 with respect to water 1.

The viscosity of the solvent may be about 10 cP to about 100 cP at 25°C.

The viscosity of the solvent may be about 1500 cP to about 2500 cP at about 91°C.

The viscosity of the solvent may be about 5cP to about 20 cP at about 20°C.

Since the solvent has the properties described above, it may not cause damage to the first substrate 100 and/or the second substrate 200 Accordingly, the electrochromic element according to an embodiment may have improved optical durability.

The solvent may be at least one selected from the group consisting of acetamide, adiponitrile, sulfolane and polyethylene glycol.

The electrolyte layer 700 may include a metal salt. The metal salt may be at least one selected from the group consisting of $LiClO_4$, $LiBF_4$, $LiAsF_6$, $LiPF_6$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$ and $NaClO_4$.

In addition, the electrolyte layer 700 may include a Cl or F element-containing compound as a metal salt. The electrolyte layer 700 may include one or more metal salts selected from among $LiClO_4$, $LiBF_4$, $LiAsF_6$, $LiPF_6$, LiCl, $LiB_{10}Cl_{10}$, $LiCF_3SO_3$, $LiCF_3CO_2$, $LiAsF_6$, $LiSbF_6$, $LiAlCl_4$, $CF_3SO_3Li$, $(CF_3SO_2)_2NLi$ and $NaClO_4$.

The electrolyte layer 700 may include a curable resin composition that can be cured by ultraviolet irradiation or heat. The curable resin composition may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocuring initiator and/or a thermal curing initiator.

In more detail, the electrolyte layer 700 may include a curable resin composition. The curable resin composition may have photo-curability and/or thermal curability.

The curable resin composition may include an acrylate copolymer.

The acrylate copolymer may be at least one selected from the group consisting of urethane acrylate and epoxy acrylate.

The molecular weight of the urethane acrylate may be about 3000 g/mol to about 50000 g/mol. The molecular weight of the urethane acrylate may be about 5000 g/mol to about 50000 g/mol.

The urethane acrylate may include an ether-based urethane acrylate.

The ether-based urethane acrylate may include a first polyol, diisocyanate and acrylate. The ether-based urethane acrylate may be formed by reacting the polyether diol, the diisocyanate and the acrylate.

The ether-based urethane acrylate may include a first polyol having a molecular weight of about 100 g/mol to about 1000 g/mol; a first diisocyanate having a molecular weight of about 100 g/mol to about 1000 g/mol; and a first acrylate having a molecular weight of about 50 g/mol to about 500 g/mol.

The first polyol may have a molecular weight of about 100 g/mol to about 1000 g/mol. The first polyol may have a molecular weight of about 200 g/mol to about 1000 g/mol. The first polyol may have a molecular weight of about 200 g/mol to about 700 g/mol.

The first polyol may include polyether diol.

The first polyol may include poly(tetramethylene ether)diol.

The ether-based urethane acrylate may include the first polyol in a content of about 60 mol parts to about 100 mol parts based on 100 mol parts of the first diisocyanate. The ether-based urethane acrylate may include the first polyol in a content of about 65 mol parts to about 95 mol parts based on 100 mol parts of the first diisocyanate. The ether-based urethane acrylate may include the first polyol in a content of about 70 mol parts to about 90 mol parts based on 100 mol parts of the first diisocyanate.

The first diisocyanate may have a molecular weight of about 100 g/mol to about 1000 g/mol.

The first diisocyanate may be one or more selected from the group consisting of isophorone diisocyanate, toluene diisocyanate, hexamethylene diisocyanate and methylene diphenyl diisocyanate.

The first diisocyanate may be isophorone diisocyanate.

The first diisocyanate may be included in a content of about 30 mol% to about 70 mol% in the ether-based urethane acrylate based on the total mole number of the ether-based urethane acrylate. The diisocyanate may be included

in a content of about 40 mol% to about 60 mol% in the ether-based urethane acrylate based on the total mole number of the ether-based urethane acrylate.

The first acrylate may have a molecular weight of about 50 g/mol to about 500 g/mol.

The first acrylate may include a monoacrylate.

The first acrylate may be at least one selected from the group consisting of 2-hydroxyethyl acrylate and 2-hydroxypropyl acrylate methacrylate.

The ether-based urethane acrylate may include the first acrylate in a content of about 20 mol parts to about 40 mol parts based on 100 mol parts of the first diisocyanate. The ether-based urethane acrylate may include the first acrylate in a content of about 23 mol parts to about 37 mol parts based on 100 mol parts of the first diisocyanate. The ether-based urethane acrylate may include the first acrylate in a content of about 25 mol parts to about 35 mol parts based on 100 mol parts of the first diisocyanate.

The weight average molecular weight of the ether-based urethane acrylate may be about 1000 g/mol to about 100000 g/mol. The weight average molecular weight of the ether-based urethane acrylate may be about 2000 g/mol to about 70000 g/mol. The weight average molecular weight of the ether-based urethane acrylate may be about 5000 g/mol to about 50000 g/mol.

The ether-based urethane acrylate may include a second diisocyanate, a second polyol and a second acrylate.

The second diisocyanate may include aliphatic diisocyanate.

The second diisocyanate may be at least one selected from the group consisting of hexamethylene diisocyanate, toluene diisocyanate, dicyclohexylmethane-4,4'-diisocyanate (H12MDI) and methylene diphenyl diisocyanate.

The second diisocyanate may be included in a content of about 20 mol% to about 60 mol% in the ether-based urethane acrylate based on 100 mol% of the ether-based urethane acrylate. The second diisocyanate may be included in a content of about 30 mol% to about 50 mol% in the ether-based urethane acrylate based on 100 mol% of the ether-based urethane acrylate.

The second polyol may include polyester diol or polycaprolactone diol.

The weight average molecular weight of the polycaprolactone diol may be about 100 g/mol to about 1000 g/mol. The weight average molecular weight of the polycaprolactone diol may be about 100 g/mol to about 800 g/mol. The weight average molecular weight of the polycaprolactone diol may be about 200 g/mol to about 800 g/mol.

The second acrylate may be at least one selected from the group consisting of 2-hydroxyethyl acrylate and 2-hydroxypropyl acrylate methacrylate.

The molecular weight of the ether-based urethane acrylate may be about 3000 g/mol to about 50000 g/mol. The molecular weight of the ether-based urethane acrylate may be about 5000 g/mol to about 50000 g/mol.

The viscosity of the urethane acrylate at about 25°C may be about 10000 cPs to about 100000 cPs. The viscosity of the urethane acrylate at about 60°C may be about 1000 cPs to about 8000 cPs.

The urethane acrylate is commercially available. The urethane acrylate may be at least one selected from the group consisting of, for example, Miramer PU210, Miramer PU256, Miramer PU2050, Miramer PU2100, Miramer PU2300C, Miramer PU2560, Miramer PU320, Miramer PU340, Miramer PU3000, Miramer PU3200, Miramer PU3450, Miramer PU5000, Miramer PU610, Miramer MU9500, Miramer MU9800, Miramer SC2154, Miramer SC2404 and Miramer SC2565 among MIWON Co.'s products.

The acrylate copolymer may include epoxy acrylate.

The epoxy acrylate may be formed by reacting an epoxy compound with acrylate. A molar ratio of the epoxy compound to the acrylate may be about 1:1.5 to about 1:3.5.

The epoxy compound may be at least one selected from the group consisting of glycerol diglycidyl ether, a bisphenol A epoxy compound, a bisphenol F epoxy compound and a novolac epoxy compound.

The acrylate may be at least one selected from the group consisting of 2-carboxyethyl acrylate, 2-hydroxyethyl acrylate and acrylic acid.

The epoxy acrylate may have a weight average molecular weight of about 200 g/mol to about 3000 g/mol. The epoxy acrylate may have a weight average molecular weight of about 500 g/mol to about 2000 g/mol. The epoxy acrylate may have a weight average molecular weight of about 500 g/mol to about 2000 g/mol.

The epoxy acrylate may have a viscosity of about 100 cPs to about 5000 cPs at about 25°C. The epoxy acrylate may have a viscosity of about 100 cPs to about 5000 cPs at about 25°C. The epoxy acrylate may have a viscosity of about 10000 cPs to about 40000 cPs at about 25°C.

In addition, the epoxy acrylate may have a viscosity of about 3000 cPs to about 8000 cPs at about 40°C.

In addition, the epoxy acrylate may have a viscosity of about 200 cPs to about 6000 cPs at about 60°C.

The epoxy acrylate is commercially available. The epoxy acrylate may be at least one selected from the group consisting of, for example, Miramer PE210, Miramer PE250, Miramer SC6300, Miramer SC6400, Miramer PE110H, Miramer PE230, Miramer PE310, Miramer EA2235, Miramer EA2255, Miramer EA2259 or Miramer EA2280 among MIWON Co.'s products.

The curable resin composition may further include a multifunctional acrylate monomer.

The multifunctional acrylate monomer may include a difunctional acrylate or a trifunctional acrylate.

The multifunctional acrylate monomer may include two or more functional groups. The multifunctional acrylate monomer may be a monomer including two or more acrylate functional groups. The multifunctional acrylate monomer may be an aliphatic compound including three acrylates.

The multifunctional acrylate monomer may be at least one selected from the group consisting of trimethylolpropane triacrylate, trimethylolpropane (ethylene oxide)$_3$ triacrylate (trimethylolpropane (EO)$_3$ triacrylate), trimethylolpropane (ethylene oxide)$_6$ triacrylate (trimethylolpropane (EO)$_6$ triacrylate), trimethylolpropane (ethylene oxide) triacrylate (trimethylolpropane (EO)$_9$ triacrylate), trimethylolpropane (ethylene oxide)$_{15}$ triacrylate (trimethylolpropane (EO)$_{15}$ triacrylate), glycerin (propylene oxide)$_3$ triacrylate (glycerine (PO)$_3$ triacrylate) and pantaerythritol triacrylate.

The multifunctional acrylate monomer may have a molecular weight of about 200 to about 800. The multifunctional acrylate monomer may have a molecular weight of about 200 to about 400.

The multifunctional acrylate monomer may have a viscosity of about 20 cps to about 300 cps at about 25°C.

The multifunctional acrylate monomer may be included in a content of about 5 wt% to about 30 wt% in the curable resin composition based on the total weight of the curable resin composition. The multifunctional acrylate monomer may be included in a content of about 10 wt% to about 25 wt% in the curable resin composition based on the total weight of the curable resin composition. The multifunctional acrylate monomer may be included in a content of about 13 wt% to about 23 wt% in the curable resin composition based on the total weight of the curable resin composition.

The curable resin composition may include a monofunctional acrylate monomer. The monofunctional acrylate monomer may be a monomer including one functional acrylate group. The monofunctional acrylate monomer may be an aromatic compound including one functional acrylate group.

The monofunctional acrylate monomer may be at least one selected from the group consisting of caprolactone acrylate, cyclic trimethylolpropane formal acrylate, phenoxy benzyl acrylate, 3,3,5-trimethyl cyclohexyl acrylate, isobornyl acrylate, o-phenylphenol EO acrylate, 4-tert-butylcyclohexyl acrylate, benzyl acrylate, biphenylmethyl acrylate, lauryl acrylate, isodecyl acrylate, phenol(ethylene oxide) acrylate (phenol(EO) acrylate), phenol(ethylene oxide)$_2$ acrylate(phenol(EO)$_2$ acrylate), phenol(ethylene oxide)$_4$ acrylate(phenol(EO)$_4$ acrylate) and tetra hydrofurfuryl acrylate.

In addition, the molecular weight of the monofunctional acrylate monomer may be about 150 to about 800. The molecular weight of the monofunctional acrylate monomer may be about 200 to about 400.

In addition, a viscosity of the monofunctional acrylate monomer at about 25°C may be about 10 cps to about 60 cps.

The monofunctional acrylate monomer may be included in a content of about 5 wt% to about 20 wt% in the curable composition based on the weight of the curable composition. The monofunctional acrylate monomer may be included in a content of about 5 wt% to about 10 wt% in the curable composition based on the weight of the curable composition. The monofunctional acrylate monomer may be included in a content of about 10 wt% to about 15 wt% in the curable composition based on the total weight of the curable composition.

The curable composition may include acrylate including a thermosetting functional group. That is, the acrylate including a thermosetting functional group may simultaneously have thermal curability and photo-curability.

The thermally curable acrylate may be at least one selected from the group consisting of urethane acrylate including a thermosetting functional group, epoxy acrylate including a thermosetting functional group, ester-based acrylate including a thermosetting functional group and ether-based acrylate including a thermosetting functional group.

The thermally curable acrylate may include a carboxyl group. The thermally curable acrylate may be at least one of the compounds represented by Chemical Formulas 1 to 9 described above.

The thermally curable acrylate may be included in a content of about 1 wt% to about 10 wt% in the curable resin composition based on the total weight of the curable resin composition. The thermally curable acrylate may be included in a content of about 0.5 wt% to about 5 wt% in the curable resin composition based on the total weight of the curable resin composition. The thermally curable acrylate may be included in a content of about 2 wt% to about 8 wt% in the curable resin composition based on the total weight of the curable resin composition.

Since the curable resin composition includes the thermally curable acrylate, a coating layer of the electrolyte composition that is coated with an electrolyte composition including the curable resin composition may be easily cured or semi-cured.

Accordingly, the coating layer of the electrolyte composition may be effectively protected against external physical and chemical impacts.

The curable resin composition may further include a photocurable initiator.

The photoinitiator may be one or more selected from the group consisting of benzophenone-based photoinitiators, thioxanthone-based photoinitiators, α-hydroxy ketone-based photoinitiators, ketone-based photoinitiators, phenyl glyoxylate-based photoinitiators and acryl phosphine oxide-based photoinitiators.

The photoinitiator may be included in a content of about 0.1 wt% to about 5 wt% in the curable resin composition based on the total weight of the curable resin composition.

The photocurable resin composition may include a first photoinitiator and second photoinitiator that operate in

different wavelength bands.

Specifically, the curable resin composition may include a first photoinitiator operating in a wavelength band of 208 nm to 295 nm; and a second photoinitiator operating in a wavelength band of 320 nm to 395 nm.

An operating wavelength band of the first photoinitiator may be 208 nm to 275 nm, or 208 nm to 245 nm, and an operating wavelength band of the second photoinitiator may be 330 nm to 390 nm, or 340 nm to 385 nm.

As a specific example, the first photoinitiator may generate radicals by UV light having a wavelength band of 208 nm to 295 nm and an amount of 100 $mJ/cm^2$ to 200 $mJ/cm^2$. In addition, the second photoinitiator may be decomposed and generate radicals by UV light having a wavelength band of 320 nm to 395 nm and an amount of 500 $mJ/cm^2$ to 1000 $mJ/cm^2$.

The first photoinitiator may be, for example, a ketone-based photoinitiator, and may have one or more aromatic groups or alicyclic groups. A specific example of the first photoinitiator includes hydroxycyclohexylphenyl ketone.

The second photoinitiator may be, for example, a phosphine-based photoinitiator, and may have one or more aromatic groups. A specific example of the second photoinitiator includes 2,4,6-trimethylbenzoyldiphenylphosphine.

Since the curable resin composition includes the first photoinitiator and the second photoinitiator, a coating layer of the electrolyte composition which is coated with an electrolyte composition including the curable resin composition may be easily cured or semi-cured. That is, ultraviolet rays of a specific wavelength may be used, and the coating layer of the electrolyte composition may be easily cured or semi-cured.

Accordingly, the coating layer of the electrolyte composition may be effectively protected against external physical and chemical impacts.

The electrolyte layer 700 may further include an antioxidant.

The antioxidant may be at least one selected from the group consisting of phenol-based antioxidants, sulfur-based antioxidants, amine-based antioxidants, polyimide-based antioxidants and phosphorus-based antioxidants.

The antioxidant may be included in a content of 0.1 wt% to about 5 wt% in the electrolyte layer 700 based on the total weight of the electrolyte layer 700. The antioxidant may be included in a content of about 0.1 wt% to about 3 wt% in the electrolyte layer 700.

Since the electrolyte layer 700 includes the antioxidant, it may be easily protected from chemical shocks such as external oxygen. Accordingly, the electrolyte layer 700 may have a constant transmittance even if left for a long time.

The thickness of the electrolyte layer 700 may be about 10 $\mu$m to about 200 $\mu$m. The thickness of the electrolyte layer 700 may be about 50 $\mu$m to about 150 $\mu$m.

The electrolyte layer 700 may have a transmittance in a range of 60% to 95%. Specifically, the electrolyte layer 700 may have a transmittance of 60% to 95% for visible light in a wavelength range of 380 nm to 780 nm, more specifically in a wavelength of 400 nm or a wavelength of 550 nm. The transmittance may be measured using a known haze meter (HM).

The electrochromic element according to the embodiment may be fabricated by the following method. FIGS. 17 to 20 are sectional views illustrating processes of fabricating the electrochromic element according to the embodiment of the present disclosure.

Referring to FIG. 17, a first transparent electrode 300 is formed on a first substrate 100. The first transparent electrode 300 may be formed by a vacuum deposition process. A metal oxide such as indium tin oxide is deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that the layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. The first sol solution including a first electrochromic material, a binder and a solvent may be coated on the layer of the first transparent electrode 300. A first sol solution including a first electrochromic material, an electron-accepting material, a binder and a solvent may be coated on the layer of the first transparent electrode 300.

The first sol solution may include the first discoloration material in the form of particles in a content of about 5 wt% to about 30 wt%. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether,

diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Referring to FIG. 18, an electrolyte composition for forming an electrolyte layer 700 is coated on the first discoloration layer 500. Accordingly, an electrolyte composition layer 701 is formed on the first discoloration layer 500.

As described above, the electrolyte composition may include the solvent, the metal salt and the curable resin composition. In addition, the electrolyte composition may further include an additional additive such as the antioxidant.

Next, a protective layer 900 is formed on the electrolyte composition layer 701. The protective layer 900 may be a polymer film including a release layer. The protective layer 900 may be a polyethylene terephthalate film including the release layer. The protective layer 900 may protect the electrolyte composition layer 701. In addition, since the protective layer 900 includes the release layer, the protective layer 900 may be easily removed when the electrolyte composition layer 701 is laminated on another layer.

Next, the electrolyte composition layer 701 may be cured or semi-cured.

The electrolyte composition layer 701 may be cured or semi-cured by heat. The electrolyte composition layer 701 may be cured or semi-cured for about 30°C to at about 60°C, about 1 minute to about 10 minutes.

The electrolyte composition layer 701 may be cured or semi-cured by light. The electrolyte composition layer 701 may be cured or semi-cured by UV light having a wavelength band of 320 nm to 395 nm and an amount of an amount of 500 $mJ/cm^2$ to 1000 $mJ/cm^2$.

Accordingly, a first laminate 11 including the first substrate 100, the first transparent electrode 300, the first discoloration layer 500 and the electrolyte composition layer 701 may be formed. The first laminate 11 may be a structure for producing the electrochromic element according to an embodiment. In addition, the protective layer 900 may be disposed on the first laminate 11. The protective layer 900 may cover the upper surface of the electrolyte composition layer 701.

Referring to FIG. 19, a second transparent electrode 400 is formed on a second substrate 200.

The second transparent electrode 400 may be formed by a vacuum deposition process. A conductive metal oxide such as indium tin oxide is deposited on the second substrate 200 by a sputtering process, etc., so that the second transparent electrode 400 may be formed.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the second transparent electrode 400. The second discoloration layer 600 may be formed by a sol-gel coating process. A second sol solution including a second electrochromic material, a binder and a solvent may be coated on the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

Accordingly, a second laminate 12 including the second substrate 200, the second transparent electrode 400 and the second discoloration layer 600 is formed. The second laminate 12 may be a structure for forming the electrochromic element according to an embodiment. In addition, a release liner film for protecting the second discoloration layer 600 may be further disposed on the second discoloration layer 600.

Prior to the lamination process described below, the first laminate 11 may be left for about 60 days or more. For example, the first laminate 11 may be transported for about 60 days or more. The first laminate 11 may be transported for about 90 days or more. The first laminate 11 may be transported for about 120 days or more.

The first laminate 11 may be stored or transported for the above period in a rolled state. In addition, the first laminate 11 may be stored or transported at room temperature and a humidity state of about 30% to about 60% for the above period or longer.

In addition, prior to the lamination process described below, the second laminate 12 may be left for about 60 days or more. For example, the second laminate 12 may be transported for about 60 days or more. The second laminate 12 may be transported for about 90 days or more. The second laminate 12 may be transported for about 120 days or more.

The second laminate 12 may be stored or transported for the above period in a rolled state. In addition, the second laminate 12 may be stored or transported at room temperature and a humidity state of about 30% to about 60% for the above period.

Referring to FIG. 20, the second substrate 200, the second transparent electrode 400 and the second discoloration layer 600 are laminated on the electrolyte composition layer 701. Here, the second discoloration layer 600 is brought into direct contact with the electrolyte composition layer 701. In addition, the protective layer 900 is removed, and the second discoloration layer 600 is laminated on the electrolyte composition layer 701.

The lamination process may be performed after the above period has elapsed.

Next, the electrolyte composition layer 701 is cured by light, and a first laminate 11 including the first substrate 100, the first transparent electrode 300 and the first discoloration layer 500 and a second laminate 12 including the second substrate 200, the second transparent electrode 400 and the second discoloration layer 600 are laminated to each other. That is, the first laminate 11 and the second laminate 12 may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 70% to about 90%. The light transmittance of the electrochromic element may be about 75% to about 88%. The light transmittance of the electrochromic element may be about 78% to about 86%. The light transmittance of the electrochromic element may be about 65% to about 80%.

The electrochromic element according to an embodiment may have a haze of about 5% or less. The haze of the electrochromic element according to an embodiment may be about 0.1% to about 5%. The haze of the electrochromic element according to an embodiment may be about 0.1% to about 4%. The haze of the electrochromic element according to an embodiment may be about 0.1% to about 3%.

The haze of the electrochromic element according to an embodiment may be increased.

The haze increase may be a difference in hazes before and after the 1000-hour standing test below.

The 1000-hour standing test may be performed as follows.

FIGS. 21 and 22 illustrate a process of conducting a 1000-hour standing test on the electrochromic element according to an embodiment of the present disclosure.

Referring to FIG. 21, to conduct a 1000-hour standing test on the electrochromic element according to an embodiment, one end of the electrochromic element 10 according to an embodiment is fixed to the outer circumference of a first core 15.

For the 1000-hour standing test, the electrochromic element according to an embodiment may be machined. The electrochromic element according to an embodiment may be cut. The cut electrochromic element may have a planar shape elongated in one direction. The cut electrochromic element may have a rectangular planar shape.

The cut electrochromic element may have a rectangular shape with a length of about 5 m and a width of about 0.5 m. The cut electrochromic element may have a rectangular shape with a length of about 4 m and a width of about 0.5 m. The cut electrochromic element may have a rectangular shape with a length of about 4.5 m and a width of about 0.45 m.

The first core 15 may be a pipe-shaped paper core or a pipe-shaped plastic core. The first core 15 may have a cylindrical shape.

The diameter of the first core 15 may be about 20 cm. The diameter of the first core may be about 25 cm. The diameter of the first core 15 may be about 30 cm. The diameter of the first core 15 may be about 15 cm.

Next, the electrochromic element according to an embodiment is wound on the first core 15 in a state where a constant tension is applied to the electrochromic element according to an embodiment.

When the electrochromic element according to an embodiment is wound on the first core 15, the tension may be about 10 N. When the electrochromic element according to an embodiment is wound on the first core 15, the tension may be about 15 N. When the electrochromic element according to an embodiment is wound on the first core 15, the tension may be about 5 N. When the electrochromic element according to an embodiment is wound on the first core 15, the tension may be about 20 N.

Next, the first wound electrochromic element may be left for about a certain period. The first wound electrochromic element may be left at room temperature and a relative humidity of about 50% for about 500.

The first wound electrochromic element may be left for about at about 85°C and a relative humidity of about 30% for about 500 hours.

Next, as shown in FIG. 22, another end of the first wound electrochromic element 10 is fixed to the outer circumference of a second core 16.

The second core 16 may be a pipe-shaped paper core or a pipe-shaped plastic core. The second core 16 may have a cylindrical shape.

The diameter of the second core 16 may be about 20 cm. The diameter of the second core 16 may be about 25 cm. The diameter of the second core 16 may be about 30 cm. The diameter of the second core 16 may be about 15 cm.

Next, in a state where a constant tension is applied to the electrochromic element fixed to the second core 16, the electrochromic element according to an embodiment is secondarily wound on the second core 16 while being unwound from the first core 15.

An interval between the center of the first core 15 and the center of the second core 16 may be about 1 m.

The tension when the electrochromic element according to an embodiment is wound on the second core 16 may be about 10 N. The tension when the electrochromic element according to an embodiment is wound on the second core 16 may be about 15 N. The tension when the electrochromic element according to an embodiment is wound on the second core 16 may be about 5 N. The tension when the electrochromic element according to an embodiment is wound on the second core 16 may be about 20 N.

Next, the secondarily wound electrochromic element may be left for about a certain period. The secondarily wound electrochromic element may be left at room temperature and a relative humidity of about 50% for about 24 hours. The secondarily wound electrochromic element may be left at room temperature and a relative humidity of about 50% for about 10 days. The secondarily wound electrochromic element may be left at room temperature and a relative humidity of about 50% for about 15 days. The secondarily wound electrochromic element may be left at room temperature and a relative humidity of about 50% for about 20 days.

The secondarily wound electrochromic element may be left for about at about 85°C and a relative humidity of about 30% for about 500 hours.

As described above, the electrochromic element according to an embodiment may be subjected to the 1000-hour standing test.

More specifically, the 1000-hour standing test may be performed by the following method.

1) The electrochromic element is cut into pieces with a length of about 4 m and a width of about 0.5 m.
2) One end of the electrochromic element is fixed to the first core 15 with a diameter of 20 cm.
3) The fixed electrochromic element is wound around the first core 15 at a speed of 6 revolutions per minute while maintaining a tension of 10 N.
4) In the state where it is wound on the first core 15, the electrochromic element is left for 500 hours under the conditions of a temperature of 85°C and a relative humidity of about 30%.
5) Another end of the left electrochromic element is fixed to a second core 16 with a diameter of 20 cm.
6) The electrochromic element wound on the first core 15 is wound on the second core 16 at a speed of 6 revolutions per minute in the opposite direction to the direction in which it was wound on the first core 15, while being unwound in a state where a tension of 10 N is maintained.
7) In the state of being wound on the second core 16, the electrochromic element is left for 500 hours under the conditions of a temperature of 85°C and a relative humidity of about 30%, and the 1000-hour standing test is completed.

The haze of the electrochromic element according to an embodiment may be increased. The haze increase means a difference between a second haze after the 1000-hour standing test and a first haze before the 1000-hour standing test. When the electrochromic element according to an embodiment is left for 1000 hours under the conditions described above, the second haze may be the haze of the electrochromic element according to an embodiment.

The haze increase may be less than about 8%. The haze increase may be less than about 7%. The haze increase may be less than 6%. The haze increase may be less than about 5%. The haze increase may be less than about 4%. The haze increase may be less than about 3%.

In addition, the transmittance of the electrochromic element according to an embodiment may be decreased. The transmittance decrease means a difference between a first transmittance before the 1000-hour standing test and a second transmittance after the 1000-hour standing test. The second transmittance may be a transmittance of the electrochromic element according to an embodiment when the electrochromic element according to an embodiment is left for 1000 hours under the conditions described above.

The transmittance decrease may be less than about 7%. The transmittance decrease may be less than about 5%. The transmittance decrease may be less than about 4%. The transmittance decrease may be less than about 3%.

Since the electrochromic element according to an embodiment has a haze increase, transmittance decrease and bonding strength decrease in the above ranges, it may have improved durability and long-term storage stability.

The electrochromic element according to an embodiment may have spherical power.

The spherical power of the electrochromic element according to an embodiment may be 0 to 0.09 D. The spherical power of the electrochromic element according to an embodiment may be 0.001 D to 0.08 D. The spherical power of the electrochromic element according to an embodiment may be 0.001 D to 0.07 D. The spherical power of the electrochromic element according to an embodiment may be 0.001 D to 0.06 D.

The spherical power of the electrochromic element according to an embodiment may increase.

In the electrochromic element according to an embodiment, the spherical power increase means a difference between a second spherical power after the 1000-hour standing test and a first spherical power before the 1000-hour standing test.

The spherical power increase may be less than about 0.1 D. The spherical power increase may be less than about 0.09 D. The spherical power increase may be less than 0.08 D. The spherical power increase may be less than about 0.07

D.

The electrochromic element according to an embodiment may have an astigmatic powder.

The astigmatic powder of the electrochromic element according to an embodiment may be 0.001 D to 0.3 D. The astigmatic powder of the electrochromic element according to an embodiment may be 0.001 D to 0.25 D. The astigmatic powder of the electrochromic element according to an embodiment may be 0.001 D to 0.2 D. The astigmatic powder of the electrochromic element according to an embodiment may be 0.001 D to 0.15 D.

The astigmatic powder of the electrochromic element according to an embodiment may increase.

In the electrochromic element according to an embodiment, the astigmatic powder increase means a difference between a second astigmatic powder after the 1000-hour standing test and a first astigmatic powder before the 1000-hour standing test.

The astigmatic powder increase may be less than about 0.5 D. The astigmatic powder increase may be less than about 0.45 D. The astigmatic powder increase may be less than 0.4D. The astigmatic powder increase may be less than about 0.35 D.

The spherical power and the astigmatic powder may be measured using a lens meter, etc. As the lens meter, model SLM-4000 may be used, and, as the lens meter, a product of Shin-Nippon Co. may be used.

Since the electrochromic element according to an embodiment has a spherical power and astigmatic powder in the above ranges, it may have improved optical performance. Accordingly, the electrochromic element according to an embodiment may be mounted on a window, etc., and may clearly implement an external landscape without distorting an image from the outside.

In addition, since the electrochromic element according to an embodiment has a spherical power increase and astigmatic powder in the above ranges, it may have improved optical durability. Accordingly, the electrochromic element according to an embodiment may provide a clear image for a long time.

The electrochromic element according to an embodiment may have a color change speed. The color change speed may be measured by Measurement Method below.

The electrochromic element according to an embodiment is cut into a size of about 7.5 cm × 7.5 cm to manufacture a sample for driving tests.

In the sample for driving tests, a first transparent electrode 300 and a second transparent electrode 400 are respectively assessed to a first bus bar and a second bus bar in a parallel direction. The first bus bar and the second bus bar may be disposed over the entire width of the sample for driving tests.

Next, a driving voltage of about 1.5 V is applied to the first bus bar and the second bus bar, and a driving time is measured until the transmittance of the sample is reduced by about 50%. Accordingly, the color change speed may be measured.

The color change speed may be about 0.5 %/s to about 3 %/s. The color change speed may be about 1 %/s to about 2.5 %/s. The color change speed may be about 1.5 %/s to about 2 %/s. The color change speed may be about 0.5 %/s to about 4 %/s.

The color change speed of the electrochromic element according to an embodiment may be decreased. The color change speed decrease means a difference between a second color change speed after the 1000-hour standing test and a first color change speed before the 1000-hour standing test. The color change speed decrease may be less than about 0.1 %/s. The color change speed decrease may be less than about 0.05 %/s. The color change speed decrease may be less than about 0.03 %/s.

Since the electrochromic element according to an embodiment has improved color change speed, may quickly control the amount of transmitted light, when mounted on a window, etc. In addition, since the electrochromic element according to an embodiment has low color change speed decrease, it may have improved driving stability.

The electrochromic element according to an embodiment includes a solvent having low permeability, and has a haze increase of less than 8% after the 1000-hour standing test.

Since the electrochromic element according to an embodiment includes a solvent having low permeability, the optical properties of a first substrate 100 and a second substrate 200 do not change even if left for a long time in a wounded state.

In particular, since the electrochromic element according to an embodiment includes the first substrate 100 and the second substrate 200, it may be flexible. Here, when the electrochromic element according to an embodiment is bent, the solvent having low permeability may be in direct contact with the first substrate 100 and/or the second substrate 200. Even if the solvent having low permeability is in direct contact with the first substrate 100 and/or the second substrate 200, the optical properties of the first substrate 100 and/or the second substrate 200 do not change.

Accordingly, the electrochromic element according to an embodiment may have improved optical durability even when left for a long time in a state where mechanical deformation is applied.

In addition, since the electrolyte layer 700 includes the curable resin composition, the solvent having low permeability and the metal salt, it may have the appropriate elasticity described above. Accordingly, the electrolyte layer 700 may be appropriately deformed when external physical impact is applied. In addition, since the electrolyte layer 700

has appropriate elasticity, it may be quickly restored from external physical impact such as twist, winding and pressing.

Accordingly, the electrochromic element according to an embodiment may minimize changes in appearance due to pressing and/or bending, etc. In addition, since the electrochromic element according to the embodiment has a fast restoration performance, it may have an improved appearance.

In addition, since the electrolyte supports the first substrate 100 and the second substrate 200 with appropriate elasticity, the electrochromic element according to an embodiment may have improved thickness uniformity.

In addition, the electrolyte layer 700 may be formed by a thermal crosslinking process and a photocuring process of the curable resin. Accordingly, the electrolyte layer 700 may have a high crosslinking density.

Accordingly, the electrolyte layer 700 may be strongly bonded to the first discoloration layer 500 and the second discoloration layer 600. Accordingly, the electrochromic element according to the embodiment may have improved peel strength.

In addition, since the electrolyte layer 700 has improved crosslinking density, the penetration of moisture and/or oxygen into the electrolyte layer 700 may be reduced. Accordingly, the electrochromic element according to an embodiment may suppress the whitening phenomenon, etc., and have improved durability.

In addition, since the electrolyte layer 700 has an improved crosslinking density, the electrochromic element according to an embodiment may prevent leakage of the electrolyte included in the electrolyte layer 700.

FIG. 23 illustrates a window device first according to an embodiment of the present disclosure.

Referring to FIG. 23, the window device first according to an embodiment includes the electrochromic element 10, a frame 20, windows 31, 32 and 33, a plug-in component 40 and a power supply 50.

The frame 20 may be composed of one or more pieces. For example, the frame 20 may be composed of one or more materials, e.g., vinyl, PVC, aluminum (Al), steel, or fiberglass. The frame 20 fixes the windows 31, 32 and 33 and seals the spaces between the windows 31, 32 and 33.

In addition, the frame 20 may hold or include foam or pieces made of other materials. The frame 20 includes a spacer, and the spacer may be disposed between adjacent windows 31, 32 and 33. In addition, the spacer may tightly seal the spaces between the windows 31, 32 and 33, together with an adhesive sealant.

The windows 31, 32 and 33 are fixed to the frame 20. The windows 31, 32 and 33 may be glass pane. The windows 31, 32 and 33 may be general silicon oxide (SOx)-based glass substrates such as soda lime glass or float glass composed of about 75% silica ($SiO_2$) plus $Na_2O$, CaO, and some minor additives. However, any material having appropriate optical, electrical, thermal, and mechanical properties may be used. The windows 31, 32 and 33 may also include, for example, other glass materials, plastics and thermoplastic resins (e.g., poly(methyl methacrylate), polystyrene, a polycarbonate, allyl diglycol carbonate, SAN (styrene acrylonitrile copolymer), poly(4-methyl-1-pentene), polyester, polyamide), or mirror materials. The windows 31, 32 and 33 may include tempered glass.

The windows 31, 32 and 33 may include a first window 31, a second window 32 and a third window 33. The first window 31 and the third window 33 may be disposed at the outermost side, and the second window 32 may be disposed between the first window 31 and the third window 33.

The electrochromic element 10 is disposed between the first window 31 and the second window 32. The electrochromic element 10 may be laminated to the first window 31 and the second window 32.

The electrochromic element 10 may be laminated to the first window 31 by a first polyvinyl butyral sheet. That is, the first polyvinyl butyral sheet may be disposed on the first window 31 and the electrochromic element 10, and may be laminated to the first window 31 and the electrochromic element 10.

The electrochromic element 10 may be laminated to the second window 32 by a second polyvinyl butyral sheet. That is, the second polyvinyl butyral sheet may be disposed on the second window 32 and the electrochromic element 10 and may be laminated to the second window 32 and the electrochromic element 10.

A space 60 may be formed between the second window 32 and the third window 33. The space may be filled with one or more gases, such as argon (Ar), krypton (Kr), or xenon (Xn).

The windows 31, 32 and 33 may have glass pane sizes for residential or commercial window applications. The size of a glass pane may vary widely depending on the specific needs of the home or commercial enterprise. In some embodiments, the windows 31, 32 and 33 may be formed of architectural glass. Architectural glass is typically used in commercial buildings, but can also be used in residential buildings. Normally, but not necessarily, the indoor environment is separated from the outdoor environment. In some embodiments, a suitable architectural glass substrate is at least about 20 inches by about 20 inches, and may be much larger, for example, about 80 inches by about 120 inches, or larger. Architectural glass is typically at least about 2 millimeters (mm) thick and may be as thick as 6 mm or more.

In embodiments, the windows 31, 32 and 33 have a thickness in a range of about 1 mm to about 10 mm.

In embodiments, the windows 31, 32 and 33 may be, for example, very thin and flexible Gorilla Glass® or WillowTM Glass which is commercially available from Corning, Inc. in New York. The thicknesses of these glasses may be less than 0.3 mm or less than about 1 mm.

The plug-in component 40 may include a first electrical input 41, a second electrical input 42, a third electrical input 43, a fourth electrical input 44 and a fifth electrical input 45.

In addition, the power supply 50 includes a first power terminal 51 and a second power terminal 52.

The first electrical input 41 is electrically connected to the first power terminal 51 through one or more wires or other electrical connections, components, or devices.

The first electrical input 41 may include a pin, a socket, or another electrical connector or conductor. In addition, the first electrical input 41 may be electrically connected to the electrochromic element 10 through a first bus bar (not shown). The first bus bar may be electrically connected to the second transparent electrode 400.

The second electrical input 42 is electrically connected to the second power terminal 52 through one or more wires or other electrical connections, components, or devices.

The second electrical input 42 may include a pin, a socket, or another electrical connector or conductor. In addition, the second electrical input 42 may be electrically connected to the electrochromic element 10 through a second bus bar (not shown). The second bus bar may be electrically connected to the first transparent electrode 300.

The third electrical input 43 may be coupled to a device, system, or building ground.

The fourth electrical input 44 and the fifth electrical input 45 may be individually used, for example, for communication between a controller or microcontroller for controlling the window device first and a network controller.

The power supply 50 supplies power to the electrochromic element 10 through the plug-in component 40. In addition, the power supply 50 may be controlled by the controller outside to supply power of a certain waveform to the electrochromic element 10.

In addition, the features, structures, effects, and the like described in the embodiments are included in at least one embodiment of the present disclosure, and are not necessarily limited to only one embodiment. Furthermore, the features, structures, effects and the like illustrated in the embodiments can be combined and modified by those skilled in the art to which the embodiments belong. Therefore, it should be understood that the combined and modified embodiments are included in the present disclosure.

Although the above description focuses on embodiments, these are only examples and do not limit the present invention, and those with ordinary knowledge in the field to which the present invention pertains will be able to recognize that various modifications and applications not illustrated above are possible without departing from the essential characteristics of the present invention. For example, each component specifically shown in the embodiments can be modified and implemented, and the differences related to such modifications and applications should be interpreted as being included in the scope of the present invention defined in the appended claims. Furthermore, the embodiments may be combined to form additional embodiments.

Fabrication examples

ITO film: Hansung Industrial Co., Ltd.,, HI150-ABE-125A-AB
Tungsten oxide powder : Adcro Co., Ltd., ELACO-W
Nickel oxide powder : Adcro Co., Ltd., ELACO-P
Gel polymer electrolyte composition #1

About 39 parts by weight of dipentaerythritol hexaacrylate (DPHA), about 80 parts by weight of an ionic liquid, 1-butyl-3-methylimidazolium bis(trifluoromethanesulfonyl)imide [BMI-TFSI], and about 1 part by weight of diethoxyacetophenone (DEAP) were mixed, and $LiBF_4$ ($Li^+$ concentration: 1 mol/L) was added thereto, thereby preparing a gel polymer electrolyte composition.

Photocurable resin composition

200 parts by weight of a composition containing 60 parts by weight of EB-1290 from SK CYTEC Co., 40 parts by weight of M340 (pantaerythritoltriacrylate) from Miwon Speciality Co., Ltd., 50 parts by weight of methylethylketone from Miwon Speciality Co., Ltd., 30 parts by weight from toluene, and 20 parts by weight from isopropyl alcohol was stirred using a high-speed stirrer, and then a UV absorbent (TinUVin 479) and a photoinitiator (Igacure 819) were mixed according to the composition shown in Table 1 below to prepare a photocurable resin composition.

Solvents : acetamide (AA), adiponitrile (AN), sulfolane (SF), polyethylene glycol (PEG, number average molecular weight: 400), propylene carbonate (PC)
Lithium salt : $LiClO_4$

Urethane acrylate

About 4 mol parts of toluene diisocyanate and about 6 mol parts of polyester polyol (Union Chemical Co., U-1220) having a weight average molecular weight of about 2000 mol/g were fed into a reactor, and about 500 ppm of a tin-based catalyst was added thereto, followed by stirring at about 85°C for about 1 hour. Next, 2 mol parts of (meth)acrylate having a hydroxyl group was added thereto, and stirred at about 85°C for about 1 hour, thereby preparing ether-based urethane acrylate. The weight average molecular weight of the ether-based urethane acrylate was about 12000 g/mol.

Epoxy acrylate

4 mol parts of glycerol diglycidyl ether (GDE) and 8 mol parts of 2-carboxyethyl acrylate (2-HEA) were fed into a reactor, and about 500 ppm of an amine-based catalyst was added thereto, followed by stirring at about 100°C for about 1 hour, thereby preparing glycerol epoxy acrylate.

Multifunctional acrylate #1 : Miramer M500(MIWON Co.)
Multifunctional acrylate #2 :Miramer M420(MIWON Co.)
Monofunctional acrylate #1 : Miramer M150(MIWON Co.)
Monofunctional acrylate #2 : Miramer M180(MIWON Co.)
Photoinitiator : Ethyl(2,4,6-trimethylbenzoyl)phenyl phosphinate
Antioxidant : SHIN SEUNG HICHEM Co., Ltd., Antioxidant-MD1024

Manufacturing Example 1

About 15 parts by weight of urethane acrylate, about 10 parts by weight of epoxy acrylate, about 5 parts by weight of multifunctional acrylate, about 5 parts by weight of monofunctional acrylate, about 1 part by weight of a photoinitiator, about 15 parts by weight of lithium salt, about 50 parts by weight of acetamide and about 1 part by weight of an antioxidant were added to manufacture an electrolyte composition.

Manufacturing Examples 2 to 4

The compositions of the electrolyte compositions were changed as shown in Table 1 below.

Table 1

| Classification | Urethane acrylate (parts by weight) | Monofunctional acrylate #1 (parts by weight) | Multifunctional acrylate #1 (parts by weight) | Epoxyacrylate (parts by weight) | Solvent (parts by weight) | Lithium salt (parts by weight) |
|---|---|---|---|---|---|---|
| Manufacturing Example 1 | 15 | 5 | 5 | 10 | AA, 50 | 15 |
| Manufacturing Example 2 | 10 | 5 | 5 | 15 | AN, 50 | 15 |
| Manufacturing Example 3 | 15 | 10 | 5 | 5 | SF, 50 | 15 |
| Manufacturing Example 4 | 13 | 5 | 7 | 10 | AA, 50 | 15 |

Manufacturing Example 5

About 10 parts by weight of urethane acrylate, about 15 parts by weight of epoxy acrylate, about 5 parts by weight of multifunctional acrylate, about 5 parts by weight of monofunctional acrylate, about 3 parts by weight of acrylate containing a carboxyl group, about 1 part by weight of a photoinitiator, about 15 parts by weight of a lithium salt, about 50 parts by weight of acetamide and about 1 part by weight of an antioxidant were added to manufacture an electrolyte composition.

Manufacturing Examples 6 to 9

The composition of the electrolyte composition was varied as shown in Table 2 below.

Table 2

| Classification | Urethane acrylate (parts by weight) | Epoxyacrylate (parts by weight) | Monofunctional acrylate #2 (parts by weight) | Multifunctional acrylate #2 (parts by weight) | Solvent (parts by weight) | Lithium salt (parts by weight) |
|---|---|---|---|---|---|---|
| Manufacturing Example 5 | 15 | 15 | 5 | 5 | AA, 52.9 | 15 |
| Manufacturing Example 6 | 10 | 15 | 10 | 5 | AN, 43.4 | 15 |
| Manufacturing Example 7 | 15 | 10 | 10 | 5 | SF, 57.6 | 15 |
| Manufacturing Example 8 | 15 | 10 | 5 | 10 | PEG, 51.4 | 15 |
| Manufacturing Example 9 | | | 20 | 20 | PC, 55 | 15 |

Example 1

In the first ITO film, the photocurable resin composition was coated to a thickness of about 5 $\mu$m on the opposite side surface of the surface where the ITO layer was placed. Next, the coated photocurable resin composition was dried at about 80°C for about 2 minutes, then cured with a light dose of about 500 mJ in a high-pressure mercury lamp under a nitrogen atmosphere for about 5 minutes, forming a UV-blocking layer.

Next, about 10 parts by weight of a tungsten oxide powder, about 1 part by weight of TEOS and about 90 parts by weight of ethanol were uniformly mixed to prepare a first discoloration material composition. The first discoloration material composition was coated to a thickness of about 25 $\mu$m on the first ITO film, and a sol-gel reaction was allowed to occur at about 110°C for about 5 minutes, thereby forming a first discoloration layer having a thickness of about 600 nm.

About 11 parts by weight of nickel oxide powder, about 1 part by weight of TEOS and about 89 parts by weight of ethanol were uniformly mixed to manufacture a second discoloration material composition. The second discoloration material composition was coated to a thickness of about 40 $\mu$m on the second ITO film, and a sol-gel reaction was allowed to occur at about 120°C for about 5 minutes, thereby manufacturing a second laminate including a second discoloration layer having a thickness of 1200 nm. Gel polymer electrolyte composition #1 was coated to a thickness of about 100 $\mu$m on the first discoloration layer, the second ITO film having the second discoloration layer formed thereon was laminated on the coated Gel polymer electrolyte composition #1, and the coated Gel polymer electrolyte composition #1 was cured by UV light. Next, the laminate was aged by leaving it at room temperature for about 14 hours. Accordingly, the electrochromic element according to an embodiment was fabricated.

Examples 2 to 4 and Comparative Example 1

As shown in Table 3 below, the UV absorbent and photoinitiator were applied to form the UV-blocking layer.

Table 3

| Classification | UV absorbent, Content (parts by weight) | Photoinitiator, Content (parts by weight) |
|---|---|---|
| Example 1 | TinUVin 479, 3 | 3 |
| Example 2 | TinUVin 479, 6 | 5 |
| Example 3 | TinUVin 400, 6 | 5 |
| Example 4 | TinUVin 400, 10 | 5 |
| Example 5 | TinUVin 1130, 10 | 3 |

(continued)

| Classification | UV absorbent, Content (parts by weight) | Photoinitiator, Content (parts by weight) |
|---|---|---|
| Comparative Example 1 | - | - |

Example 6

About 10 parts by weight of tungsten oxide powder, about 1 part by weight of TEOS and about 90 parts by weight of ethanol were uniformly mixed to manufacture a first discoloration material composition. The first discoloration material composition was coated to a thickness of about 40 μm on the first ITO film, and a sol-gel reaction was allowed to occur at about 110°C for about 5 minutes, thereby manufacturing a first discoloration layer. About 11 parts by weight of nickel oxide powder, about 1 part by weight of TEOS and about 89 parts by weight of ethanol were uniformly mixed to manufacture a second discoloration material composition. The second discoloration material composition was coated to a thickness of about 50 μm on the second ITO film, and a sol-gel reaction was allowed to occur at about 120°C for about 5 minutes, thereby manufacturing a second discoloration layer including a second discoloration layer. The electrolyte composition (Manufacturing Example 1) was coated to a thickness of about 100 μm on the first discoloration layer. The coated electrolyte composition (Manufacturing Example 1) was dried at about 120°C for about 10 minutes, thereby manufacturing a first laminate. Next, the first laminate and the second laminate were laminated, and the electrolyte composition was cured by UV light. Next, the laminate was aged by leaving it at room temperature for about 14 hours. Accordingly, the electrochromic element according to an embodiment was fabricated.

Examples 7 to 9

As shown in Table 4 below, the electrolyte compositions were used to form the electrolyte layers. The remaining process was referenced from Example 1.

Table 4

| Classification | Electrolyte composition |
|---|---|
| Example 6 | Manufacturing Example 1 |
| Example 7 | Manufacturing Example 2 |
| Example 8 | Manufacturing Example 3 |
| Example 9 | Manufacturing Example 4 |

Example 10

About 10 parts by weight of tungsten oxide powder, about 1 part by weight of TEOS and about 90 parts by weight of ethanol were uniformly mixed to manufacture a first discoloration material composition. The first discoloration material composition was coated to a thickness of about 40 μm on the first ITO film, and a sol-gel reaction was allowed to occur at about 110°C for about 5 minutes, thereby manufacturing a first discoloration layer. About 11 parts by weight of nickel oxide powder, about 1 part by weight of TEOS and about 89 parts by weight of ethanol were uniformly mixed to manufacture a second discoloration material composition. The second discoloration material composition was coated to a thickness of about 50 μm on the second ITO film, and a sol-gel reaction was allowed to occur at about 120°C for about 5 minutes, thereby manufacturing a second discoloration layer including a second discoloration layer. The electrolyte composition (Manufacturing Example 5) was coated to a thickness of about 100 μm on the first discoloration layer. Next, a protective polyethylene terephthalate film including a release layer was placed on the coated electrolyte composition layer. Next, the coated electrolyte composition was heat-treated at about 120°C for about 10 minutes, thereby manufacturing a first laminate.

Next, the first laminate and the second laminate were laminated, and the coated gel polymer electrolyte composition was cured by UV light. Next, the laminate was aged by leaving it at room temperature for about 14 hours. Accordingly, the electrochromic element according to an embodiment was fabricated.

Examples 10 to 13 and Comparative Example 2

As shown in Table 5 below, the electrolyte compositions were used to form the electrolyte layers. In addition, as shown in Table 2 above, the thermal crosslinking temperature and thermal crosslinking time were controlled. The

remaining process was referenced from Example 1.

Table 5

| Classification | Electrolyte composition | Heat treatment temperature (°C) | Heat treatment time (min) |
|---|---|---|---|
| Example 10 | Manufacturing Example 5 | 120 | 10 |
| Example 11 | Manufacturing Example 6 | 130 | 5 |
| Example 12 | Manufacturing Example 7 | 110 | 15 |
| Example 13 | Manufacturing Example 8 | 100 | 20 |
| Comparative Example 2 | Manufacturing Example 9 | 100 | 20 |

Evaluation examples

1. QUV test

The electrochromic element according to an embodiment was continuously irradiated with ultraviolet light from a UVA 340 UV lamp at an intensity of about 0.75 $W/m^2$ for about 1 hour. The ultraviolet light was incident inside through the ultraviolet blocking layer.

2. Total light transmittance

For the electrochromic elements of Examples and Fabrication Examples, a transmittance before irradiation with the UV and a transmittance after irradiation with the UV were measured as total light transmittances in a wavelength range of about 380 nm to about 780 nm using a solar spectrum meter (EDTM Co., SS2450).

3. Haze

For the electrochromic elements of Examples and Fabrication Examples, a haze before irradiation with the UV and a haze after irradiation with the UV were measured using CM-5 (Konica-Minolta).

4. Color value

For the electrochromic elements of Examples and Fabrication Examples, color values (L*, a* and b*) before irradiation with the UV and color values after irradiation with the UV were measured using a spectrophotometer (Konica-Minolta, CM-5).

5. Charging/discharging test

Each of the electrochromic elements fabricated in Examples and Comparative Example was placed in a solar simulator and exposed to UV. In this state, the (-) electrode of a charge/discharge tester (WonATech Co., WBCS_D70714K1) was connected to a bus bar attached to tungsten oxide, and the (+) electrode thereof was connected to a bus bar attached to nickel oxide. Next, when a predetermined voltage was applied and thus a sufficiently high state of discoloration transmittance was reached, each voltage was connected in reverse by the internal electrical deformation of the charge/discharge tester so that the (+) voltage was applied to the bus bar connected to tungsten oxide and the (-) voltage was applied to the bus bar connected to nickel oxide. A charging/discharging test was conducted by measuring a transmittance and a charge/discharge amount while continuously repeating the cycle of reaching a sufficiently low coloration transmittance as one cycle, and the number of times the discoloration range did not decrease after a certain cycle operation and the charge/discharge amount was maintained at 80% or more was measured.

6. Winding Test

1) The electrochromic element was cut to a size of 4 m in length and 0.5 m in width.
One end of the electrochromic element was fixed to the first core having a diameter of 15 cm.
2) The fixed electrochromic element was wound on the first core at a speed of 6 turns per minute while maintaining a

tension of 10 N.

3) In the state of being wound on the first core, the electrochromic element was left for 24 hours under conditions of a temperature of 85°C and a relative humidity of about 50%.

4) The other end of the electrochromic element that had been left was fixed to a second core having a diameter of 15 cm.

5) The electrochromic element wound around the first core was wound around the second core at a speed of 6 rotations per minute in the opposite direction to the direction in which it was wound around the first core while being unwound in a state where a tension of 10 N is maintained.

6) In the state of being wound on the second core, the electrochromic element was left for 24 hours under the conditions of a temperature of 85°C and a relative humidity of about 50%, and the winding test was completed.

7) In the electrochromic element that had undergone the winding test, a central region with a length of 3 m and a width of 0.4 m was defined.

8) The central region was cut into measurement regions of 10 cm × 10 cm, so that multiple samples were obtained.

7. Transmittance and haze

The transmittance of each of the samples was measured as total light transmittances using a solar spectrum meter (EDTM Co., SS2450).

The haze of each of the samples was measured using a solar spectrum meter (EDTM Co., SS2450).

8. Coloring transmittance deviation

In the samples that had undergone the winding test, the first bus bar and the second bus bar were respectively mounted on the first transparent electrode and the second transparent electrode. Next, a driving voltage of about 1.5 V was applied to the first bus bar and the second bus bar for about 1 minute, and the samples were colored.

The transmittances of the colored samples were measured, and for each sample, the maximum coloring transmittance, the minimum coloring transmittance, the average coloring transmittance were derived, and the coloring transmittance deviation was obtained.

9. Discoloring transmittance deviation

A reverse driving voltage of about 1.5 V was applied to the colored samples for about 1 minute, and the samples were discolored. The transmittances of the discolored samples were measured, and for each sample, a maximum discoloring transmittance, a minimum discoloring transmittance and an average discoloring transmittance were derived, and the discoloring transmittance deviation was obtained.

10. Haze deviation

The haze of each sample that had undergone the winding test was measured. For each sample, a maximum haze, a minimum haze and an average haze were derived, and the haze deviation was obtained.

11. Driving range deviation

For each sample, a driving range was derived from the coloring transmittance and the discoloring transmittance, and a driving range deviation was calculated.

12. Standing test for 1000 hours

1) The electrochromic element was cut to a size of 4 m in length and 0.5 m in width.

2) One end of the electrochromic element was fixed to the first core having a diameter of 20 cm.

3) The fixed electrochromic element was wound on the first core at a speed of 6 turns per minute while maintaining a tension of 10 N.

4) In the state of being wound on the first core, the electrochromic element was left for 500 hours under conditions of a temperature of 85°C and a relative humidity of about 30%.

5) The other end of the electrochromic element that had been left was fixed to a second core having a diameter of 20 cm.

6) The electrochromic element wound around the first core was wound around the second core at a speed of 6 rotations per minute in the opposite direction to the direction in which it was wound around the first core while being unwound in a state where a tension of 10 N is maintained.
7) In the state of being wound on the second core, the electrochromic element was left for 500 hours under the conditions of a temperature of 85°C and a relative humidity of about 30%, and the 1000-hour standing test was completed.

13. Transmittance and haze

In the electrochromic elements manufactured in Examples, an initial transmittance and a transmittance after the 1000-hour standing test is measured as a total light transmittance using a solar spectrum meter (EDTM Co., SS2450)
In the electrochromic elements manufactured in Examples, an initial haze and a haze after the 1000-hour standing test are measured using a solar spectrum meter (EDTM Co., SS2450).

14. Color change speed

Each of the electrochromic elements manufactured in Examples and Comparative Examples was cut to a size of about 7.5 cm × 7.5 cm, and both edge portion thereof was peeled off to open the first transparent electrode and the second transparent electrode. Next, the first bus bar and the second bus bar were connected to the exposed first transparent electrode and the exposed second transparent electrode, respectively. Through the first bus bar and the second bus bar, a driving voltage of about 1.5 V was applied, and the time until the light transmittance was reduced by about 50% in the electrochromic elements of Examples and Comparative Example was measured, thereby measuring a color change speed.

15. Sphericity and astigmatic powder

In the electrochromic elements according to Examples and Comparative Example, the spherical power and the astigmatic powder were measured using a digital lens meter (model: SLM-4000, manufacturer: Shin-Nippon).
As shown in Table 6 below, the first light transmittance, second light transmittance, first haze and second haze of each of the electrochromic elements according to Examples and Comparative Example were measured.

Table 6

| Classification | First light transmittance (%) | Second light transmittance (%) | First haze (%) | Second haze (%) |
|---|---|---|---|---|
| Example 1 | 65 | 57 | 2.35 | 4.01 |
| Example 2 | 67 | 59 | 2.44 | 1.83 |
| Example 3 | 69 | 63 | 1.56 | 2.82 |
| Example 4 | 65 | 60 | 1.89 | 3.35 |
| Example 5 | 68 | 63 | 1.08 | 4.2 |
| Comparative Example 1 | 69 | 51 | 1.98 | 6.95 |

As shown in Table 7 below, the color values and charge/discharge cycles in the electrochromic elements according to Examples and Comparative Example were measured.

Table 7

| Classification | First L* | Second L* | First a* | Second a* | First b* | Second b* | Charge/discharge cycles |
|---|---|---|---|---|---|---|---|
| Example 1 | 90.54 | 89.9 | 0.54 | -4.3 | 2.1 | -3.5 | 8000 |
| Example 2 | 91.5 | 90.2 | 0.35 | -2.8 | 2.25 | 0.89 | 11000 |
| Example 3 | 84.6 | 80.8 | -1.81 | -5.2 | 1.80 | -3.4 | 20000 |
| Example 4 | 87.13 | 79.9 | -1.80 | -5.63 | 1.7 | -2.2 | 15000 |
| Example 5 | 91.34 | 90.5 | -1.85 | -1.5 | 1.9 | 0.16 | 20000 |

(continued)

| Classification | First L* | Second L* | First a* | Second a* | First b* | Second b* | Charge/discharge cycles |
|---|---|---|---|---|---|---|---|
| Comparative Example | 93.33 | 84.19 | 0.67 | -6.7 | 1.6 | -4.41 | 3000 |

As shown in Tables 6 and 7, the electrochromic elements according to Examples had high light resistance to external ultraviolet light.

As shown in Table 8 below, a coloring transmittance deviation, a discoloring transmittance deviation, a haze deviation and a driving range deviation were derived from the electrochromic elements according to Examples.

Table 8

| Classification | Coloring transmittance a deviation | Discoloring transmittance deviation | Haze deviation | Driving range deviation |
|---|---|---|---|---|
| Example 6 | 0.133 | 0.083 | 0.05 | 0.11 |
| Example 7 | 0.193 | 0.067 | 0.063 | 0.13 |
| Example 8 | 0.166 | 0.05 | 0.12 | 0.07 |
| Example 9 | 0.12 | 0.053 | 0.11 | 0.09 |

As shown in Table 8, it can be seen that the electrochromic elements according to Examples have a low haze deviation, a low coloring transmittance deviation, a low discoloring transmittance deviation and a low driving range deviation.

As shown in Table 9 below, a haze increase, a transmittance decrease, a color change speed and a color change speed after a standing test for 1000 hours were derived from the electrochromic elements according to Examples and Comparative Example.

Table 9

| Classification | Haze increase (%) | Transmittance decrease (%) | Color change speed ( %/s, initial) | Color change speed ( %/s, standing test) |
|---|---|---|---|---|
| Example 10 | 6.9 | 1 | 1.78 | 1.52 |
| Example 11 | 2.2 | 0.5 | 1.85 | 1.52 |
| Example 12 | 6.6 | 2 | 1.78 | 1.52 |
| Example 13 | 1.6 | 1 | 1.25 | 1.19 |
| Comparative Example 2 | 8.6 | 5 | 2 | 1.31 |

As shown in Table 10 below, a spherical power, an astigmatic powder, a spherical power after a standing test for 1000 hours and an astigmatic powder after a standing test for 1000 hours were derived from the electrochromic elements according to Examples and Comparative Example.

Table 10

| Classification | Sphericity (D, initial) | Sphericity (D, standing test) | Astigmatic degree (D, initial) | Astigmatic degree (D, standing test) |
|---|---|---|---|---|
| Example 10 | 0.01 | 0.08 | 0.7 | 0.35 |
| Example 11 | 0.01 | 0.02 | 0.1 | 0.21 |
| Example 12 | 0.01 | 0.08 | 0.08 | 0.44 |
| Example 13 | 0.02 | 0.03 | 0.1 | 0.08 |
| Comparative Example 2 | 0.01 | 0.12 | 0.07 | 0.51 |

As shown in Table 10, the electrochromic elements according to Examples have appropriate optical characteristics and color change characteristics.

## Claims

1. An electrochromic element comprising:

    a first substrate;
    a second substrate disposed on the first substrate; and
    an electrochromic part disposed between the first substrate and the second substrate,
    wherein a change in light transmittance is less than 0.25, and
    wherein measuring the change in light transmittance includes:

        irradiating the electrochromic part with ultraviolet light from a UVA 340 UV lamp at an intensity of 7.5 $W/m^2$ for 1 hour through the first substrate,
        measuring a first light transmittance of the electrochromic element before the irradiation with the ultraviolet light,
        measuring a second light transmittance of the electrochromic element after the irradiation with the ultraviolet light, and
        obtaining the change in light transmittance by dividing a difference between the first light transmittance and the second light transmittance by the first light transmittance.

2. The electrochromic element according to claim 1, wherein a haze change is less than 5.5% , wherein measuring the haze change includes:

    measuring a first haze of the electrochromic element before the ultraviolet irradiation is measured,
    measuring a second haze of the electrochromic element after the ultraviolet irradiation is measured, and
    obtaining the haze change by subtracting the first haze from the second haze.

3. The electrochromic element according to claim 2,

    wherein a change in L* is less than 9,
    wherein measuring the change in L* includes:

        measuring a first L* of the electrochromic element before the ultraviolet irradiation,
        measuring a second L* of the electrochromic element after the ultraviolet irradiation, and
        obtaining the change in L* as an absolute value of a difference between the second L* and the first L*.

4. The electrochromic element according to claim 3,

    wherein a change in a* is less than 5,
    wherein the change in a* includes:

        measuring a first a* of the electrochromic element before the ultraviolet irradiation,
        measuring a second a* of the electrochromic element after the ultraviolet irradiation, and obtaining the change in a* as an absolute value of a difference between the second a* and the first a*.

5. The electrochromic element according to claim 4,

    wherein a change in b* is less than 10,
    wherein measuring the change in b* includes
    measuring a first b* of the electrochromic element before the ultraviolet irradiation,
    measuring a second b* of the electrochromic element after the ultraviolet irradiation, and obtaining the change in b* as an absolute value of a difference between the second b* and the first b*.

6. The electrochromic element according to claim 1, comprising a UV-blocking layer provided on the first substrate, wherein the UV-blocking layer has a transmittance of 10% or less for ultraviolet light of 340 nm.

7. The electrochromic element according to claim 6, wherein the UV-blocking layer comprises at least one UV absorbent selected from the group consisting of benzophenone-based UV absorbents, benzoxazinone-based UV absorbents, benzotriazole-based UV absorbents and triazine-based UV absorbents.

**8.** The electrochromic element according to claim 2, wherein the first light transmittance is 50% to 85%, and the first haze is 0.1% to 5%.

**9.** The electrochromic element according to claim 5, wherein the first L* is 80 to 100, the first a* is -2 to 1.5, and the first b* is 0.5 to 4.

**10.** The electrochromic element according to claim 6, wherein the UV-blocking layer is disposed between the first substrate and the electrochromic part.

**11.** A window device comprising:

a frame;
a window mounted on the frame; and
an electrochromic element disposed in the window,
wherein the electrochromic element comprises:

a first substrate;
a second substrate disposed on the first substrate; and
an electrochromic part disposed between the first substrate and the second substrate,
wherein a change in light transmittance is less than 0.25, and
wherein measuring the change in light transmittance includes:

irradiating the electrochromic part with ultraviolet light from a UVA 340 UV lamp at an intensity of 7.5 $W/m^2$ for 1 hour through the first substrate,
measuring a first light transmittance of the electrochromic element before the irradiation with the ultraviolet light,
measuring a second light transmittance of the electrochromic element after the irradiation with the ultraviolet light, and
obtaining the change in light transmittance by dividing a difference between the first light transmittance and the second light transmittance by the first light transmittance.

Fig. 1

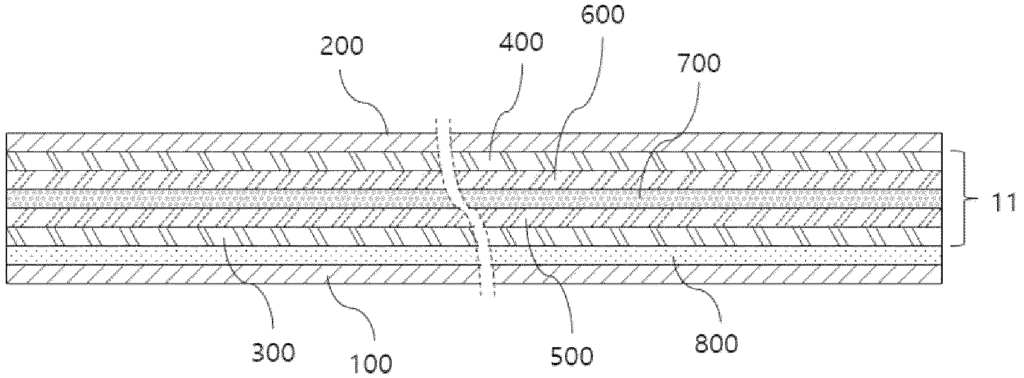


Fig. 2

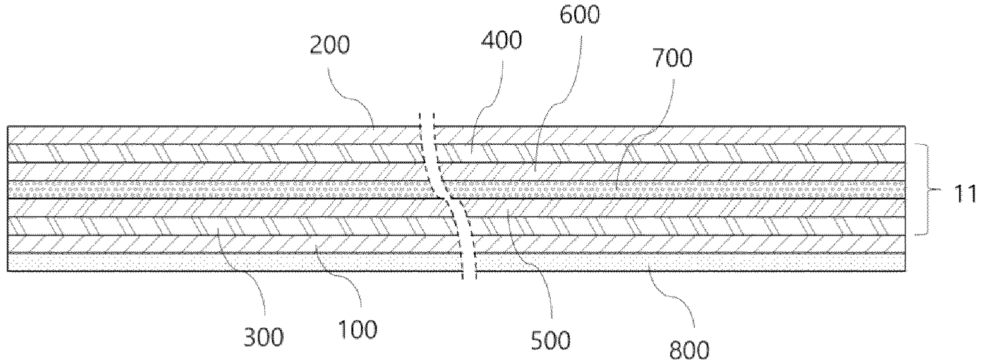


Fig. 3

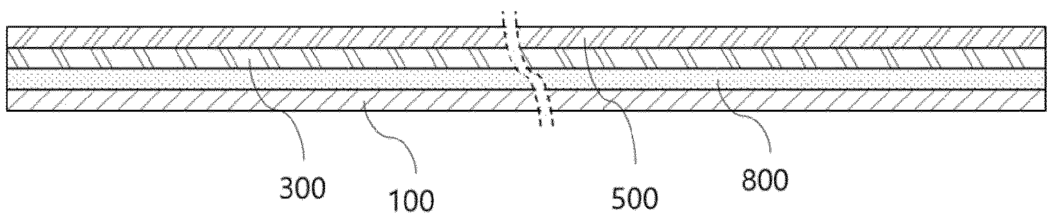

Fig. 4

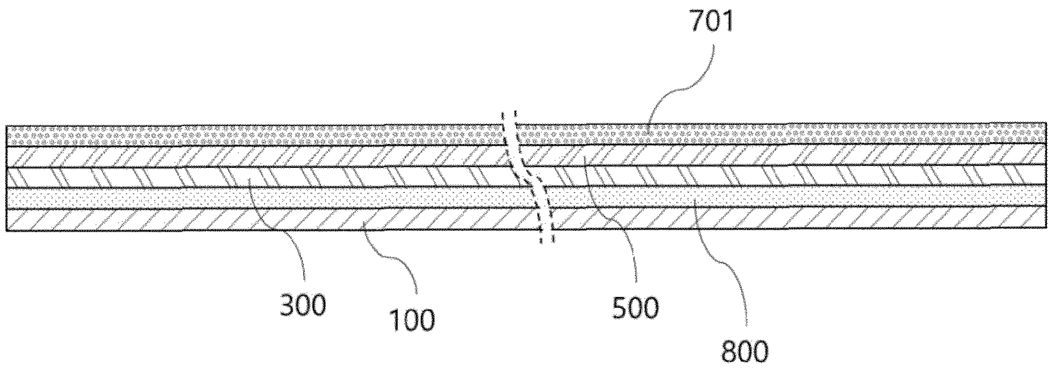


Fig. 5

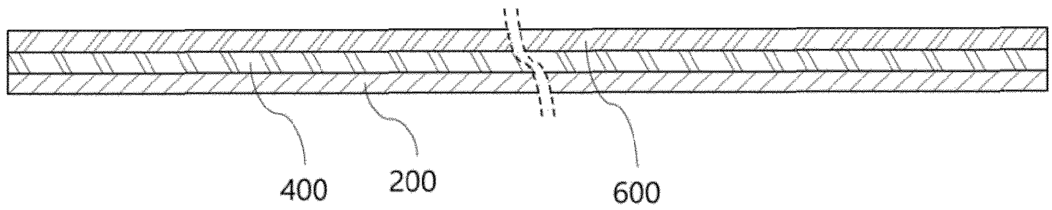


Fig. 6

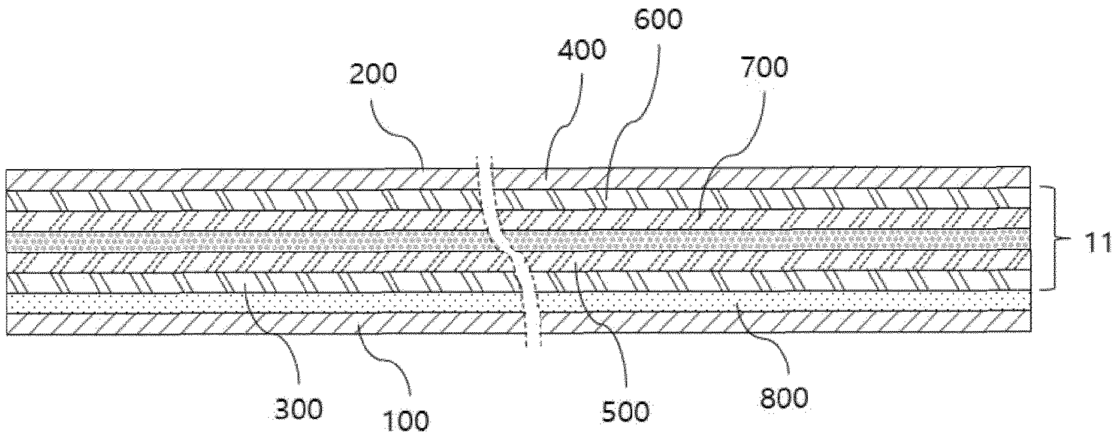

Fig. 7

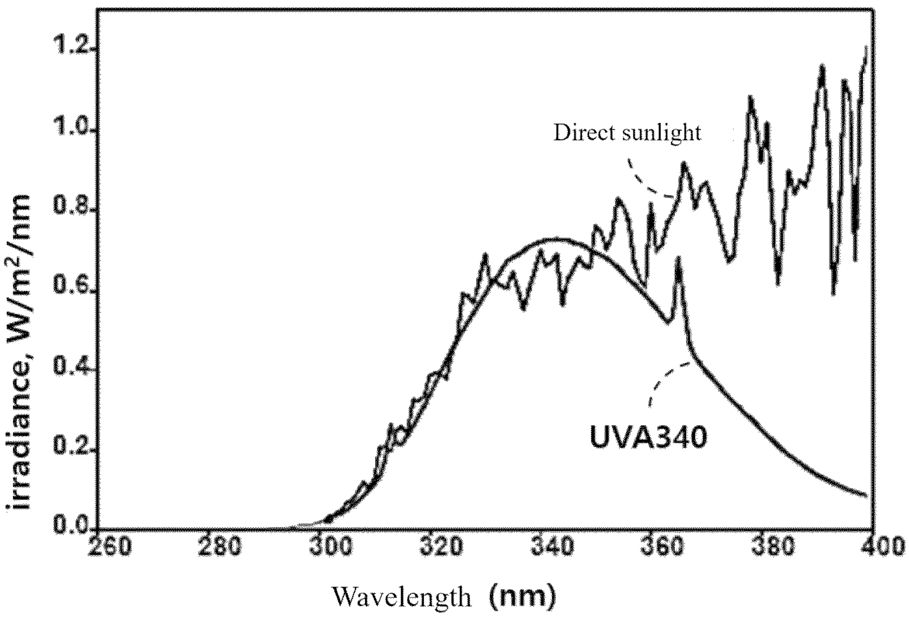


Fig. 8

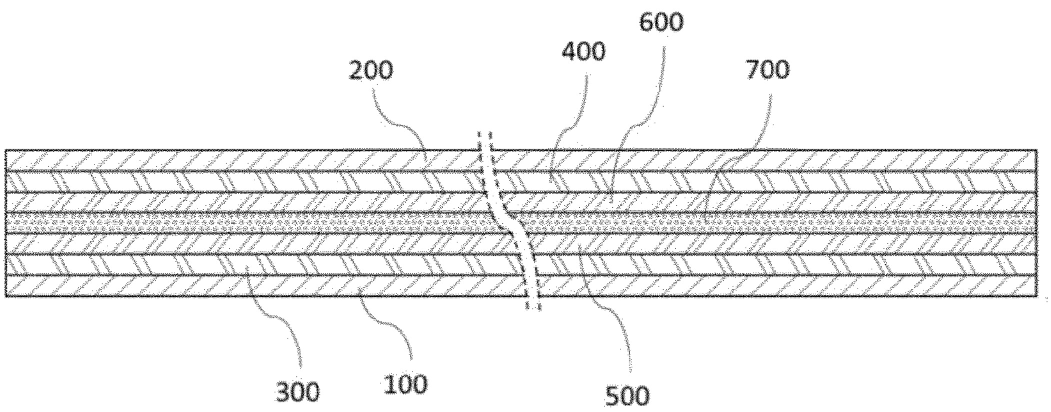


Fig. 9

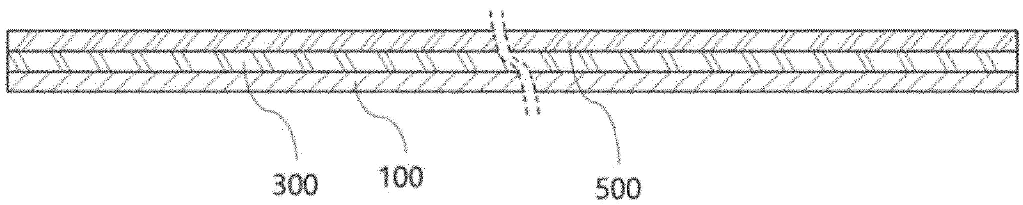

Fig. 10

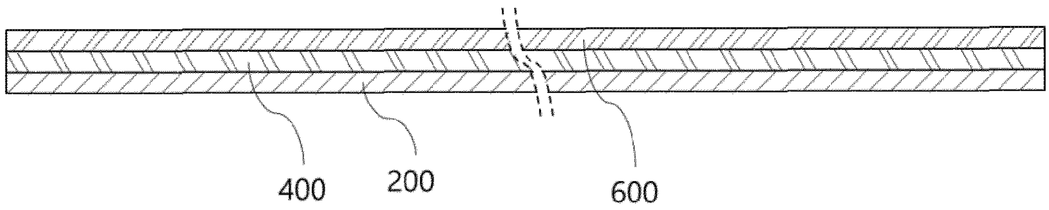


Fig. 11

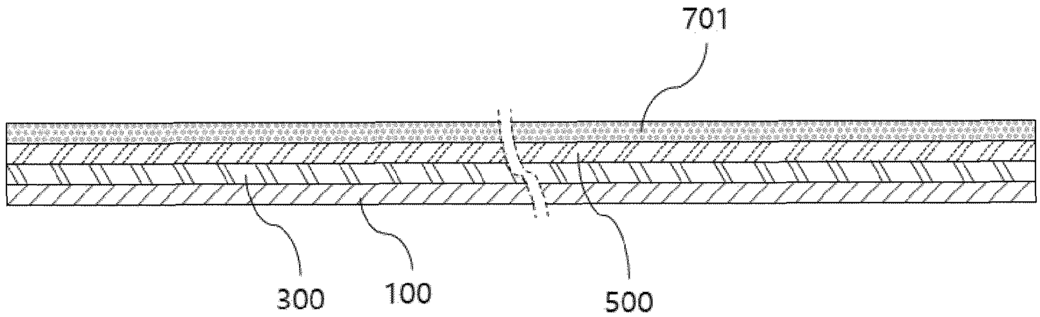


Fig. 12

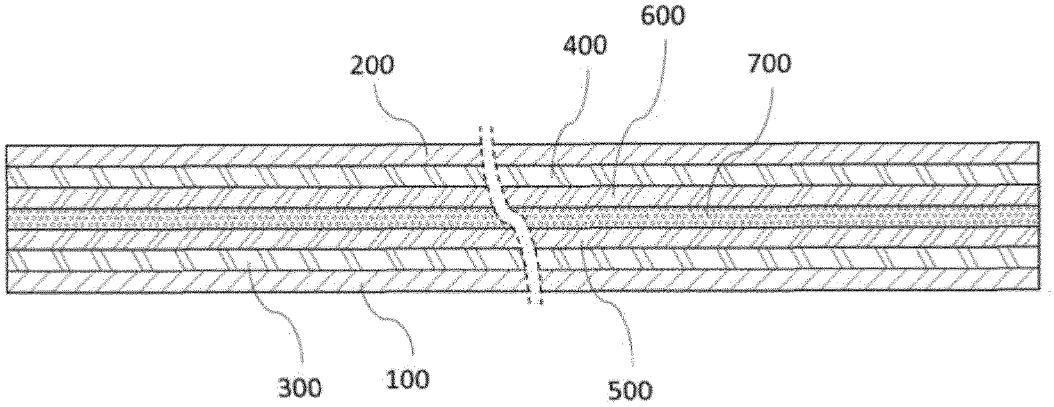

Fig. 13

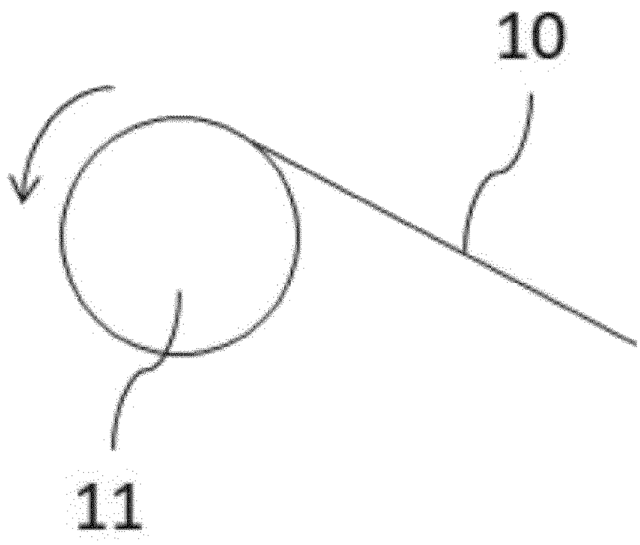


Fig. 14

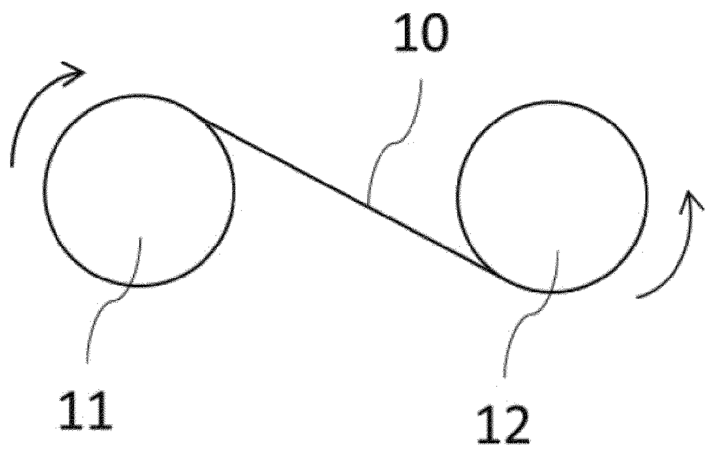

Fig. 15

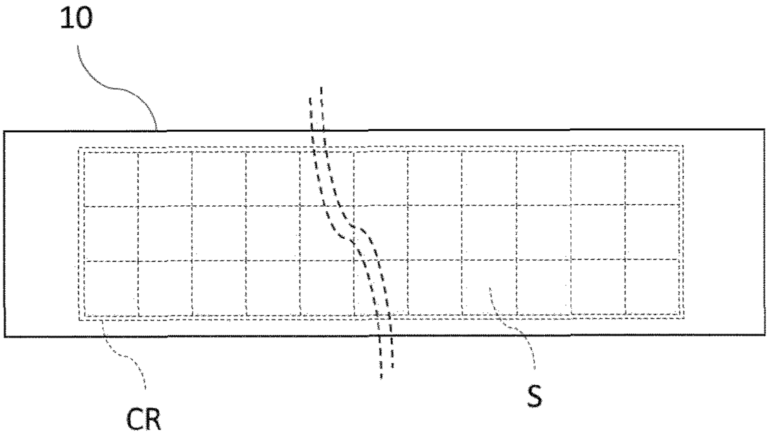


Fig. 16

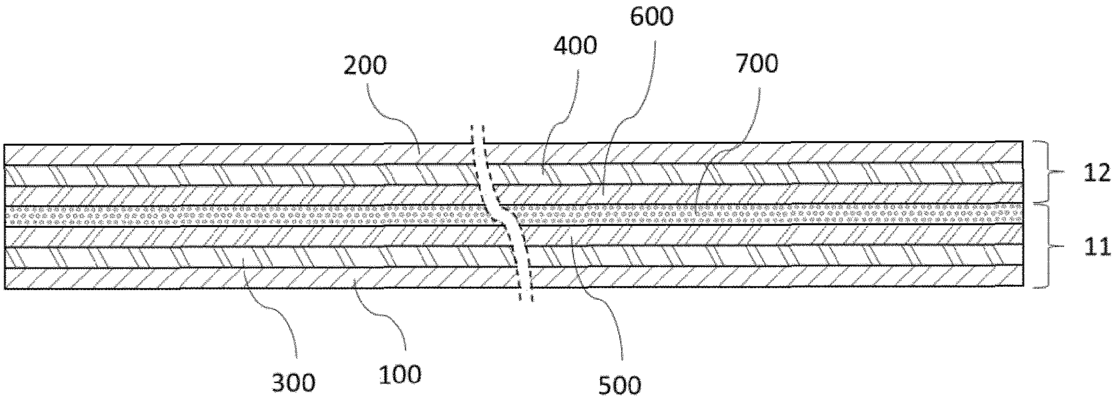


Fig. 17

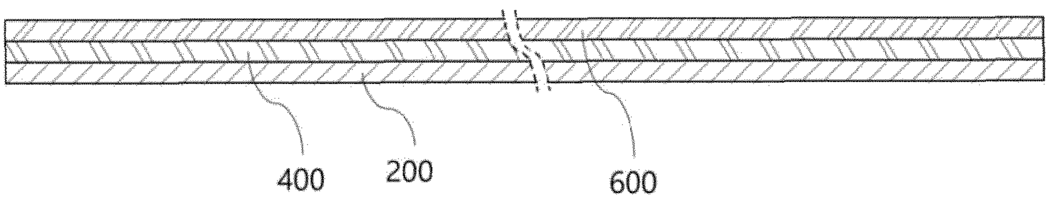

Fig. 18

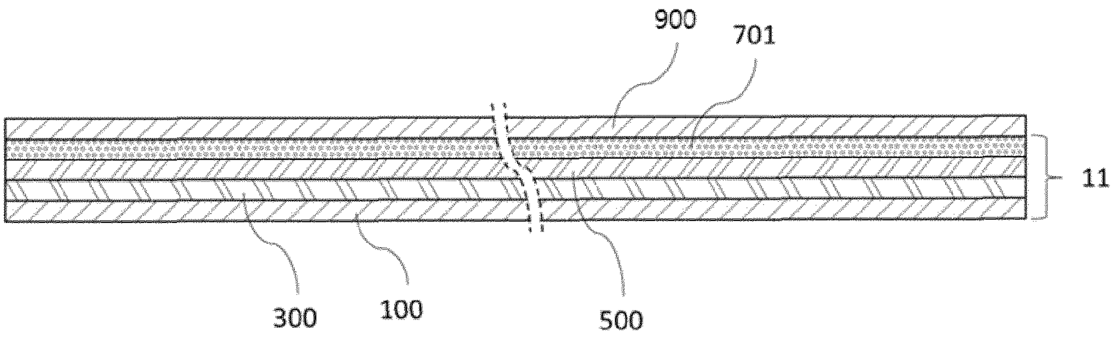


Fig. 19

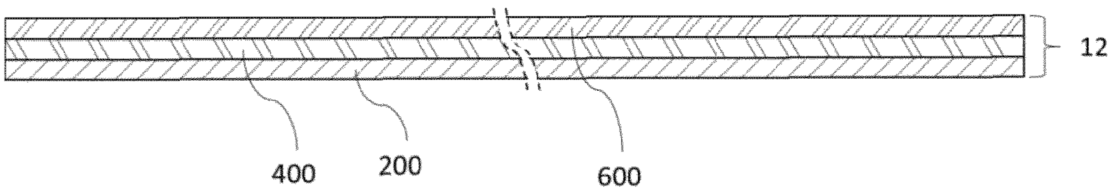


Fig. 20

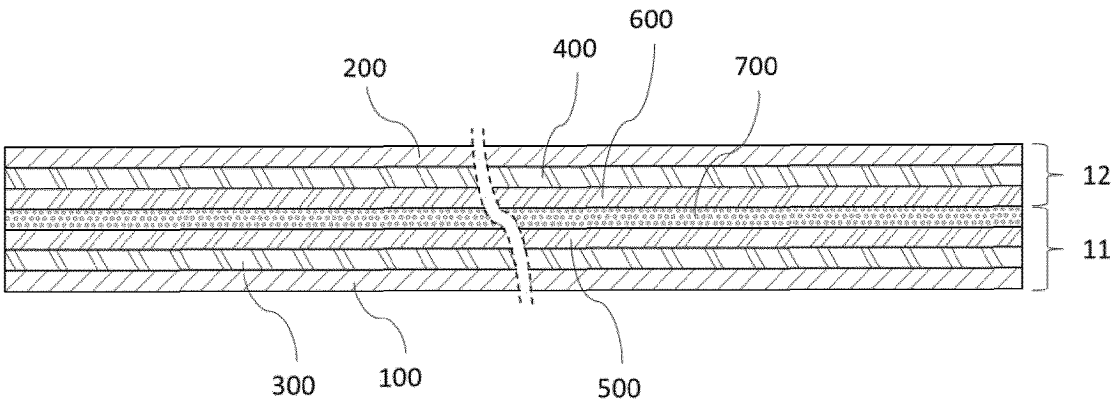

Fig. 21

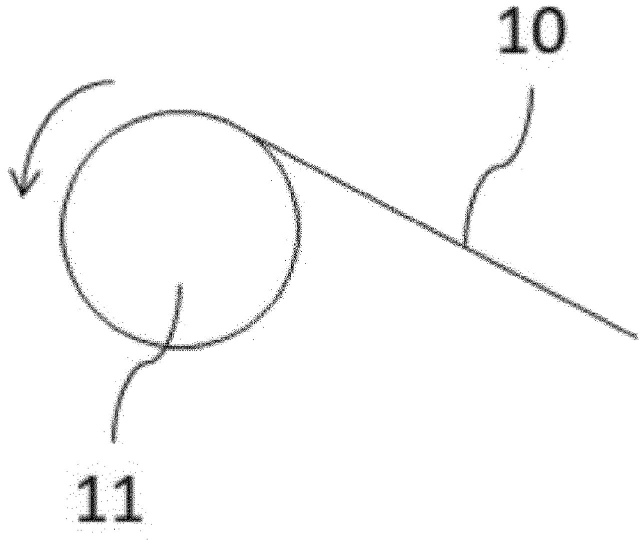


Fig. 22

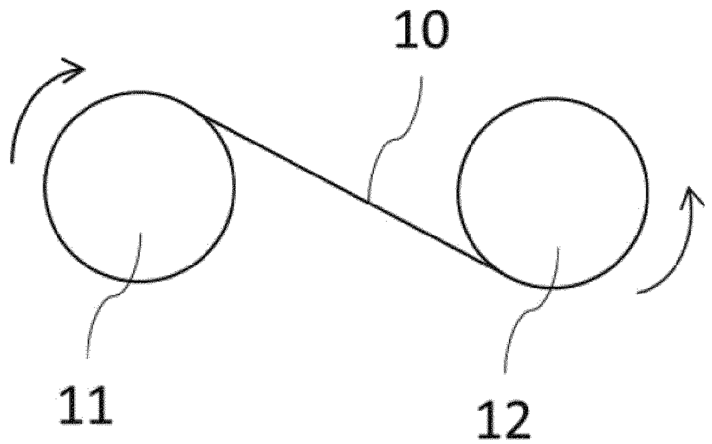

Fig. 23

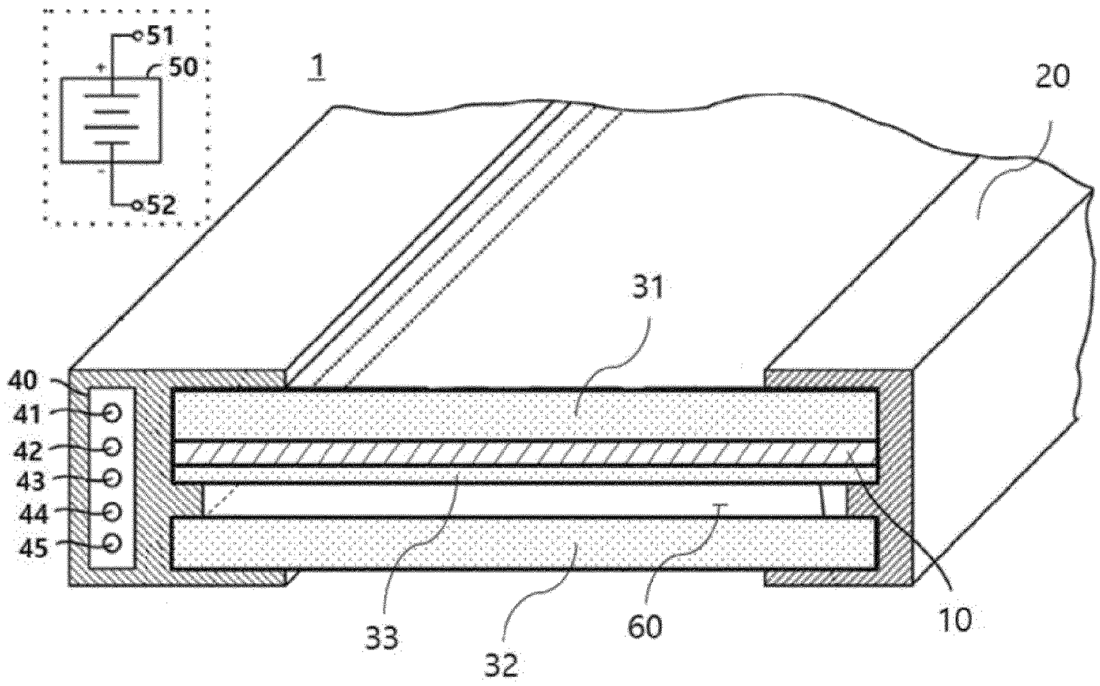

## INTERNATIONAL SEARCH REPORT

International application No.
**PCT/KR2023/011180**

### A. CLASSIFICATION OF SUBJECT MATTER

**G02F 1/153**(2006.01)i; **G02F 1/155**(2006.01)i; **B32B 7/023**(2019.01)i; **E06B 9/24**(2006.01)i; **B60J 3/00**(2006.01)i; **B60J 3/04**(2006.01)i; **G02F 1/15**(2006.01)i

According to International Patent Classification (IPC) or to both national classification and IPC

### B. FIELDS SEARCHED

Minimum documentation searched (classification system followed by classification symbols)

G02F 1/153(2006.01); B32B 7/023(2019.01); G02B 5/00(2006.01); G02B 5/22(2006.01); G02F 1/15(2006.01); G02F 1/161(2006.01); G09F 9/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기변색(electrochromic), 투과율(transmissivity), 자외선(ultraviolet), 차단(block), 표색(color specification), 윈도우(window), 헤이즈(haze)

### C. DOCUMENTS CONSIDERED TO BE RELEVANT

| Category* | Citation of document, with indication, where appropriate, of the relevant passages | Relevant to claim No. |
|---|---|---|
| Y<br>A | KR 10-2019-0043833 A (LG INNOTEK CO., LTD.) 29 April 2019 (2019-04-29)<br>See paragraphs [0020], [0034]-[0035], [0088], [0164] and [0167]; and figures 2, 19 and 20. | 1,6-7,10-11<br>2-5,8-9 |
| Y | JP 2022-110825 A (TOPPAN PRINTING CO., LTD. et al.) 29 July 2022 (2022-07-29)<br>See paragraph [0089]. | 1,6-7,10-11 |
| A | KR 10-2020-0135767 A (SEKISUI CHEMICAL CO., LTD.) 03 December 2020 (2020-12-03)<br>See paragraphs [0008]-[0065]. | 1-11 |
| A | KR 10-2022-0039042 A (KUKYOUNG G&M CO., LTD.) 29 March 2022 (2022-03-29)<br>See paragraphs [0055]-[0095]; and figures 1-2. | 1-11 |
| A | JP 2013-057733 A (ASAHI GLASS CO., LTD.) 28 March 2013 (2013-03-28)<br>See claims 1-3. | 1-11 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 November 2023** | **13 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/011180**

| Patent document cited in search report | Publication date (day/month/year) | Patent family member(s) | Publication date (day/month/year) |
|---|---|---|---|
| KR 10-2019-0043833 A | 29 April 2019 | KR 10-2476116 B1 | 09 December 2022 |
| JP 2022-110825 A | 29 July 2022 | CN 116710814 A | 05 September 2023 |
| | | JP 7186249 B2 | 08 December 2022 |
| | | TW 202239601 A | 16 October 2022 |
| | | WO 2022-158045 A1 | 28 July 2022 |
| KR 10-2020-0135767 A | 03 December 2020 | CN 111868578 A | 30 October 2020 |
| | | EP 3783400 A1 | 24 February 2021 |
| | | EP 3783400 A4 | 24 November 2021 |
| | | JP 2021-189010 A1 | 12 February 2021 |
| | | TW 201942636 A | 01 November 2019 |
| | | US 2021-0025226 A1 | 28 January 2021 |
| | | WO 2019-189010 A1 | 03 October 2019 |
| KR 10-2022-0039042 A | 29 March 2022 | KR 10-2414514 B1 | 30 June 2022 |
| JP 2013-057733 A | 28 March 2013 | None | |

Form PCT/ISA/210 (patent family annex) (July 2022)